(19) Europäisches Patentamt
European Patent Office
Office européen des brevets

(11) EP 3 292 182 B1

(12) EUROPÄISCHE PATENTSCHRIFT

(45) Veröffentlichungstag und Bekanntmachung des Hinweises auf die Patenterteilung:
**27.02.2019 Patentblatt 2019/09**

(21) Anmeldenummer: **16716166.0**

(22) Anmeldetag: **13.04.2016**

(51) Int Cl.:
***C09K 19/52*** $^{(2006.01)}$
***C09K 19/40*** $^{(2006.01)}$
***C09K 19/60*** $^{(2006.01)}$
***G02F 1/1347*** $^{(2006.01)}$
***C09K 19/34*** $^{(2006.01)}$

(86) Internationale Anmeldenummer:
**PCT/EP2016/000609**

(87) Internationale Veröffentlichungsnummer:
**WO 2016/177449 (10.11.2016 Gazette 2016/45)**

(54) **THIADIAZOLOCHINOXALINDERIVATE**

THIADIAZOLOQUINOXALINE DERIVATIVES

DÉRIVÉS DE THIADIAZOLOQUINOXALINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.05.2015 DE 102015005800**

(43) Veröffentlichungstag der Anmeldung:
**14.03.2018 Patentblatt 2018/11**

(73) Patentinhaber: **Merck Patent GmbH**
**64293 Darmstadt (DE)**

(72) Erfinder:
- **KIRSCH, Peer**
**64342 Seeheim-Jugenheim (DE)**
- **RUHL, Andreas**
**64380 Rossdorf (DE)**
- **BECK, Susann**
**64283 Darmstadt (DE)**
- **JUNGE, Michael**
**64319 Pfungstadt (DE)**
- **PATWAL, Ursula**
**64354 Reinheim (DE)**
- **FISCHER, Mila**
**64367 Muehltal (DE)**

(56) Entgegenhaltungen:
**WO-A1-2014/180525**
**WO-A1-2014/187529**
**WO-A1-2015/055274**
**WO-A2-2013/005177**
**CN-A- 103 936 967**

- **LEE Y ET AL: "Synthesis and photovoltaic properties of low-bandgap alternating copolymers consisting of 3-hexylthiophene and [1,2,5]thiadiazolo[3,4-g]quinoxaline derivatives", ORGANIC ELECTRONICS, ELSEVIER, AMSTERDAM, NL, Bd. 11, Nr. 5, 1. Mai 2010 (2010-05-01), Seiten 846-853, XP026999935, ISSN: 1566-1199 [gefunden am 2010-02-04]**
- **VELLAIAPPILLAI TAMILAVAN ET AL: "Thiadiazoloquinoxaline-Based Narrow Energy Gap Molecules for Small Molecule Solar Cell Applications", BULLETIN OF THE KOREAN CHEMICAL SOCIETY, Bd. 34, Nr. 2, 20. Februar 2013 (2013-02-20), Seiten 661-664, XP055281977, KR ISSN: 0253-2964, DOI: 10.5012/bkcs.2013.34.2.661**
- **ELIF KOSE UNVER ET AL: "Synthesis of new donor-acceptor polymers containing thiadiazoloquinoxaline and pyrazinoquinoxaline moieties: low-band gap, high optical contrast, and almost black colored materials", TETRAHEDRON LETTERS, Bd. 52, Nr. 21, 1. Mai 2011 (2011-05-01), Seiten 2725-2729, XP055283402, GB ISSN: 0040-4039, DOI: 10.1016/j.tetlet.2011.03.078**
- **STEFAN ELLINGER ET AL: "Donor-Acceptor-Donor-based [pi]-Conjugated Oligomers for Nonlinear Optics and Near-IR Emission", CHEMISTRY OF MATERIALS, Bd. 23, Nr. 17, 13. September 2011 (2011-09-13), Seiten 3805-3817, XP055283410, US ISSN: 0897-4756, DOI: 10.1021/cm201424a**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 292 182 B1

## Beschreibung

Die vorliegende Erfindung betrifft Thiadiazolochinoxalinderivate, Verfahren und Zwischenprodukte zu deren Herstellung, deren Verwendung für optische, elektrooptische und elektronische Zwecke, insbesondere in Flüssigkristall-(FK-)Medien und in Vorrichtungen zur Regulierung des Energie-Durchtritts von einem Außenraum in einen Innenraum, sowie diese FK-Medien und die diese Medien enthaltende Vorrichtungen.

Flüssigkristalle werden vor allem als Dielektrika in Anzeigevorrichtungen verwendet, da die optischen Eigenschaften solcher Substanzen durch eine angelegte Spannung beeinflußt werden können. Elektrooptische Vorrichtungen auf der Basis von Flüssigkristallen sind dem Fachmann bestens bekannt und können auf verschiedenen Effekten beruhen. Derartige Vorrichtungen sind beispielsweise Zellen mit dynamischer Streuung, DAP-Zellen (Deformation aufgerichteter Phasen), TN-Zellen mit verdrillt nematischer ("twisted nematic") Struktur, STN-Zellen ("supertwisted nematic"), SBE-Zellen ("superbirefringence effect"), OMI-Zellen ("optical mode interference") und Gast-Wirt- (engl.: guest-host) Zellen.

Die letztgenannten Vorrichtungen basierend auf dem Guest-Host-Effekt wurden erstmals von Heilmeier und Zanoni beschrieben (G. H. Heilmeier et al., Appl. Phys. Lett.,1968, 13, 91f) und fanden seither breite Anwendung, vornehmlich in FK-Anzeigeelementen. In einem Guest-Host-System enthält das FK-Medium neben dem Flüssigkristall einen oder mehrere dichroitische Farbstoffe. Aufgrund der Richtungsabhängigkeit der Absorption der Farbstoffmoleküle läßt sich die Lichtdurchlässigkeit des Flüssigkristalls modulieren, wenn die Farbstoffe zusammen mit dem Flüssigkristall ihre Ausrichtung ändern.

Neben der Anwendung in FK-Anzeigen sind solche Vorrichtungen als Schaltelemente zur Regulierung des Licht- oder Energiedurchtritts z.B. aus WO 2009/141295, WO 2014/187529 und WO 2010/118422 bekannt; unter einer Vorrichtung zur Regulierung des Energie-Durchtritts wird vorliegend allgemein eine Vorrichtung verstanden, welche den Durchtritt von Energie durch eine Fläche reguliert, die innerhalb einer relativ gesehen weniger energiedurchlässigen Struktur angeordnet ist. Beispielsweise kann die relativ höher energiedurchlässige Fläche eine Glasfläche oder eine offene Fläche sein und die weniger energiedurchlässige Struktur, welche die höher energiedurchlässige Fläche enthält, kann eine Wand sein. Bevorzugt wird durch die Vorrichtung der Durchtritt von Energie aus Sonneneinstrahlung, entweder direkt oder indirekt, reguliert.

Der regulierte Energiedurchtritt erfolgt von einem Außenraum, bevorzugt der unmittelbar der Sonneneinstrahlung ausgesetzten Umwelt, in einen Innenraum, beispielsweise ein Gebäude oder ein Fahrzeug, oder eine andere von der Umgebung weitgehend abgeschlossene Einheit.

Unter dem Begriff Energie wird im Rahmen der vorliegenden Erfindung insbesondere Energie durch elektromagnetische Strahlung im UV-A-, VIS-, sowie NIR-Bereich verstanden. Insbesondere wird darunter Energie durch Strahlung verstanden, welche von den üblicherweise in Fenstern verwendeten Materialien (z. B. Glas) nicht oder nur in einem vernachlässigbaren Umfang absorbiert wird. Gemäß den üblicherweise verwendeten Definitionen wird unter dem UV-A-Bereich eine Wellenlänge von 320 bis 380 nm verstanden, unter dem VIS-Bereich eine Wellenlänge von 380 nm bis 780 nm verstanden und unter dem NIR-Bereich eine Wellenlänge von 780 nm bis 2000 nm verstanden. Entsprechend wird unter dem Begriff Licht allgemein elektromagnetische Strahlung mit Wellenlängen zwischen 320 und 2000 nm verstanden.

Unter einem dichroitischen Farbstoff wird im Rahmen der vorliegenden Erfindung eine lichtabsorbierende Verbindung verstanden, bei der die Absorptionseigenschaften von der Ausrichtung der Verbindung zur Polarisationsrichtung des Lichts abhängig sind. Typischerweise weist eine dichroitische Farbstoffverbindung gemäß der vorliegenden Erfindung eine langgestreckte Form auf, d.h. die Verbindung ist in einer Raumrichtung deutlich länger (Längsachse) als in den anderen beiden Raumrichtungen.

Auf dem Gebiet der Vorrichtungen zur Regulierung des Energie-Durchtritts von einem Außenraum in einen Innenraum sind in den vergangenen Jahren mehrere unterschiedliche technische Lösungen vorgeschlagen worden.

Eine vorteilhafte Lösung ist die Verwendung von Schaltschichten enthaltend ein flüssigkristallines Medium in Kombination mit einem oder mehreren dichroitischen Farbstoffen. Durch Anlegen einer Spannung kann bei diesen Schaltschichten eine Veränderung der räumlichen Ausrichtung der Moleküle der dichroitischen Verbindung erzielt werden, welche aufgrund ihrer richtungsabhängigen Absorption eine Änderung der Transmission der Schaltschicht bewirkt. Eine entsprechende Vorrichtung ist beispielsweise in WO 2009/141295 beschrieben.

Alternativ kann eine solche Transmissionsänderung auch ohne elektrische Spannung durch einen Temperatur-induzierten Übergang von einem isotropen Zustand des flüssigkristallinen Mediums zu einem flüssigkristallinen Zustand erzielt werden, wie beispielsweise in US 2010/0259698 beschrieben.

Aus dem Stand der Technik sind Flüssigkristallmedien für Anzeigeelemente vom Guest-Host-Typ bekannt, die Cyanobiphenylderivate und einen oder mehrere dichroitische Farbstoffe enthalten (WO 2009/141295 und WO 2010/118422). Für dieselbe Anwendung sind in US 6033598 und US 5762824 FK-Medien beschrieben, die neben einem der mehreren dichroitischen Farbstoffen eine oder mehrere Verbindungen bestehend aus jeweils drei Ringelementen enthalten, die mit einem oder mehreren Fluoratomen substituiert sind.

Weiterhin ist es bekannt, Vorrichtungen enthaltend eine Schaltschicht enthaltend ein flüssigkristallines Medium mit mindestens einem dichroitischen Farbstoff so zu gestalten, daß die von dem Farbstoff absorbierte Energie teilweise als Fluoreszenzstrahlung wieder emittiert wird, die ihrerseits auf eine Solarzelle geleitet wird, welche sie in elektrische Energie umwandelt (WO 2009/141295).

Weiterhin sind bereits allgemein Thiadiazolochinoxalinderivate für verschiedene Verwendungen bekannt, beispielsweise in J. Mater.Chem. C, 2014, 2, 5133-5141 zur Verwendung als Bestandteil in Polymeren für organische Halbleiter, in Chem. Mater. 2012, 24, 2178-2185 zur Verwendung als OLED-Materialien. In Bull. Korean Chem. Soc. 2013, 34(2), 661-664 ist die folgende Verbindung als Elektronendonor in der aktiven Schicht von organischen Solarzellen beschrieben:

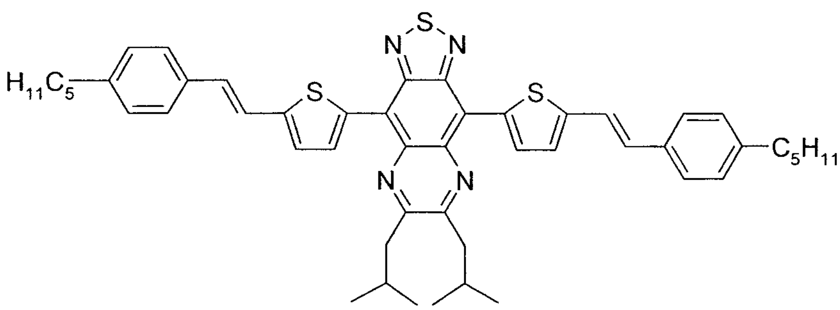

Zur Verwendung in den oben genannten Vorrichtungen sind Rylen-Farbstoffe beschrieben worden, beispielsweise in WO 2009/141295, WO 2013/004677 und WO2014/090373. Rylen-Farbstoffe weisen allerdings allgemein einige Nachteile auf, insbesondere sind sie in FK-Medien oft schwer löslich, führen zu geringer Tieftemperaturstabilität der Flüssigkristallmischung und zeigen oft geringe Farbreinheit, was besonders eine Anwendung in Fenstern erschwert, wo es aus architektonischen Gründen auf den ästhetischen Eindruck ankommt und möglichst reine Farben gewünscht sind.

Der Erfindung liegt die Aufgabe zugrunde, neue dichroitische Farbstoffe bereitzustellen, die die oben genannte Nachteile nicht oder nur in geringem Maße zeigen und darüber hinaus mindestens eine, bevorzugt mehrere der folgenden gewünschten Eigenschaften aufweisen: gute Löslichkeit der Farbstoffe im flüssigkristallinen Medium, gute Licht- und Temperaturstabilität und hohe Anisotropie der Absorption, d.h. ein hohes Vermögen des Farbstoffs zur Ausrichtung mit dem Flüssigkristall. Zudem sollten die Farbstoffe eine starke Lichtabsorption im VIS- und/oder NIR-Bereich des Lichts aufweisen. Weiterhin lag der Erfindung die Aufgabe zugrunde Verbindungen bereitzustellen, die nicht nur eine günstige Kombination der anwendungstechnischen Parameter aufweisen, sondern sich zusätzlich noch durch besonders hohe Farbreinheit auszeichnen. Überraschend wurde gefunden, daß eine oder mehrere der oben genannten Anforderungen erfüllt werden durch FK-Medien enthaltend Verbindungen der Formel I, wie in Anspruch 1 und nachfolgend definiert.

Gegenstand der vorliegenden Erfindung sind somit FK-Medien enthaltend eine Farbstoffkomponente A) enthaltend eine oder mehrere Verbindungen der Formel I wie nachfolgend definiert, und eine flüssigkristalline Komponente B), enthaltend eine oder mehrere mesogene Verbindungen,

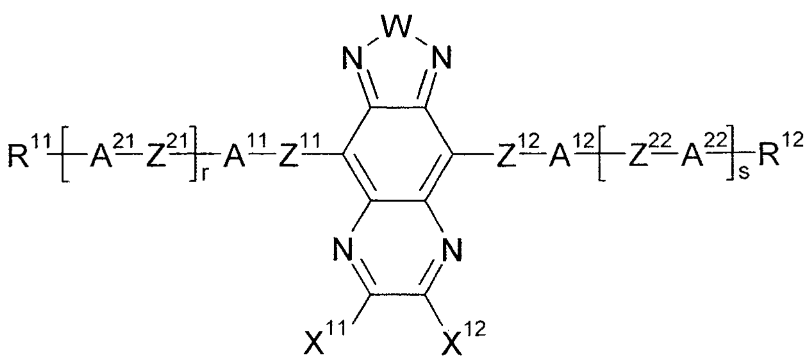

I

worin

| | |
|---|---|
| W | S oder Se, |
| $X^{11}$, $X^{12}$ | gleich oder verschieden H, Alkyl mit 1-6 C-Atomen, worin ein oder mehrere H-Atome durch F ersetzt sein können und ein oder mehrere $CH_2$-Gruppen durch -O- oder -S- so ersetzt sein können, daß keine O- oder |

S-Atome benachbart sind, Perfluoralkyl mit 1-6 C-Atomen, Halogen, CN, $SF_5$, eine Aryl- oder Heteroarylgruppe, die mit einem oder mehreren Resten L substituiert sein kann, und alternativ auch die Gruppen $X^{11}$ und $X^{12}$ gemeinsam eine geradkettige oder verzweigte Alkylengruppe mit 2 bis 10 C-Atomen, in der ein, mehrere oder sämtliche H-Atome durch F ersetzt sein können,

$R^{11}$, $R^{12}$ gleich oder verschieden F, geradkettiges oder verzweigtes Alkyl mit 1 bis 25 C-Atomen, worin auch eine oder mehrere nicht benachbarte $CH_2$-Gruppen jeweils unabhängig voneinander durch $-C(R^z)=C(R^z)-$, -C≡C-, $-N(R^z)-$, -O-, -S-, -CO-, -CO-O-, -O-CO-, -O-CO-O- so ersetzt sein können, daß O- und/oder S-Atome nicht direkt miteinander verknüpft sind, und worin auch ein oder mehrere H-Atome durch F, Cl, Br, I, oder CN ersetzt sein können,

$R^z$ bei jedem Auftreten gleich oder verschieden H, Halogen, geradkettiges, verzweigtes oder cyclisches Alkyl mit 1 bis 25 C-Atomen, worin auch eine oder mehrere nicht benachbarte $CH_2$-Gruppen durch -O-, -S-, -CO-, -CO-O-, -O-CO-, -O-CO-O- so ersetzt sein können, daß O- und/oder S-Atome nicht direkt miteinander verknüpft sind, und worin auch ein oder mehrere H-Atome durch F oder Cl ersetzt sein können,

$A^{11}$, $A^{12}$ jeweils unabhängig voneinander eine Aryl- oder Heteroarylgruppe, die mit einem oder mehreren Resten L substituiert sein kann;

$A^{21}$, $A^{22}$ jeweils unabhängig voneinander definiert sind wie $A^{11}$ oder eine cyclische Alkylgruppe mit 3 bis 10 C-Atomen, in der 1 bis 4 $CH_2$-Gruppen durch O so ersetzt sein können, daß keine zwei O-Atome benachbart sind,

L bei jedem Auftreten gleich oder verschieden OH, $CH_2OH$, F, Cl, Br, I, -CN, $-NO_2$ , $SF_5$, -NCO, -NCS, -OCN, -SCN, $-C(=O)N(R^z)_2$, $-C(=O)Y^1$, $-C(=O)R^z$, $-N(R^z)_2$, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy oder Alkoxycarbonyloxy mit 1 bis 25 C-Atomen, worin auch ein oder mehrere H-Atome durch F oder Cl ersetzt sein können,

$Z^{11}$, $Z^{12}$ bei jedem Auftreten gleich oder verschieden eine Einfachbindung, $-CR^{x1}=CR^{x2}-$, -C≡C- oder -C(O)-,

$Z^{21}$, $Z^{22}$ bei jedem Auftreten gleich oder verschieden definiert sind wie $Z^{11}$ oder -O-, -S-, $-CR^{y1}R^{y2}-$, $-CF_2O-$, $-OCF_2-$, -C(O)-O-, -O-C(O)-, -O-C(O)-O-, $-OCH_2-$, $-CH_2O-$, $-SCH_2-$, $-CH_2S-$, $-CF_2S-$, $-SCF_2-$,$-(CH_2)_{n1}-$, $-CF_2CH_2-$, $-CH_2CF_2-$, $-(CF_2)_{n1}-$, -CH=CH-COO,-OCO-CH=CH-,

$R^{x1}$, $R^{x2}$ unabhängig voneinander H, F, Cl, CN, Alkyl mit 1-12 C-Atomen;

$R^{y1}$, $R^{y2}$ jeweils unabhängig voneinander H oder Alkyl mit 1-12 C-Atomen;

r, s unabhängig voneinander 0, 1, 2 oder 3;

n1 1, 2, 3 oder 4

bedeuten, mit der Maßgabe, daß die Verbindung der Formel

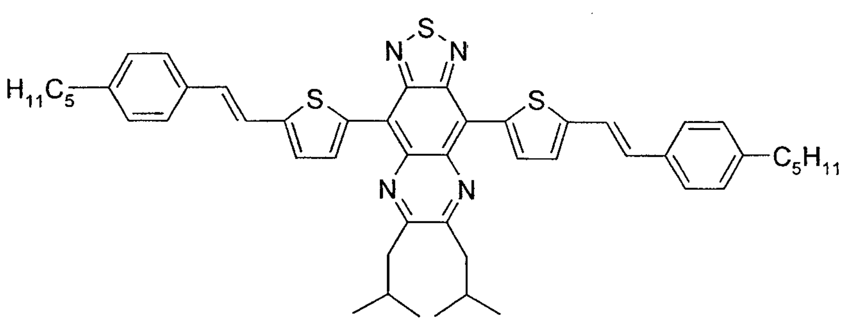

ausgeschlossen ist.

Weiterer Gegenstand der Erfindung ist die Verwendung von FK-Medien wie vor- und nachstehend beschrieben für optische, elektrooptische und elektronische Zwecke, insbesondere in Vorrichtungen zur Regulierung des Energie-Durchtritts von einem Außenraum in einen Innenraum.
Weiterer Gegenstand der Erfindung ist ein FK-Medium enthaltend

- eine Farbstoffkomponente A), enthaltend einen oder mehrere Verbindungen der Formel I sowie optional weitere dichroitische Farbstoffe,
- eine flüssigkristalline Komponente B), im Folgenden auch als "FK-Hostmischung" bezeichnet, enthaltend eine oder mehrere, vorzugsweise zwei oder mehr mesogene Verbindungen.

Bevorzugt sind FK-Medien, worin Komponente B) eine FK-Verbindung oder eine FK-Mischung ist, die eine nematische Flüssigkristallphase aufweist.

Weiterer Gegenstand der Erfindung sind Verfahren zur Herstellung der FK-Medien enthaltend Verbindungen der Formel I.

Weiterer Gegenstand der Erfindung sind Vorrichtungen zur Regulierung des Energie-Durchtritts von einem Außenraum in einen Innenraum.

Vor- und nachstehend gelten folgende Bedeutungen:
Der Begriff "organische Gruppe" bedeutet eine Kohlenstoff- oder Kohlenwasserstoffgruppe.

Der Begriff "Kohlenstoffgruppe" bedeutet eine ein- oder mehrbindige organische Gruppe enthaltend mindestens ein Kohlenstoffatom, wobei diese entweder keine weiteren Atome enthält (wie z.B. -C≡C-), oder gegebenenfalls ein oder mehrere weitere Atome wie beispielsweise N, O, S, P, Si, Se, As, Te oder Ge enthält (z.B. Carbonyl etc.). Der Begriff "Kohlenwasserstoffgruppe" bedeutet eine Kohlenstoffgruppe, die zusätzlich ein oder mehrere H-Atome und gegebenenfalls ein oder mehrere Heteroatome wie beispielsweise N, O, S, P, Si, Se, As, Te oder Ge enthält.

"Halogen" bedeutet F, Cl, Br oder I.

Eine Kohlenstoff- oder Kohlenwasserstoffgruppe kann eine gesättigte oder ungesättigte Gruppe sein. Ungesättigte Gruppen sind beispielsweise Aryl-, Alkenyl- oder Alkinylgruppen. Ein Kohlenstoff- oder Kohlenwasserstoffrest mit 3 oder mehr C-Atomen kann geradkettig, verzweigt und/oder cyclisch sein, und kann auch Spiroverknüpfungen oder kondensierte Ringe aufweisen.

Die Begriffe "Alkyl", "Aryl", "Heteroaryl" etc. umfassen auch mehrbindige Gruppen, beispielsweise Alkylen, Arylen, Heteroarylen etc.

Der Begriff "Aryl" bedeutet eine aromatische Kohlenstoffgruppe oder eine davon abgeleitete Gruppe. Der Begriff "Heteroaryl" bedeutet "Aryl" gemäß vorstehender Definition, enthaltend ein oder mehrere Heteroatome.

Bevorzugte Kohlenstoff- und Kohlenwasserstoffgruppen sind gegebenenfalls substituiertes Alkyl, Alkenyl, Alkinyl, Alkoxy, Alkylcarbonyl, Alkoxycarbonyl, Alkylcarbonyloxy und Alkoxycarbonyloxy mit 1 bis 40, vorzugsweise 1 bis 25, besonders bevorzugt 1 bis 18 C-Atomen, gegebenenfalls substituiertes Aryl oder Aryloxy mit 6 bis 40, vorzugsweise 6 bis 25 C-Atomen, oder gegebenenfalls substituiertes Alkylaryl, Arylalkyl, Alkylaryloxy, Arylalkyloxy, Arylcarbonyl, Aryloxycarbonyl, Arylcarbonyloxy und Aryloxycarbonyloxy mit 6 bis 40, vorzugsweise 6 bis 25 C-Atomen.

Weitere bevorzugte Kohlenstoff- und Kohlenwasserstoffgruppen sind $C_1$-$C_{40}$ Alkyl, $C_2$-$C_{40}$ Alkenyl, $C_2$-$C_{40}$ Alkinyl, $C_3$-$C_{40}$ Allyl, $C_4$-$C_{40}$ Alkyldienyl, $C_4$-$C_{40}$ Polyenyl, $C_6$-$C_{40}$ Aryl, $C_6$-$C_{40}$ Alkylaryl, $C_6$-$C_{40}$ Arylalkyl, $C_6$-$C_{40}$ Alkylaryloxy, $C_6$-$C_{40}$ Arylalkyloxy, $C_2$-$C_{40}$ Heteroaryl, $C_4$-$C_{40}$ Cycloalkyl, $C_4$-$C_{40}$ Cycloalkenyl, etc. Besonders bevorzugt sind $C_1$-$C_{22}$ Alkyl, $C_2$-$C_{22}$ Alkenyl, $C_2$-$C_{22}$ Alkinyl, $C_3$-$C_{22}$ Allyl, $C_4$-$C_{22}$ Alkyldienyl, $C_6$-$C_{12}$ Aryl, $C_6$-$C_{20}$ Arylalkyl und $C_2$-$C_{20}$ Heteroaryl.

Weitere bevorzugte Kohlenstoff- und Kohlenwasserstoffgruppen sind geradkettige, verzweigte oder cyclische Alkylreste mit 1 bis 40, vorzugsweise 1 bis 25 C-Atomen, welche unsubstituiert oder durch F, Cl, Br, I oder CN ein- oder mehrfach substituiert sind, und worin ein mehrere nicht benachbarte $CH_2$-Gruppen jeweils unabhängig voneinander durch-$C(R^z)=C(R^z)$-, -C≡C-, -$N(R^z)$-, -O-, -S-, -CO-, -CO-O-, -O-CO-, -O-CO-O- so ersetzt sein können, daß O- und/oder S-Atome nicht direkt miteinander verknüpft sind.

$R^z$ bedeutet vorzugsweise H, Halogen, eine geradkettige, verzweigte oder cyclische Alkylkette mit 1 bis 25 C-Atomen, in der auch ein oder mehrere nicht benachbarte C-Atome durch -O-, -S-, -CO-, -CO-O-, -O-CO- oder -O-CO-O- ersetzt sein können, wobei auch ein oder mehrere H-Atome durch Fluor ersetzt sein können, eine optional substituierte Aryl- oder Aryloxygruppe mit 6 bis 40 C-Atomen, oder eine optional substituierte Heteroaryl- oder Heteroaryloxygruppe mit 2 bis 40 C-Atomen.

Bevorzugte Alkylgruppen sind beispielsweise Methyl, Ethyl, n-Propyl, Isopropyl, n-Butyl, Isobutyl, s-Butyl, t-Butyl, 2-Methylbutyl, n-Pentyl, s-Pentyl, Cyclopentyl, n-Hexyl, Cyclohexyl, 2-Ethylhexyl, n-Heptyl, Cycloheptyl, n-Octyl, Cyclooctyl, n-Nonyl, n-Decyl, n-Undecyl, n-Dodecyl, Dodecanyl, Trifluoromethyl, Perfluoro-n-butyl, 2,2,2-Trifluoroethyl, Perfluorooctyl und Perfluorohexyl.

Bevorzugte Alkenylgruppen sind beispielsweise Ethenyl, Propenyl, Butenyl, Pentenyl, Cyclopentenyl, Hexenyl, Cyclohexenyl, Heptenyl, Cycloheptenyl, Octenyl und Cyclooctenyl.

Bevorzugte Alkinylgruppen sind beispielsweise Ethinyl, Propinyl, Butinyl, Pentinyl, Hexinyl und Octinyl.

Bevorzugte Alkoxygruppen sind beispielsweise Methoxy, Ethoxy, 2-Methoxyethoxy, n-Propoxy, i-Propoxy, n-Butoxy, i-Butoxy, s-Butoxy, t-Butoxy, 2-Methylbutoxy, n-Pentoxy, n-Hexoxy, n-Heptoxy, n-Octoxy, n-Nonoxy, n-Decoxy, n-Undecoxy und n-Dodecoxy.

Bevorzugte Aminogruppen sind beispielsweise Dimethylamino, Methylamino, Methylphenylamino und Phenylamino.

Aryl- und Heteroarylgruppen können einkernig oder mehrkernig sein, d.h. sie können einen Ring (wie z.B. Phenyl) oder zwei oder mehr Ringe aufweisen, welche auch anelliert (wie z.B. Naphthyl) oder kovalent verknüpft sein können (wie z.B. Biphenyl), oder eine Kombination von anellierten und verknüpften Ringen beinhalten. Heteroarylgruppen enthalten ein oder mehrere Heteroatome, vorzugsweise ausgewählt aus O, N, S und Se. Ein solches Ringsystem kann auch einzelne nichtkonjugierte Einheiten enthalten, wie es beispielsweise beim Fluoren-Grundkörper der Fall ist.

Besonders bevorzugt sind ein-, zwei- oder dreikernige Arylgruppen mit 6 bis 25 C-Atomen sowie ein-, zwei- oder dreikernige Heteroarylgruppen mit 2 bis 25 C-Atomen, welche optional anellierte Ringe enthalten und optional substituiert sind. Ferner bevorzugt sind 5-, 6- oder 7-gliedrige Aryl- und Heteroarylgruppen, worin auch eine oder mehrere CH-Gruppen durch N, S oder O so ersetzt sein können, daß O-Atome und/oder S-Atome nicht direkt miteinander verknüpft sind.

Bevorzugte Arylgruppen sind beispielsweise abgeleitet aus den Grundkörpern Benzol, Biphenyl, Terphenyl, [1,1':3',1"]Terphenyl, Naphthalin, Anthracen, Binaphthyl, Phenanthren, Pyren, Dihydropyren, Chrysen, Perylen, Tetracen, Pentacen, Benzpyren, Fluoren, Inden, Indenofluoren, Spirobifluoren, etc.

Bevorzugte Heteroarylgruppen sind beispielsweise 5-gliedrige Ringe wie Pyrrol, Pyrazol, Imidazol, 1,2,3-Triazol, 1,2,4-Triazol, Tetrazol, Furan, Thiophen, Selenophen, Oxazol, Isoxazol, 1,2-Thiazol, 1,3-Thiazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 6-gliedrige Ringe wie Pyridin, Pyridazin, Pyrimidin, Pyrazin, 1,3,5-Triazin, 1,2,4-Triazin, 1,2,3-Triazin, 1,2,4,5-Tetrazin, 1,2,3,4-Tetrazin, 1,2,3,5-Tetrazin, oder kondensierte Gruppen wie Indol, Isoindol, Indolizin, Indazol, Benzimidazol, Benzotriazol, Purin, Naphthimidazol, Phenanthrimidazol, Pyridimidazol, Pyrazinimidazol, Chinoxalinimidazol, Benzoxazol, Naphthoxazol, Anthroxazol, Phenanthroxazol, Isoxazol, Benzothiazol, Benzofuran, Isobenzofuran, Dibenzofuran, Chinolin, Isochinolin, Pteridin, Benzo-5,6-chinolin, Benzo-6,7-chinolin, Benzo-7,8-chinolin, Benzoisochinolin, Acridin, Phenothiazin, Phenoxazin, Benzopyridazin, Benzopyrimidin, Chinoxalin, Phenazin, Naphthyridin, Azacarbazol, Benzocarbolin, Phenanthridin, Phenanthrolin, Thieno[2,3b]thiophen, Thieno[3,2b]thiophen, Dithienothiophen, Dihydrothieno [3,4-b][1,4]dioxin, Isobenzothiophen, Dibenzothiophen, Benzothiadiazothiophen, oder Kombinationen dieser Gruppen. Die Heteroarylgruppen können auch mit Alkyl, Alkoxy, Thioalkyl, Fluor, Fluoralkyl oder weiteren Aryl- oder Heteroarylgruppen substituiert sein.

Die (nicht-aromatischen) alicyclischen und heterocyclischen Gruppen umfassen sowohl gesättigte Ringe, d.h. solche die ausschließlich Einfachbindungen enthalten, als auch teilweise ungesättigte Ringe, d.h. solche die auch Mehrfachbindungen enthalten können. Heterocyclische Ringe enthalten ein oder mehrere Heteroatome, vorzugsweise ausgewählt aus Si, O, N, S und Se.

Die (nicht-aromatischen) alicyclischen und heterocyclischen Gruppen können einkernig sein, d.h. nur einen Ring enthalten (wie z.B. Cyclohexan), oder mehrkernig sein, d.h. mehrere Ringe enthalten (wie z.B. Decahydronaphthalin oder Bicyclooctan). Besonders bevorzugt sind gesättigte Gruppen. Ferner bevorzugt sind ein-, zwei- oder dreikernige Gruppen mit 3 bis 25 C-Atomen, welche optional anellierte Ringe enthalten und optional substituiert sind. Ferner bevorzugt sind 5-, 6-, 7- oder 8-gliedrige carbocyclische Gruppen worin auch ein oder mehrere C-Atome durch Si ersetzt sein können und/oder eine oder mehrere CH-Gruppen durch N ersetzt sein können und/oder eine oder mehrere nichtbenachbarte $CH_2$-Gruppen durch -O- und/oder -S- ersetzt sein können.

Bevorzugte alicyclische und heterocyclische Gruppen sind beispielsweise 5-gliedrige Gruppen wie Cyclopentan, Tetrahydrofuran, Tetrahydrothiofuran, Pyrrolidin, 6-gliedrige Gruppen wie Cyclohexan, Silinan, Cyclohexen, Tetrahydropyran, Tetrahydrothiopyran, 1,3-Dioxan, 1,3-Dithian, Piperidin, 7-gliedrige Gruppen wie Cycloheptan, und anellierte Gruppen wie Tetrahydronaphthalin, Decahydronaphthalin, Indan, Bicyclo[1.1.1]pentan-1,3-diyl, Bicyclo[2.2.2]octan-1,4-diyl, Spiro[3.3]heptan-2,6-diyl, Octahydro-4,7-methano-indan-2,5-diyl.

Die Aryl-, Heteroaryl-, Kohlenstoff- und Kohlenwasserstoffreste weisen gegebenenfalls einen oder mehrere Substituenten auf, welche vorzugsweise ausgewählt sind aus der Gruppe enthaltend Silyl, Sulfo, Sulfonyl, Formyl, Amin, Imin, Nitril, Mercapto, Nitro, Halogen, $C_{1-12}$ Alkyl, $C_{6-12}$ Aryl, $C_{1-12}$ Alkoxy, Hydroxy, oder Kombinationen dieser Gruppen.

Bevorzugte Substituenten sind beispielsweise löslichkeitsfördernde Gruppen wie Alkyl oder Alkoxy, elektronenziehende Gruppen wie Fluor, Nitro oder Nitril, oder Substituenten zur Erhöhung der Glastemperatur (Tg) im Polymer, insbesondere voluminöse Gruppen wie z.B. t-Butyl oder gegebenenfalls substituierte Arylgruppen.

Bevorzugte Substituenten, im Folgenden auch als "L" bezeichnet, sind F, Cl, Br, I, -CN, $-NO_2$, -NCO, -NCS, -OCN, -SCN, $-C(=O)N(R^z)_2$, $-C(=O)Y^1$, $-C(=O)R^z$, $-N(R^z)_2$, worin $R^z$ die oben angegebene Bedeutung hat und $Y^1$ Halogen bedeutet, optional substituiertes Silyl oder Aryl mit 6 bis 40, vorzugsweise 6 bis 20 C Atomen, und geradkettiges oder verzweigtes Alkyl, Alkoxy, Alkylcarbonyl, Alkoxycarbonyl, Alkylcarbonyloxy oder Alkoxycarbonyloxy mit 1 bis 25 C-Atomen, worin ein oder mehrere H-Atome gegebenenfalls durch F oder Cl ersetzt sein können.

"Substituiertes Silyl oder Aryl" bedeutet vorzugsweise durch Halogen, -CN, $R^{y1}$, $-OR^{y1}$, $-CO-R^{y1}$, $-CO-O-R^{y1}$,

-O-CO-$R^{y1}$ oder -O-CO-O-$R^{y1}$ substituiert, worin $R^{y1}$ die oben angegebene Bedeutung hat.

Besonders bevorzugte Substituenten L sind beispielsweise F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$, ferner Phenyl.

Eine weitere bevorzugte Ausführungsform der Erfindung betrifft Verbindungen der Formel I, worin $R^{11}$, $R^{12}$, $A^{11}$, $A^{12}$, $A^{21}$, $A^{22}$, $Z^{11}$, $Z^{12}$, $Z^{21}$, $Z^{22}$, W, $X^{11}$ und $X^{12}$ die oben für Formel I angegebenen Bedeutungen haben, mit der Maßgabe daß wenn r und s gleich sind mindestens eine der Gruppen
$A^{11}$ und $A^{12}$, oder
$R^{11}$ und $R^{12}$, oder
$A^{21}$ und $A^{22}$, oder
$Z^{11}$ und $Z^{12}$, oder
$Z^{21}$ und $Z^{22}$, oder
$X^{11}$ und $X^{12}$
voneinander verschieden sind, oder daß r gleich 0,1 oder 2 und s gleich r+1 bedeuten.

In einer weiteren bevorzugten Ausführungsform steht in Formel I W für -S-.

In einer besonders bevorzugten Ausführungsform stehen $X^{11}$ und $X^{12}$ jeweils unabhängig voneinander für H, $CH_3$, $C_2H_5$, F, Cl, $CF_3$, $OCF_3$, -CN oder gemeinsam 1,4-Butylen, 1,3-Hexafluorpropyliden oder 1,4-Octafluorbutyliden, ganz besonders bevorzugt beide für $CH_3$.

Für $Z^{11}$ und $Z^{12}$ ist es bevorzugt, daß sie unabhängig voneinander für eine Einfachbindung, -CH=CH- , -CF=CF- oder -C=C- stehen, ganz besonders bevorzugt für eine Einfachbindung.

$Z^{21}$ und $Z^{22}$ bedeuten bevorzugt unabhängig voneinander eine Einfachbindung, $-CH_2CH_2-$, $-CF_2CF_2-$, -CH=CH-, -CF=CF-, -C≡C-, $-OCH_2-$, $-CH_2O-$, $-OCF_2-$, oder $-CF_2O-$, besonders bevorzugt $-OCF_2-$ , $-CF_2O-$ oder eine Einfachbindung, und ganz besonders bevorzugt eine Einfachbindung.

Für $A^{11}$, $A^{12}$, $A^{21}$, $A^{22}$ ist es bevorzugt, daß sie bei jedem Auftreten gleich oder verschieden eine Arylgruppe mit 6 bis 15 C-Atomen oder eine Heteroarylgruppe mit 2 bis 15 C-Atomen darstellen, die mit einem oder mehreren Resten L substituiert sein können. Besonders bevorzugt sind $A^{11}$, $A^{12}$, $A^{21}$, $A^{22}$ bei jedem Auftreten gleich oder verschieden gewählt aus wahlweise mit Resten L substituierten Gruppen abgeleitet aus den Grundkörpern Benzol, Fluoren, Naphthalin, Pyridin, Pyrimidin, Thiophen, Thiadiazol, Dihydrothienodioxin, Benzothiophen, Dibenzothiophen, Benzodithiophen, Cyclopentadithiophen, Thienothiophen, Indenothiophen, Furan, Benzofuran, Dibenzofuran und Chinolin, ganz besonders bevorzugt Benzol, Naphthalin, Thiadiazol und Thiophen.

Besonders bevorzugte Substituenten L sind beispielsweise F, Cl, CN, $CH_3$, $C_2H_5$, $OCH_3$, $CF_3$, $OCF_3$, $OCHF_2$, $OC_2F_5$, ferner Phenyl.

Die Gruppen $R^{11}$ und $R^{12}$ sind bevorzugt unabhängig voneinander F, eine geradkettige Alkyl- oder Alkoxylgruppe mit 1 bis 15 C-Atomen oder eine verzweigte Alkyl- oder Alkoxygruppe mit 3 bis 20 C-Atomen worin auch ein oder mehrere H-Atome durch F ersetzt sein können. Ganz besonders bevorzugt bedeuten $R^{11}$ und $R^{12}$ jeweils unabhängig voneinander eine geradkettige Alkyl- oder Alkoxylgruppe mit 1 bis 10 C-Atomen oder eine verzweigte Alkyl- oder Alkoxygruppe mit 3 bis 15 C-Atomen.

Die Gruppen $R^{x1}$ und $R^{x2}$ sind bevorzugt bei jedem Auftreten gleich oder verschieden H, F, oder eine Alkylgruppe mit 1 bis 6 C-Atomen. Besonders bevorzugt sind $R^{x1}$ und $R^{x2}$ bei jedem Auftreten gleich oder verschieden H oder F, ganz besonders bevorzugt H.

Für die Indizes r und s gilt, daß sie unabhängig voneinander bevorzugt gleich 1, 2 oder 3 sind, besonders bevorzugt gleich 1 oder 2, ganz besonders bevorzugt gleich 1.

Bevorzugte Ausführungsformen der Formel I sind die folgenden Formeln I-1, I-2 und I-3.

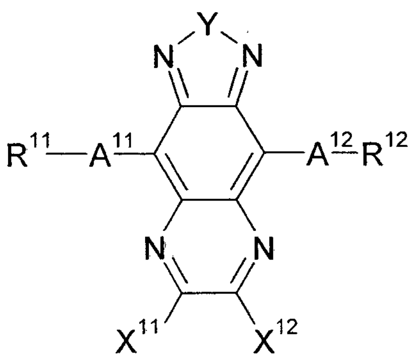

I-1

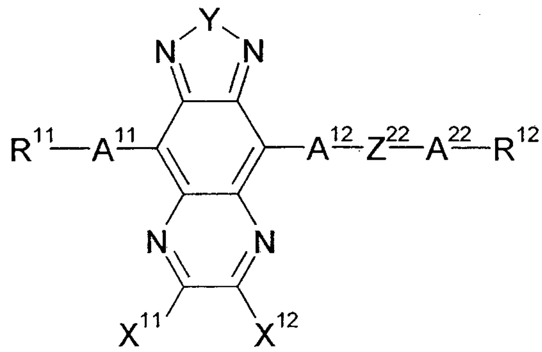

I-2

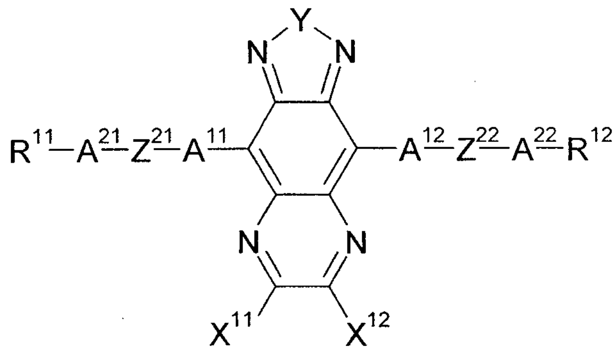

I-3

wobei die auftretenden Gruppen die oben angegebenen Bedeutungen haben.

Es ist für die Formeln I-1, I-2 und I-3 bevorzugt, daß mindestens ein direkt an Thiadiazolochinoxalin gebundenes $A^{11}$ oder $A^{12}$ für 1,4-Phenylen, 2,6-Naphthylen oder eine schwefelhaltige Heteroarylgruppe steht, besonders bevorzugt für Thiophen. Die Gruppen können mit einem oder mehreren Resten L substituiert sein.

Bevorzugte Ausführungsformen von Verbindungen der Formel I-1, I-2 und I-3 werden bevorzugt ausgewählt aus den Verbindungen der Formeln I-1-1 bis I-1-10, I-2-1 bis I-2-12 und I-3-1 bis I-3-10.

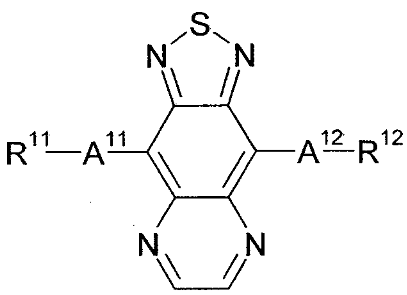

I-1-1

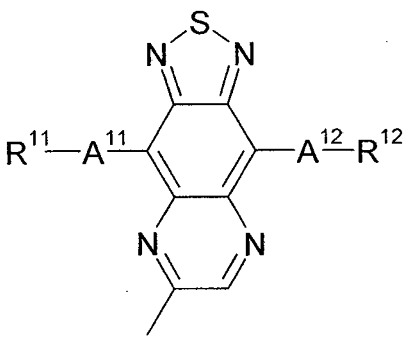

I-1-2

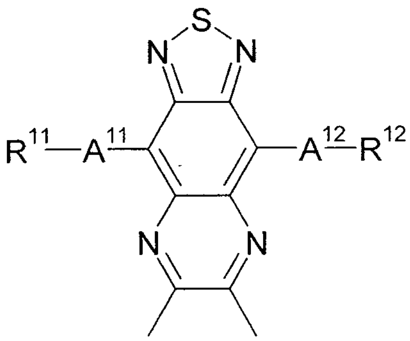

I-1-3

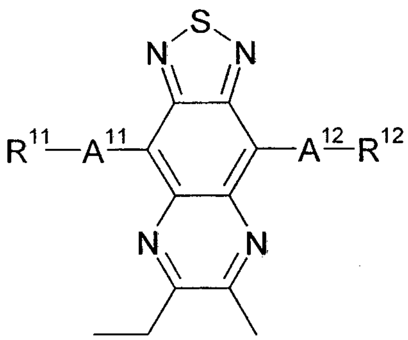

I-1-4

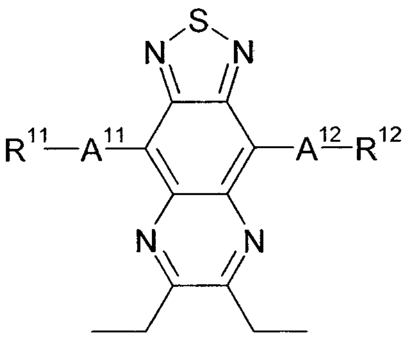

I-1-5

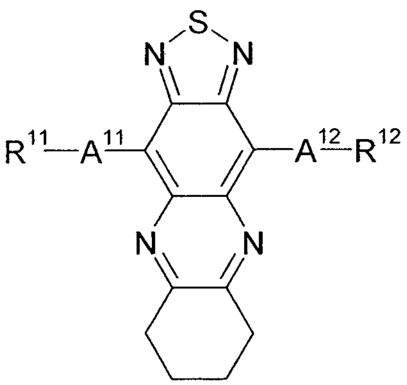

I-1-6

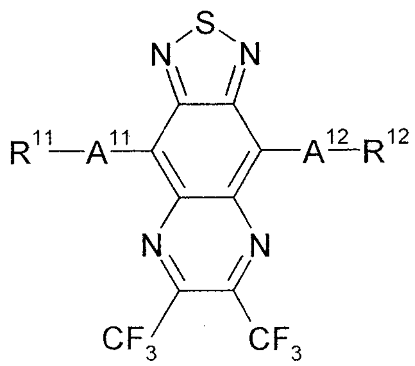

I-1-7

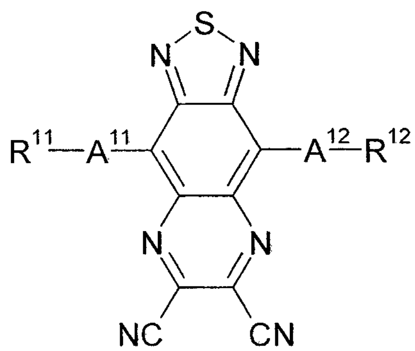

I-1-8

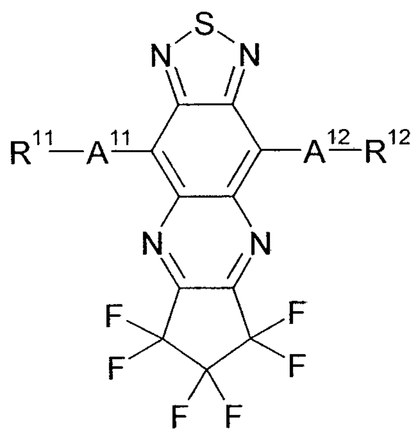

I-1-9

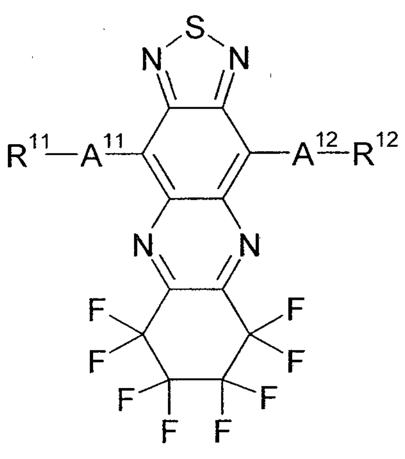

I-1-10

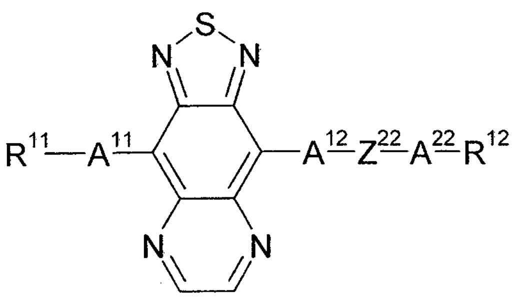

I-2-1

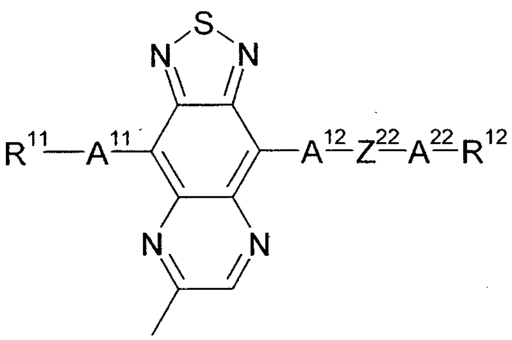

I-2-2

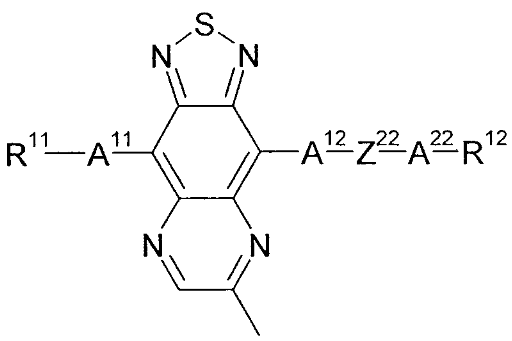

I-2-3

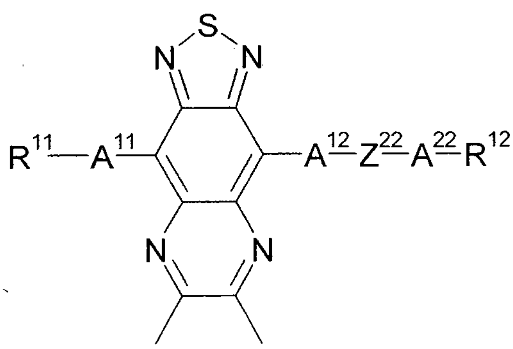

I-2-4

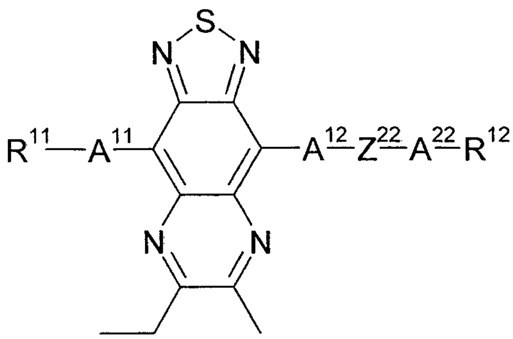

I-2-5

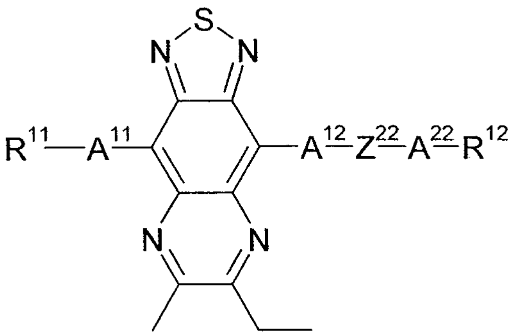

I-2-6

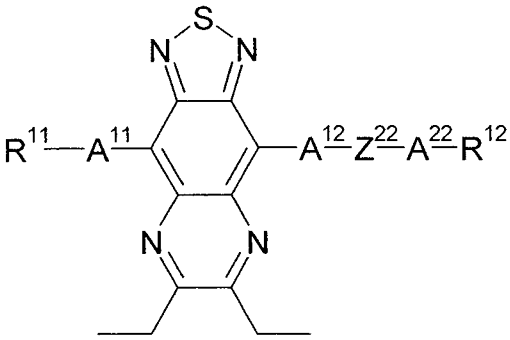

I-2-7

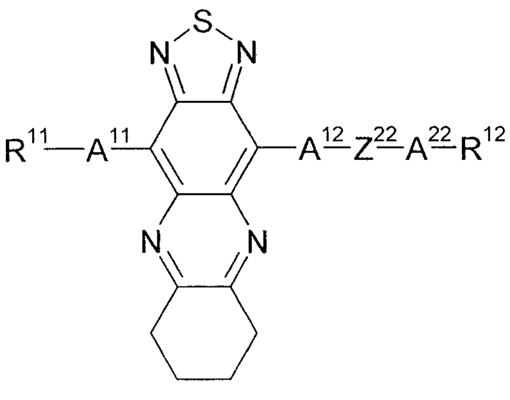

I-2-8

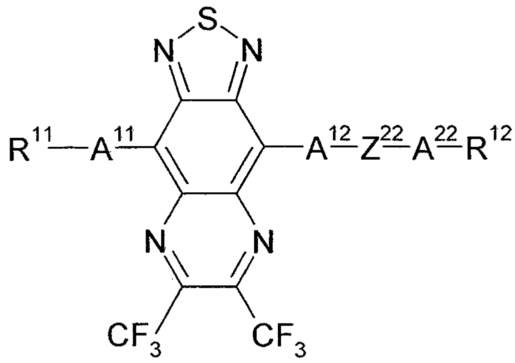

I-2-9

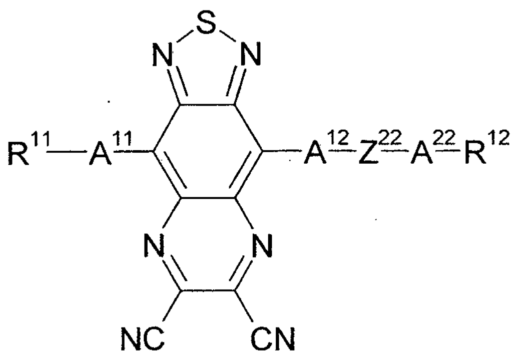

I-2-10

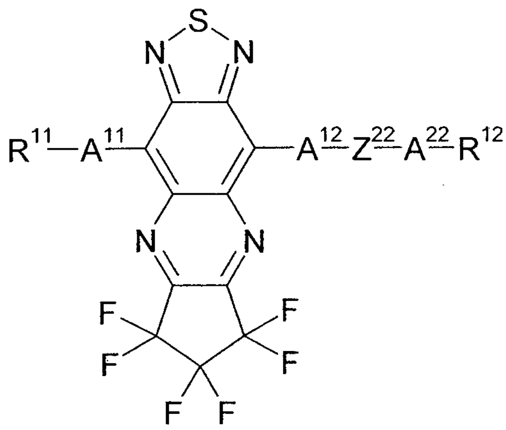

I-2-11

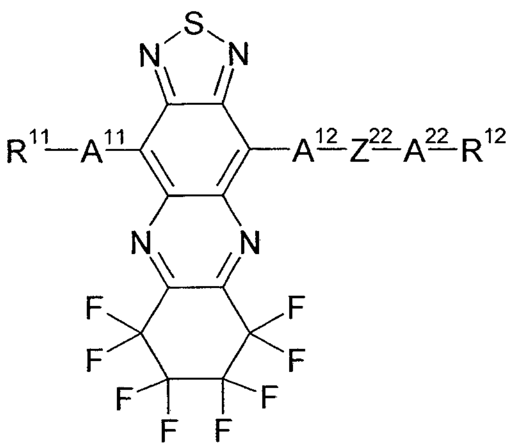

I-2-12

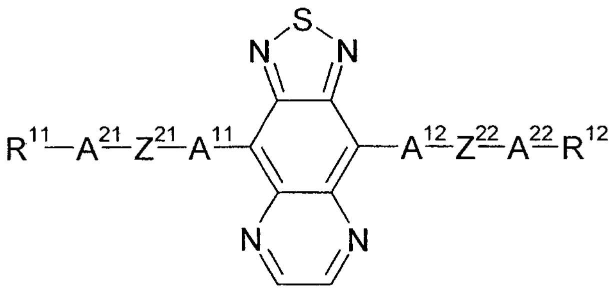

I-3-1

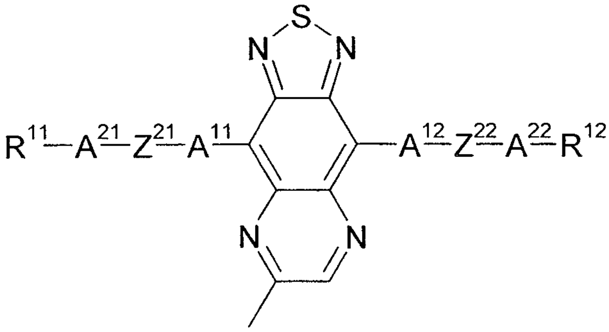

I-3-2

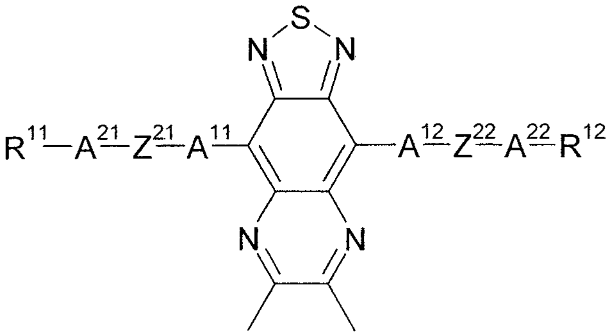

I-3-3

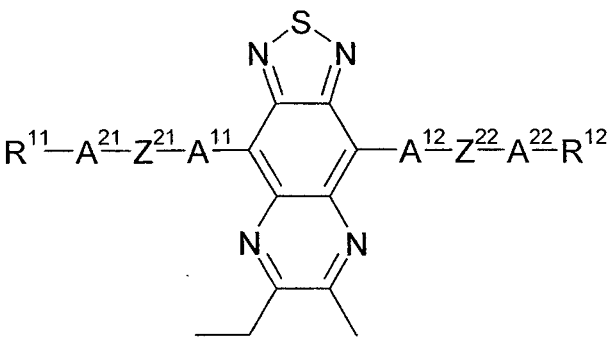

I-3-4

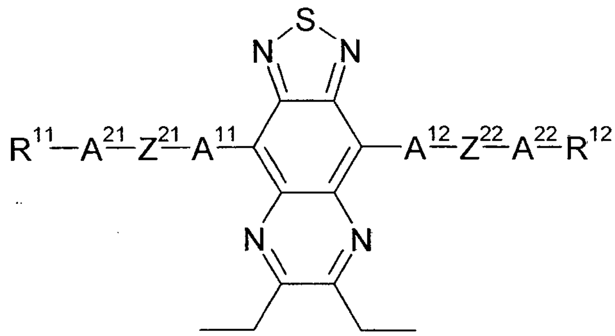

I-3-5

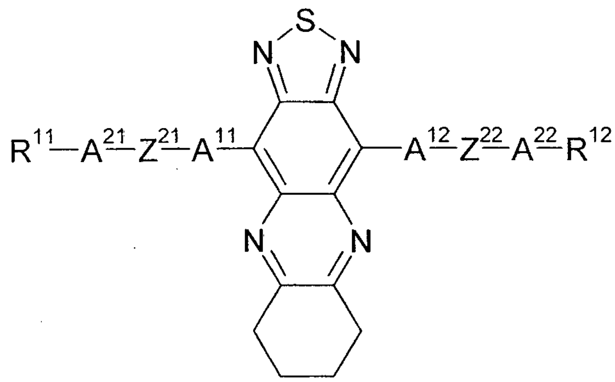

I-3-6

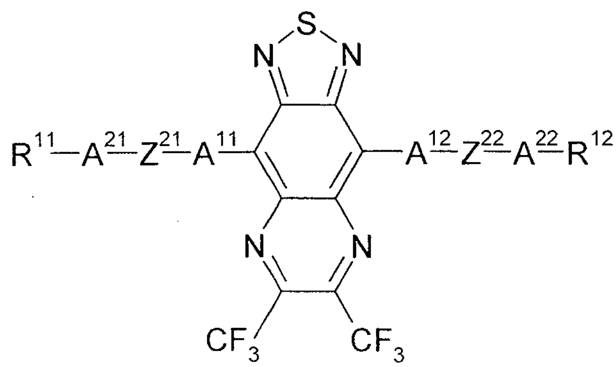

I-3-7

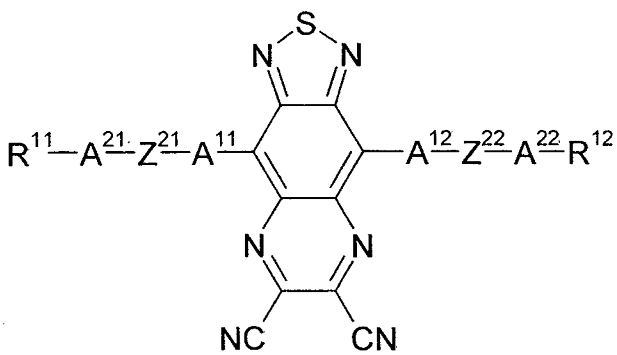

I-3-8

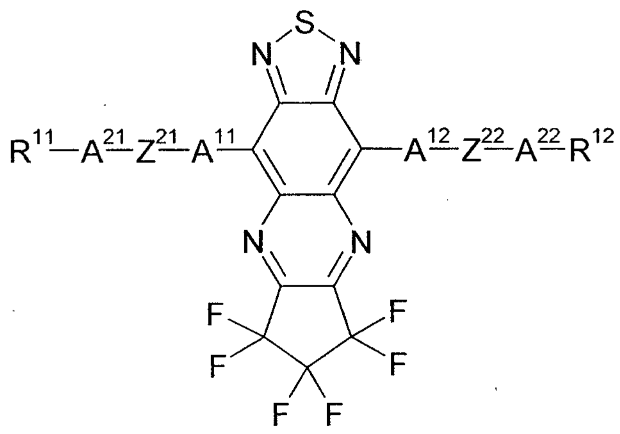

I-3-9

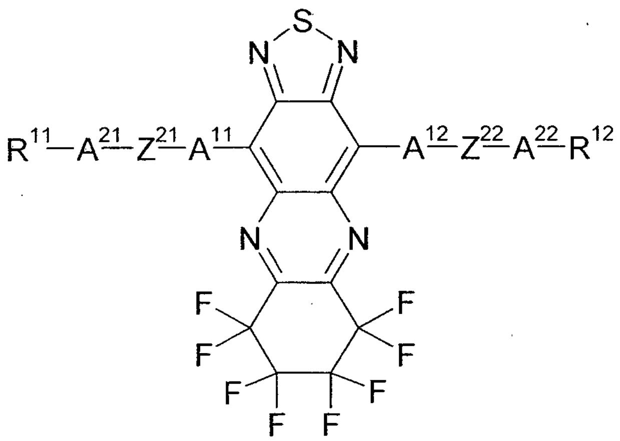

I-3-10

wobei die auftretenden Gruppen $A^{11}$, $A^{12}$, $A^{21}$, $A^{22}$, $Z^{21}$, $Z^{22}$, $R^{11}$ und $R^{12}$ wie oben definiert sind.

Unter den Formeln I-1-1 bis I-1-10, 1-2-1 bis I-2-12 und I-3-1 bis I-3-10 sind die Formeln I-1-3, I-2-4 und I-3-3 besonders bevorzugt.

Bevorzugte Ausführungsformen von Verbindungen der Formel I-1-3, I-2-4 und I-3-3 sind

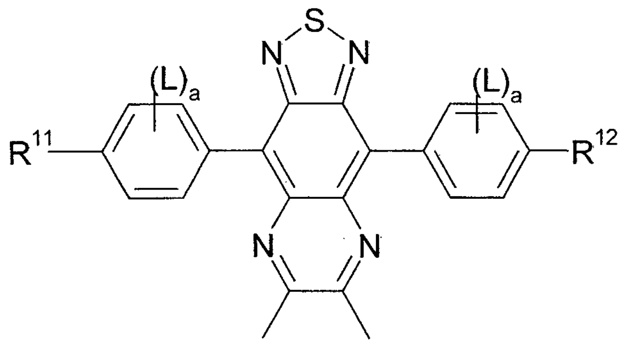

I-1-3-1

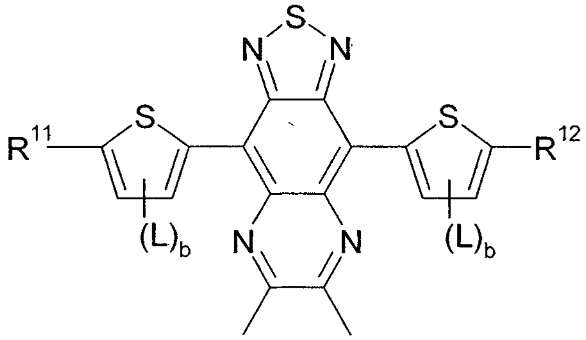

I-1-3-2

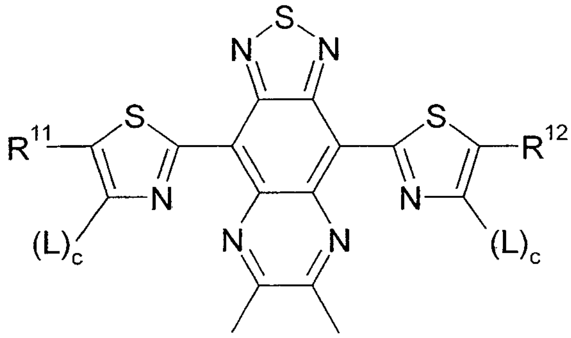

I-1-3-3

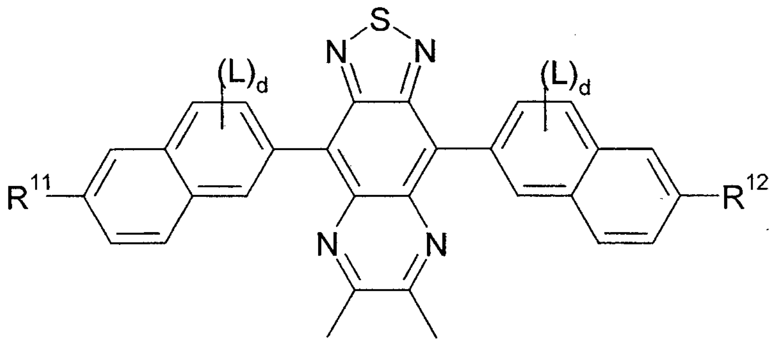

I-1-3-4

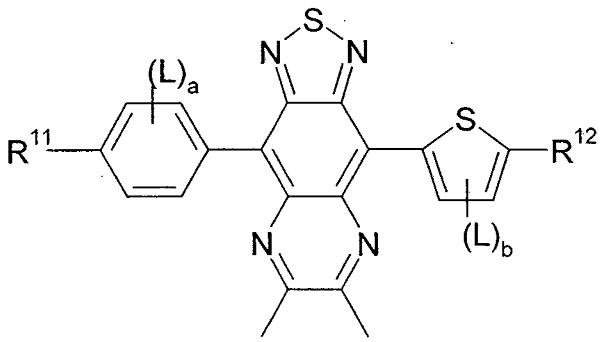

I-1-3-5

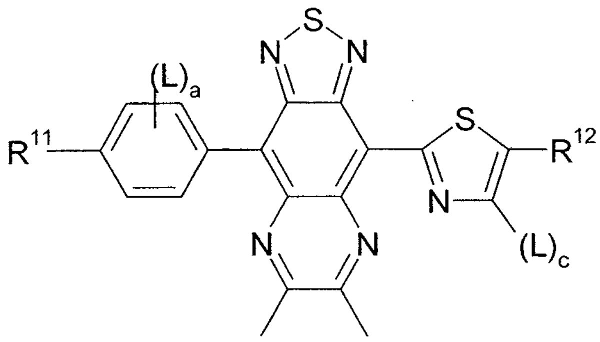

I-1-3-6

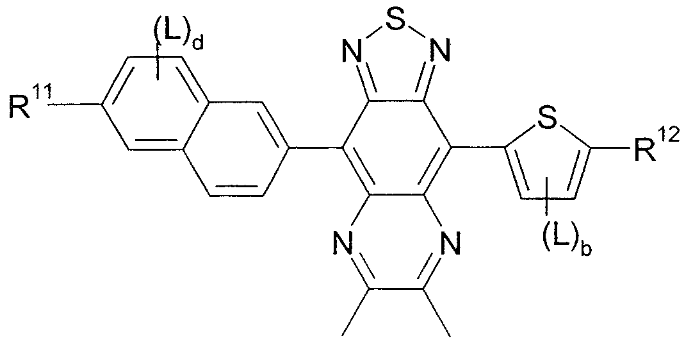

I-1-3-7

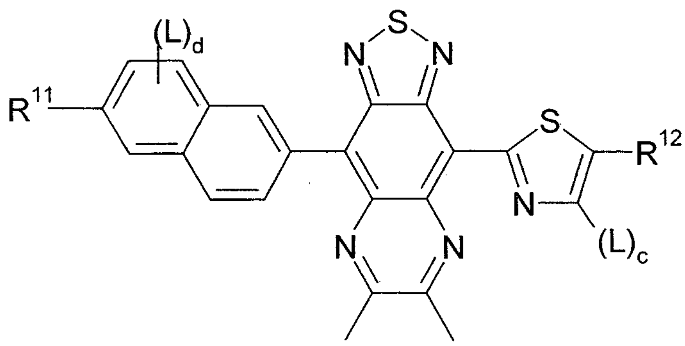

I-1-3-8

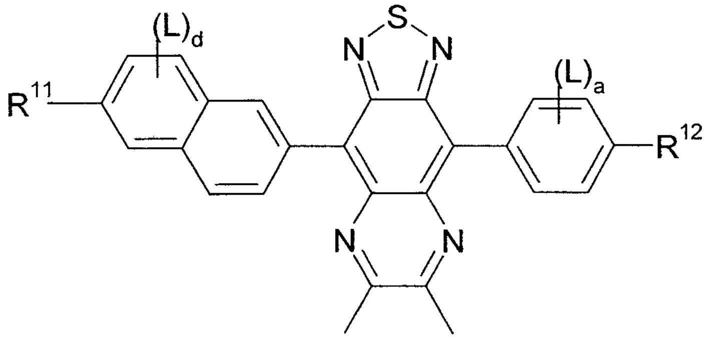

I-1-3-9

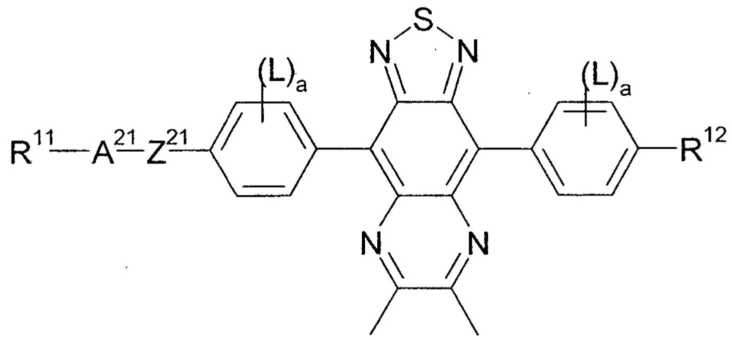

I-2-4-1

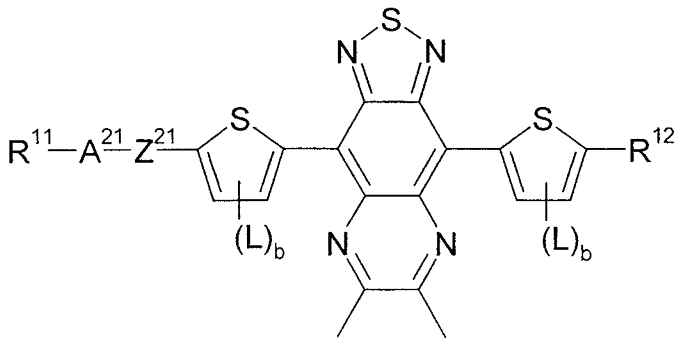

I-2-4-2

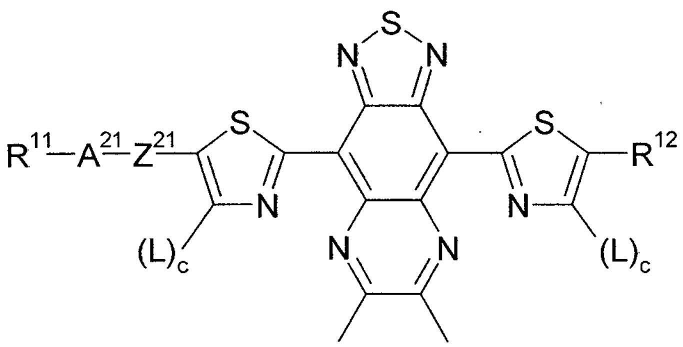

I-2-4-3

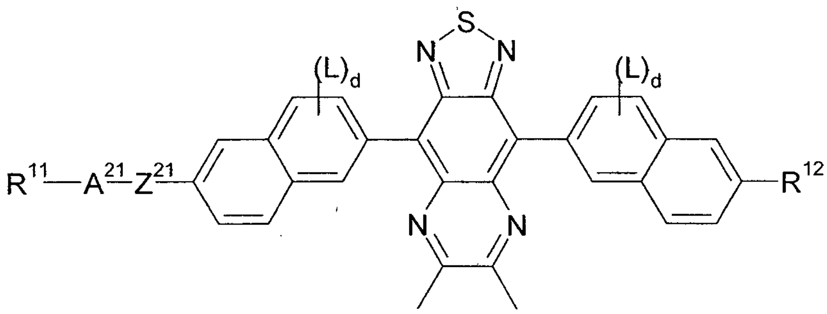

I-2-4-4

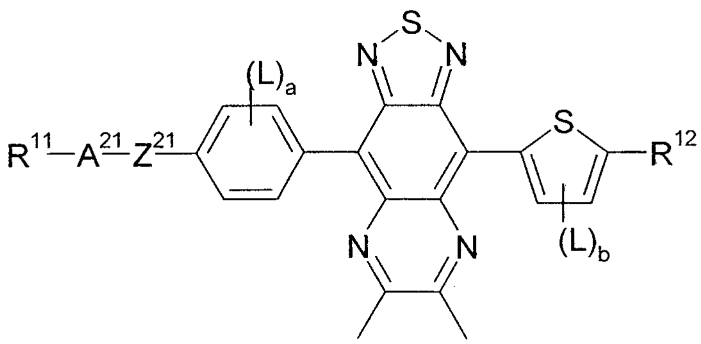

I-2-4-5

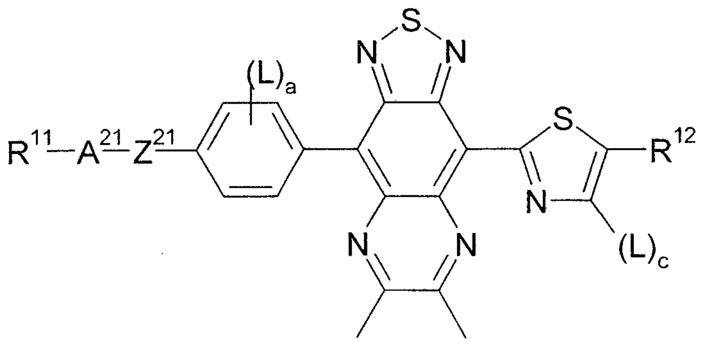

I-2-4-6

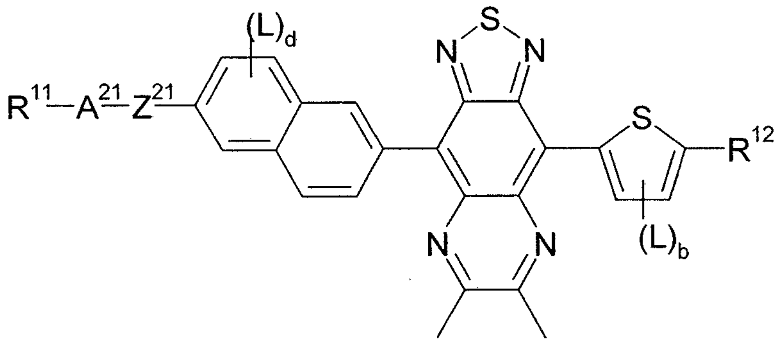

I-2-4-7

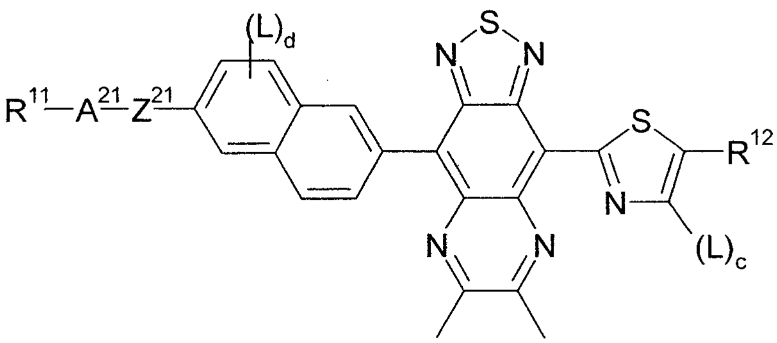

I-2-4-8

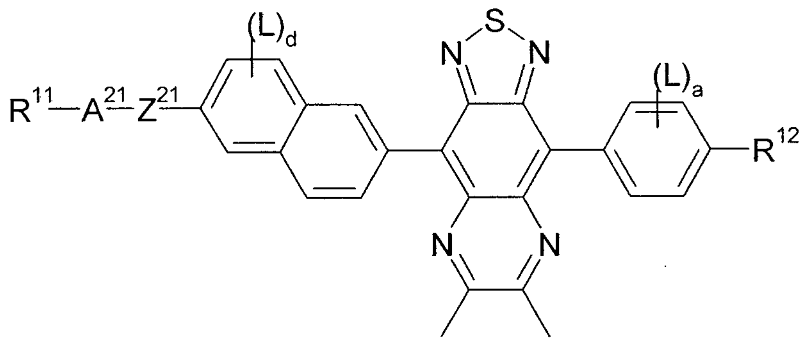

I-2-4-9

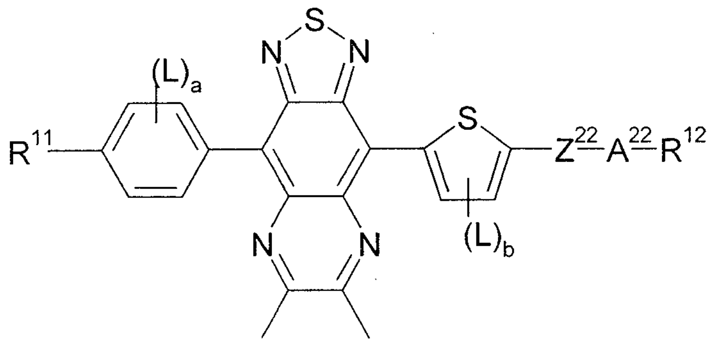

I-2-4-10

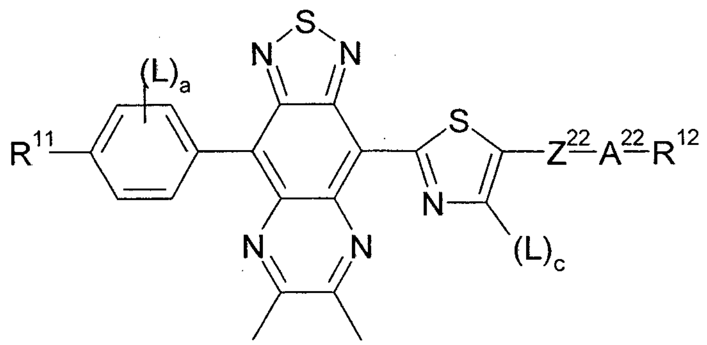

I-2-4-11

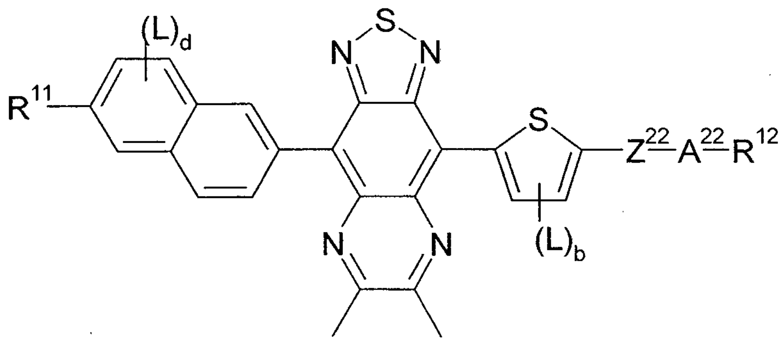

I-2-4-12

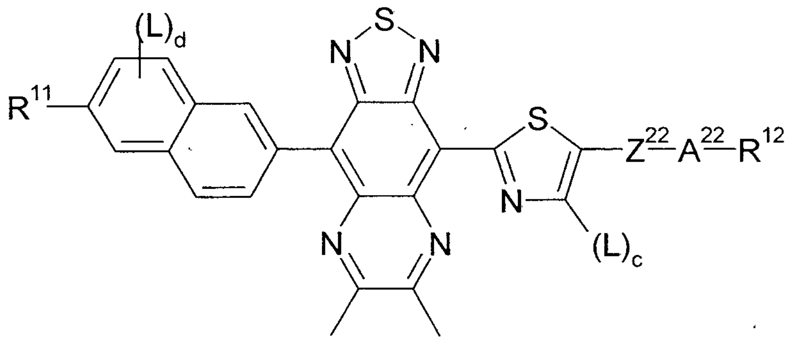

I-2-4-13

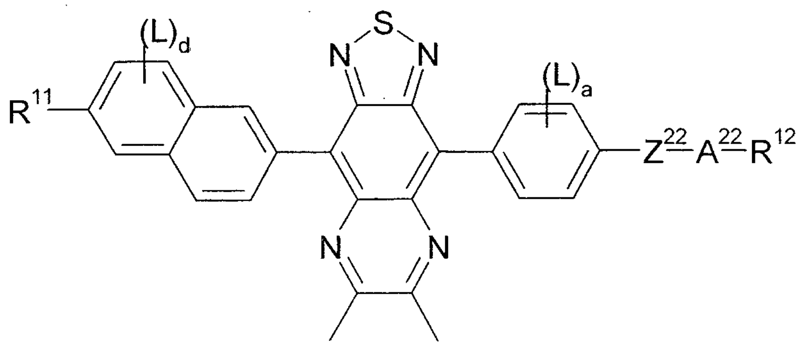

I-2-4-14

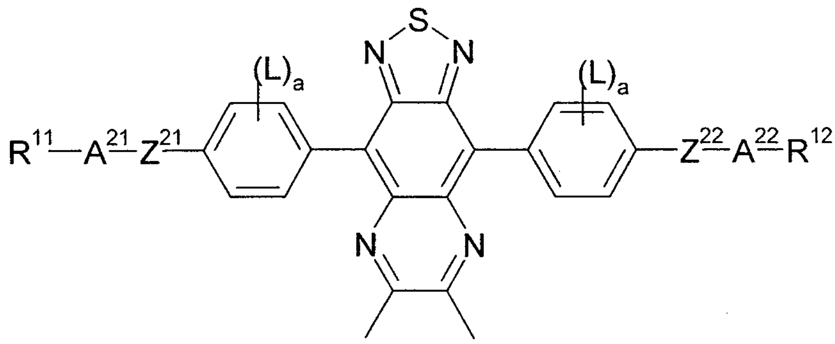

I-3-3-1

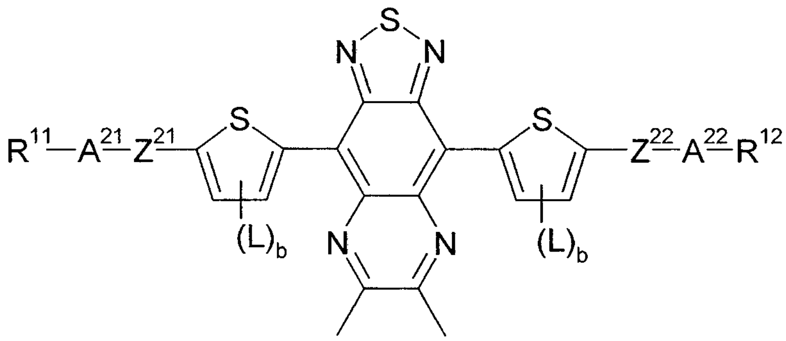

I-3-3-2

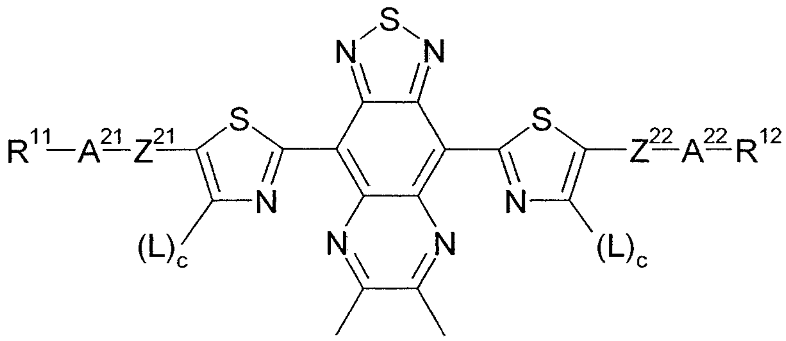

I-3-3-3

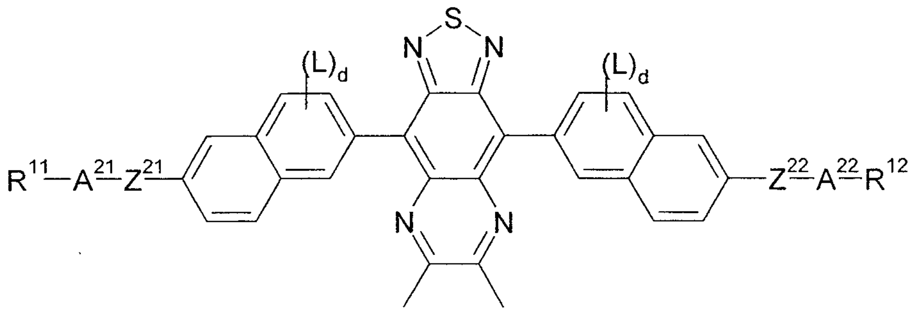

I-3-3-4

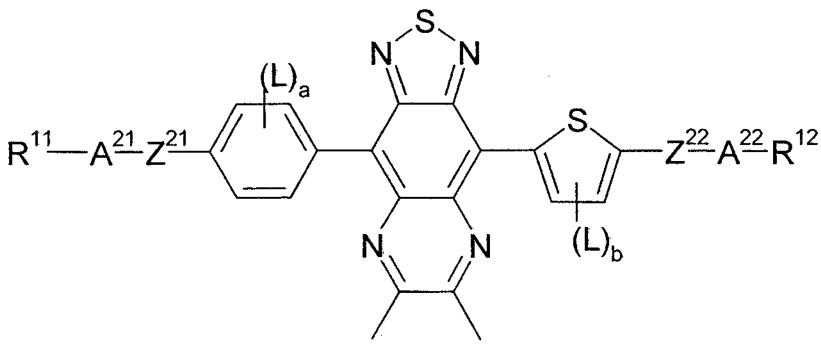

I-3-3-5

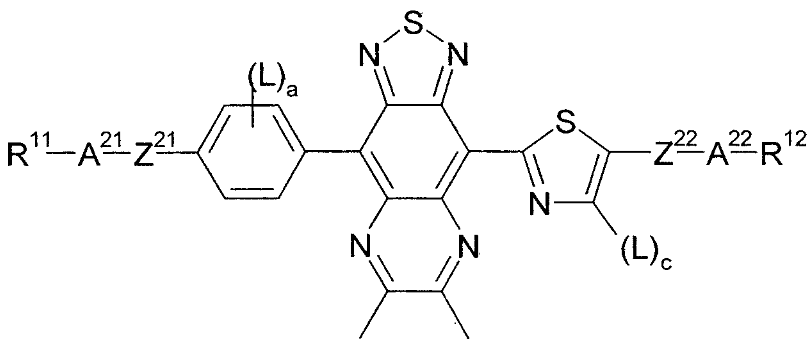

I-3-3-6

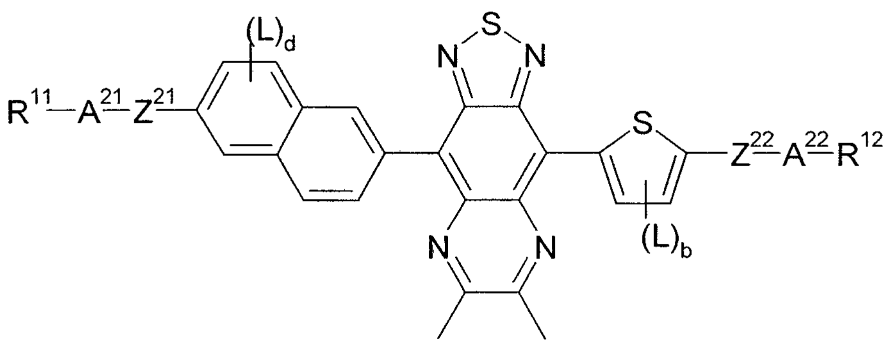

I-3-3-7

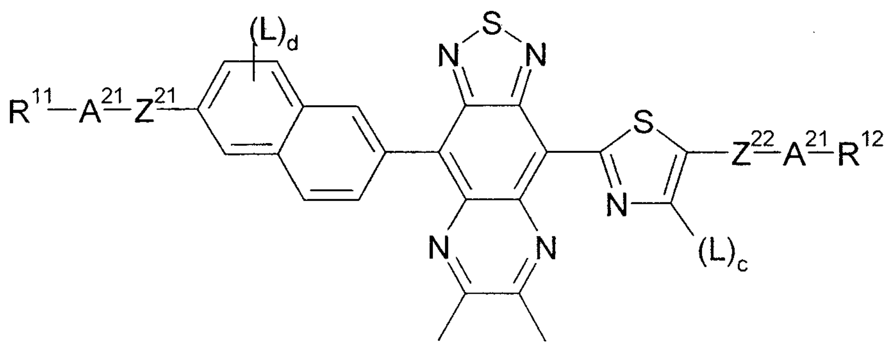

I-3-3-8

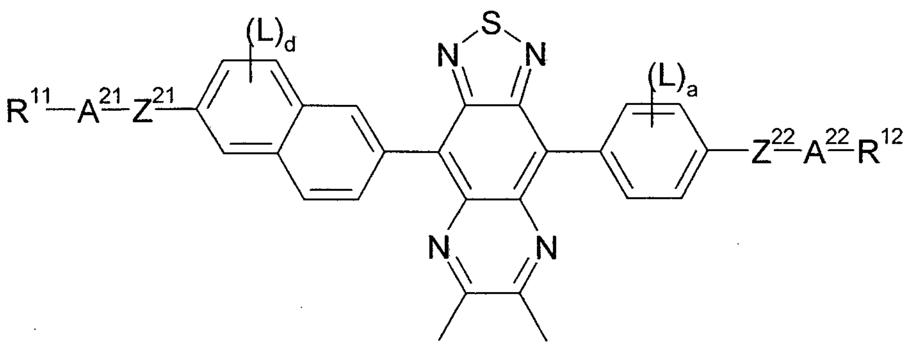

I-3-3-9

wobei die auftretenden Gruppen $R^{11}$, $R^{12}$, $A^{11}$, $A^{12}$, $A^{21}$, $A^{22}$, $Z^{21}$ und $Z^{22}$ definiert sind wie oben und

- a unabhängig voneinander 0, 1, 2, 3, oder 4,
- b unabhängig voneinander 0, 1 oder 2,
- c unabhängig voneinander 0 oder 1, und
- d unabhängig voneinander 1, 2, 3, 4, 5 oder 6

bedeuten.

Ganz besonders bevorzugte Verbindungen der Formel I sind ausgewählt aus der Gruppe der folgenden Unterformeln:

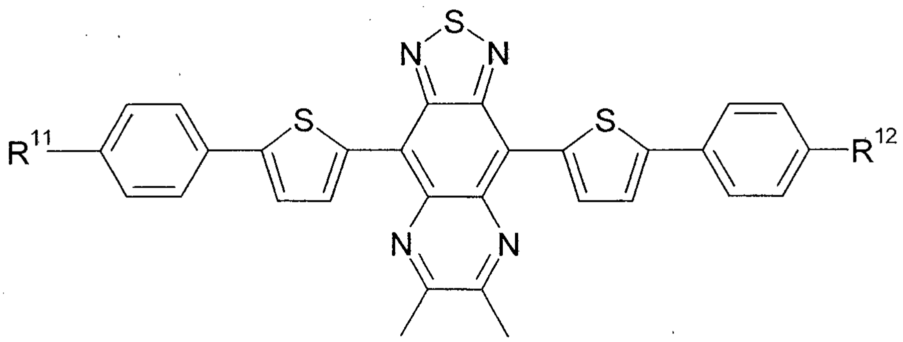

I-3-3-2-a

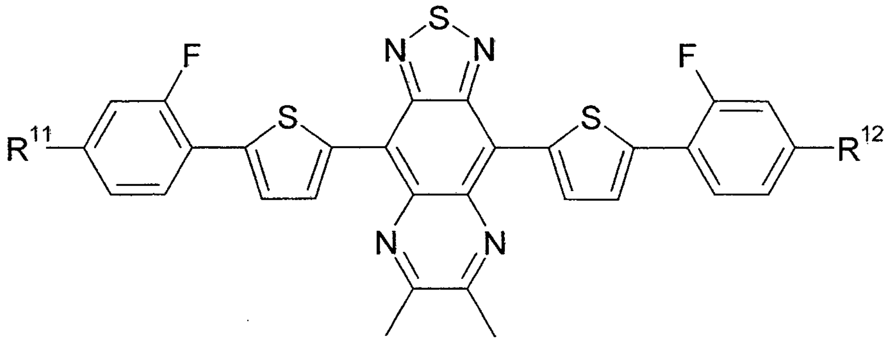

I-3-3-2-b

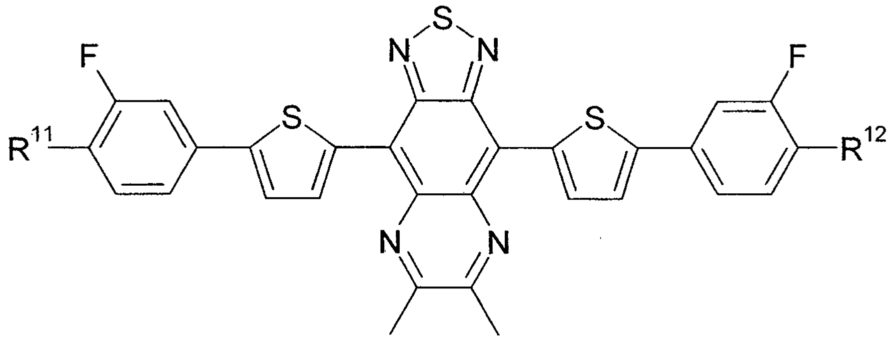

I-3-3-2-c

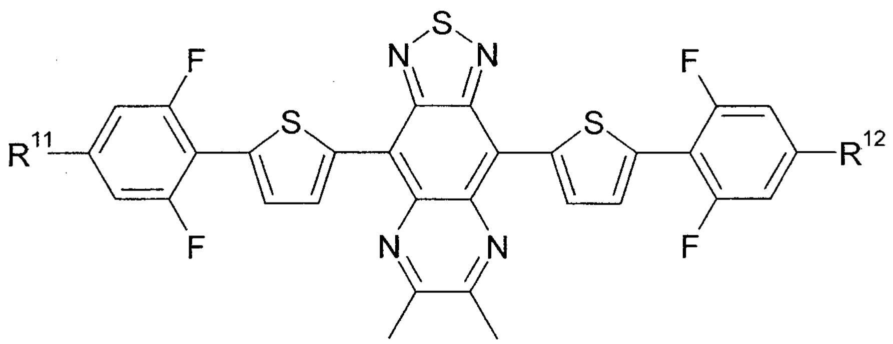

I-3-3-2-d

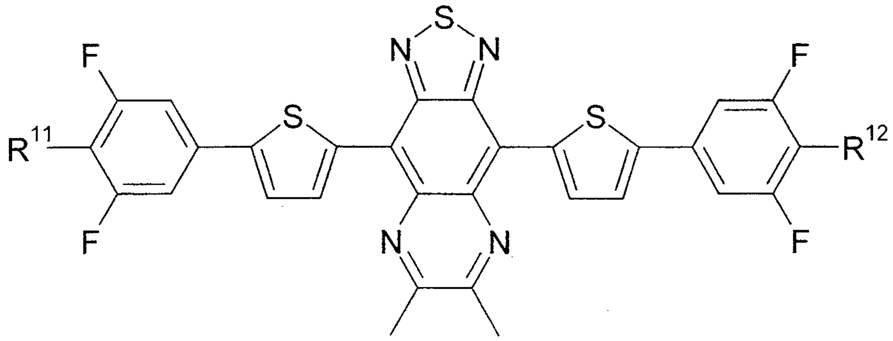

I-3-3-2-e

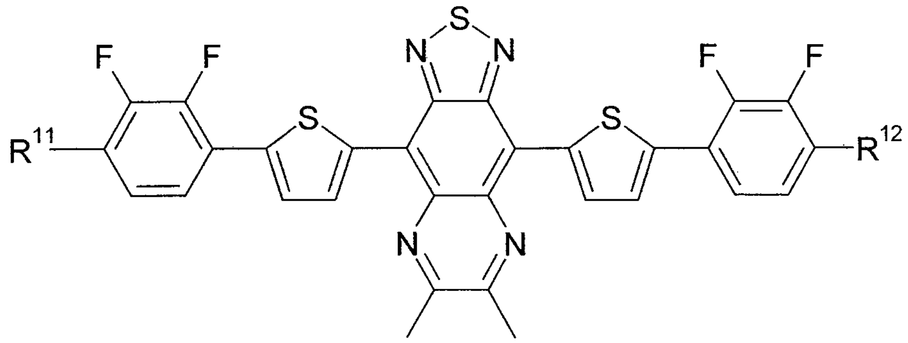

I-3-3-2-f

wobei $R^{11}$ und $R^{12}$ bevorzugt n-Pentyl, n-Hexyl, n-Heptyl, 2-Ethylhexyl, 3-Ethylheptyl bedeuten.

Besonders bevorzugt sind die oben angegebenen Teilformeln I-1-2, I-1-4, I-2-1 bis 1-2-12, I-3-2, I-3-4, sowie I-1-3-5 bis I-1-3-9, I-2-4-5 bis I-2-1-14 und 1-3-3-5 bis 1-3-3-9.

Solche unsymmetrisch substituierten Verbindungen zeichnen sich durch besonders gute Löslichkeit aus.

Weiterer Gegenstand der Erfindung sind Zwischenprodukte der Formeln II und III, wobei wobei $R^{11}$, $R^{12}$, W, $A^{11}$, $A^{12}$, $A^{21}$, $A^{22}$, $Z^{11}$, $Z^{12}$, $Z^{21}$, $Z^{22}$, r und s die oben für Formel I angegebene Bedeutung haben.

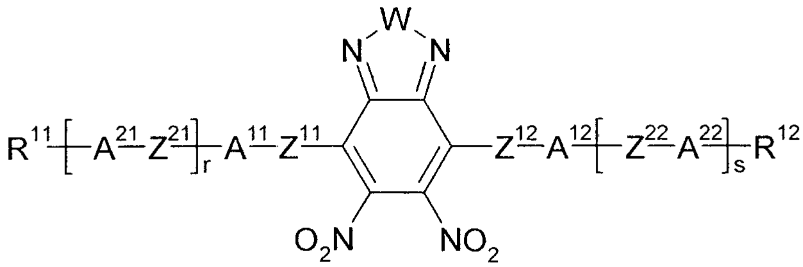

II

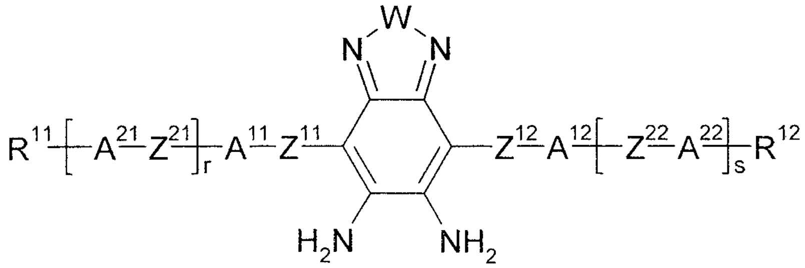

III

Weiterer Gegenstand der Erfindung sind Verfahren zur Herstellung der Verbindungen der Formel I, dadurch gekennzeichnet, daß die Verbindungen der Formel II oder III gemäß dem in Schema 1 beschriebenen Verfahren zu Verbindungen der Formel I umgesetzt werden.

Die Verbindungen nach Formel I können in Analogie zu dem Fachmann bekannten und in Standardwerken der organischen Chemie beschriebenen Verfahren, wie beispielsweise Houben Weyl, Methoden der Organischen Chemie, Thieme Verlag, Stuttgart, hergestellt werden.

Im Folgenden werden besonders geeignete Verfahren in allgemeiner Form genannt. Für konkrete Verfahren zur Herstellung von Verbindungen der Formel I wird weiterhin auf die bekannte Literatur und auf die Ausführungsbeispiele verwiesen.

Ein bevorzugtes Verfahren zur Herstellung von Verbindungen der Formel I ist in Schema 1 dargestellt.

Dabei wird in Anlehnung an die in T. L. Tam, H. Li, K. J. Tan, C. Kloc, Y. M. Lam, S. G. Mhaisalkar, A. C. Grimsdale, Org. Lett. 2010, 12, 3340-3343; und C. Kitamura, S. Tanaka, Y. Yamashita, Chem. Mater. 1996, 8, 570-578, beschriebenen Verfahren das kommerziell erhältliche 4,7-Dibrom-5,6-dinitrobenzo[1,2,5]thiadiazol **(1)** in einer übergangsmetallkatalysierten Kreuzkupplung mit Arylmetallverbindungen nach Stille (M = $SnR_3$), Kumada (M = MgHal), oder Negishi (M = ZnHal) oder bevorzugt mit Arenboronsäuren in Suzuki-Kupplungen umgesetzt. Die Nitroverbindungen **2** können mit z.B. Eisen oder Zink in Eisessig oder durch katalytische Hydrierung an Raney-Nickel oder an Palladium zu Diaminen **3** reduziert werden. Diese lassen sich mit Diketonen zu den erfindungsgemäßen Verbindungen **4** zyklisieren, z.B. durch Kondensation mit Diacetyl in Methanol ($X^{11}$ und $X^{12}$ = Methyl) oder nach M. Cushman, W. C. Wong, A. Bacher, J. Chem. Soc. Perkin 1, 1986, 1043-1050 mit Hexafluordiacetyl ($X^{11}$ und $X^{12}$ = $CF_3$) oder nach nach O. W. Webster, D. R. Hartter, R. W. Begland, W. A. Sheppard, A. Cairncross, J. Org. Chem. 1972, 37, 4133-4136, oder H. W. Rothkopf, D. Wöhrle, R. Müller, G. Koßmehl, Chem. Ber. 1975, 108, 875-886 mit Diiminosuccinonitril in Trifluoressigsäure zu Zielverbindungen mit $X^{11}$ und $X^{12}$ = CN.

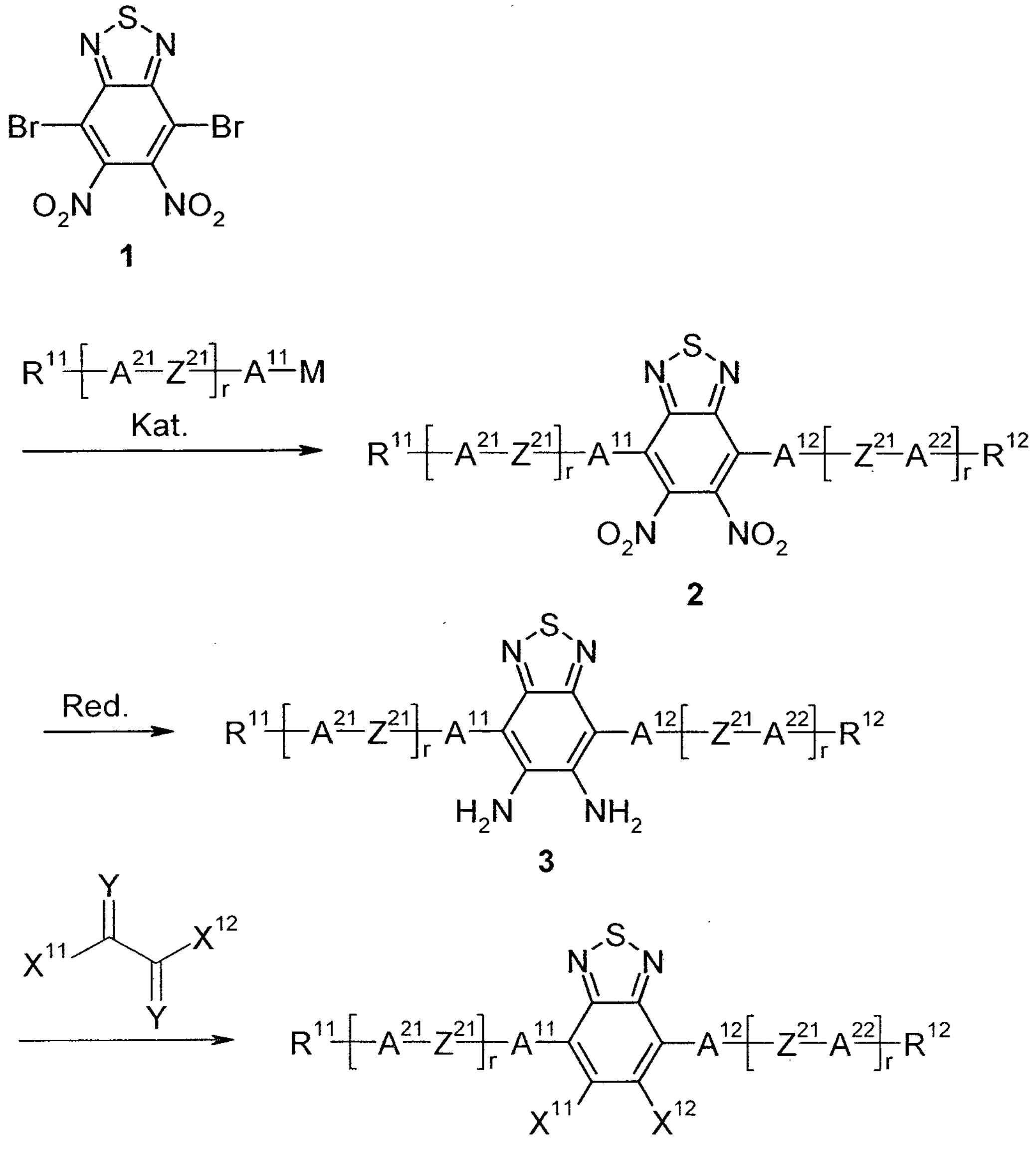


1

2

3

4

M = $SnR_3$, MgHal, ZnHal, $B(OH)_2$

Y = O oder NH

Schema 1.

Alternativ kann aus **1** auch in einem ersten Reaktionsschritt durch Reduktion das Diamin **5** erhalten werden, welches dann nach Aufbau des Thiadiazolochinoxalin-Grundkörpers **6** die Möglichkeit zu weiteren Abwandlungen zu Verbindungen der Formel I eröffnet. Nach K. Susumu et al., J. Phys. Chem. A 2011, 115, 5525-5539 sind so insbesondere durch Sonogashira- oder Heck-Kupplung die entsprechenden Alkene oder Alkine herstellbar. (Schema 2).

Aus den Diaminen **3** lassen sich nach L. Wang et al., Synth. Comm. 2004, 34(8), 1349-1357, durch ytterbiumtriflatkatalysierte Reaktion mit Diethyloxalat die Verbindungen **7** erhalten, aus denen Halogenverbindungen zugänglich sind, beispielsweise nach Ch. Zhu et al., ChemMedChem 2012, 7, 823 - 835 die Chlorderivate **8** oder nach T. Fujimoto, F. Becker und T. Ritter, Org. Process Res. Dev. 2014, 18, 1041-1044 durch Umsetzung mit Phenofluor® die fluorierten Verbindungen **9** (Schema 3).

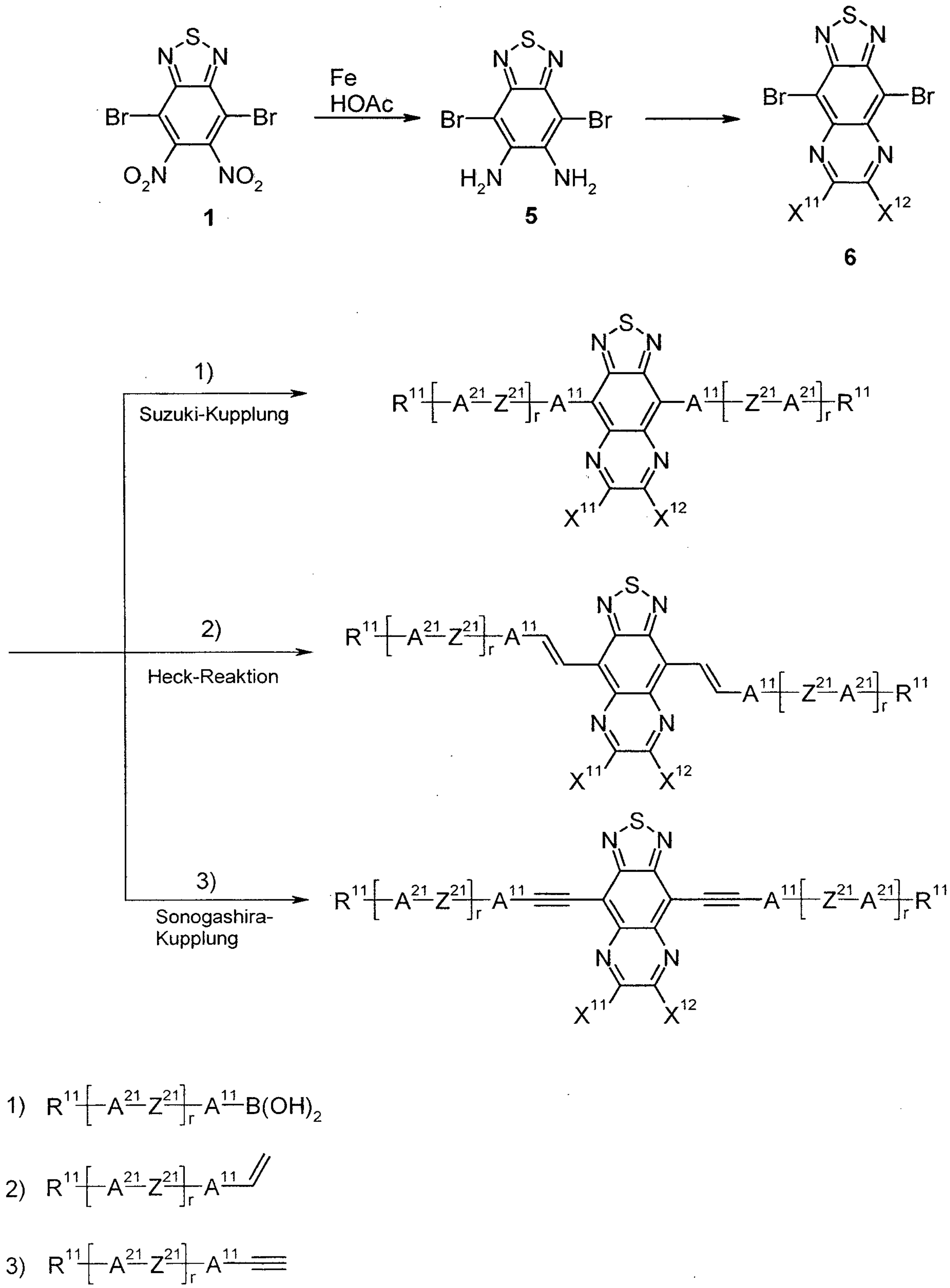
Fe
HOAc
1
5
6
1)
Suzuki-Kupplung
2)
Heck-Reaktion
3)
Sonogashira-Kupplung
1)
2)
3)

Schema 2

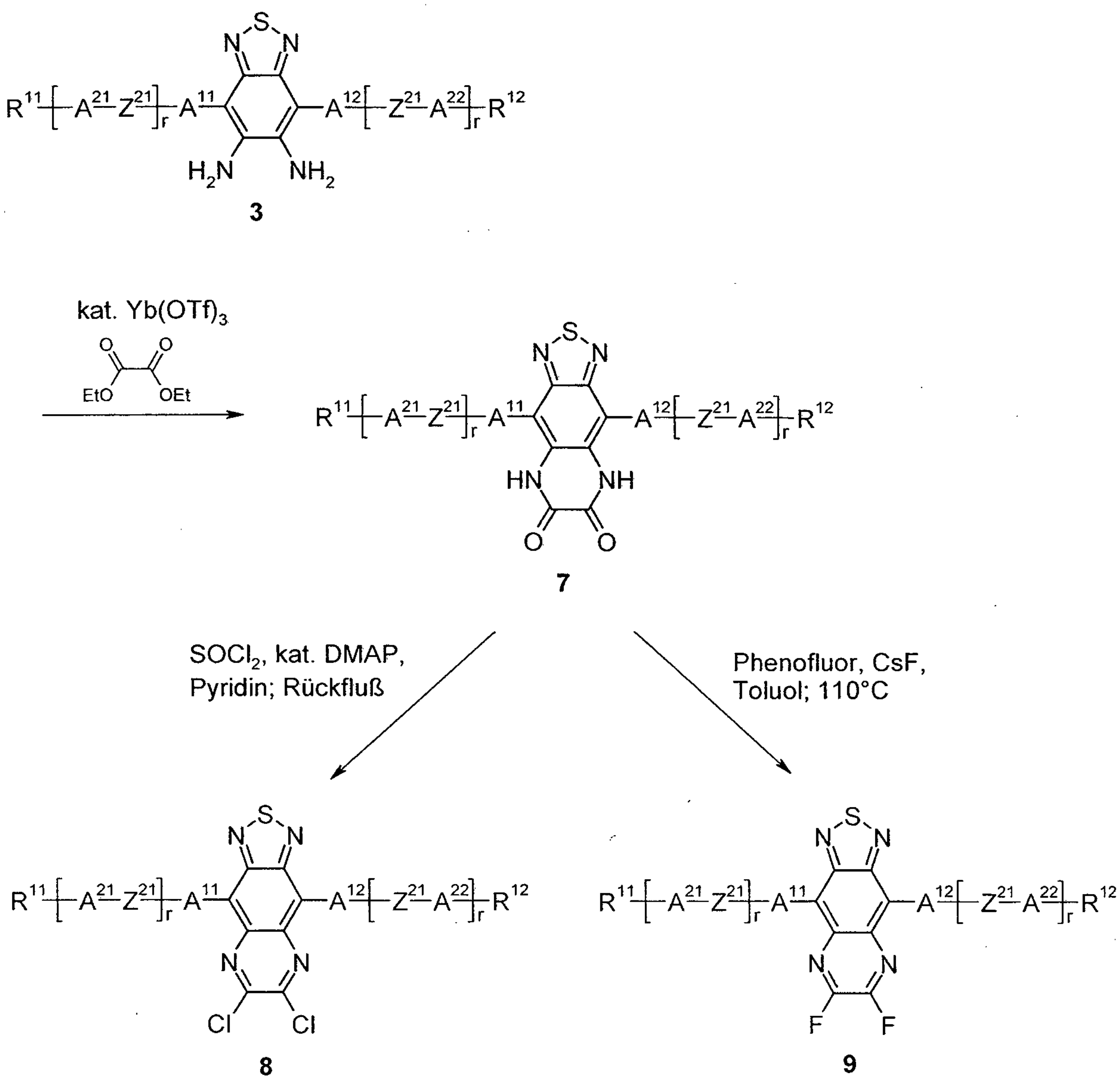


3

7

8

9

Schema 3.

Die Verbindung der Formel I ist bevorzugt ein positiv dichroitischer Farbstoff, d. h. ein Farbstoff, welcher einen positiven Anisotropiegrad R aufweist.

Der Anisotropiegrad R wird ermittelt, wie in den Ausführungsbeispielen angegeben, aus dem Wert für den Extinktionskoeffizienten der FK-Mischung enthaltend den Farbstoff bei Ausrichtung der Moleküle parallel zur Polarisationsrichtung des Lichts und dem Wert für den Extinktionskoeffizienten bei senkrechter Ausrichtung der Moleküle zur Polarisationsrichtung des Lichts.

Besonders bevorzugt ist der Anisotropiegrad R größer als 0,4, ganz besonders bevorzugt größer als 0,6 und am stärksten bevorzugt größer als 0,7.

Bevorzugt erreicht die Absorption ein Maximum, wenn die Polarisationsrichtung des Lichts parallel zur Richtung der längsten Ausdehnung des Moleküls gemäß Formel I ist, und sie erreicht ein Minimum, wenn die Polarisationsrichtung des Lichts senkrecht zur Richtung der längsten Ausdehnung des Moleküls gemäß Formel I ist.

Weiterhin bevorzugt ist die Verbindung der Formel I ein fluoreszierender Farbstoff. Unter Fluoreszenz wird dabei verstanden, daß eine Verbindung durch Absorption von Licht einer bestimmten Wellenlänge in einen elektronisch angeregten Zustand versetzt wird, wobei die Verbindung anschließend unter Emission von Licht in den Grundzustand übergeht. Bevorzugt hat das emittierte Licht längere Wellenlänge als das absorbierte Licht. Weiterhin bevorzugt ist der Übergang vom angeregten Zustand in den Grundzustand Spin-erlaubt, erfolgt also ohne Änderung des Spins. Weiterhin bevorzugt ist die Lebensdauer des angeregten Zustands der fluoreszierenden Verbindung kürzer als $10^{-5}$ s, besonders bevorzugt kürzer als $10^{-6}$ s, ganz besonders bevorzugt zwischen $10^{-9}$ und $10^{-7}$ s.

Gegenstand der vorliegenden Erfindung sind auch flüssigkristalline Medien enthaltend neben einer oder mehreren erfindungsgemäßen Verbindungen der Formel I als weitere Bestandteile 2 bis 40, vorzugsweise 4 bis 30 Komponenten. Besonders bevorzugt enthalten diese Medien neben einer oder mehreren erfindungsgemäßen Verbindungen 7 bis 25 Komponenten. Diese weiteren Bestandteile werden vorzugsweise ausgewählt aus nematischen oder nematogenen (monotropen oder isotropen) Substanzen, insbesondere Substanzen aus den Klassen der Azoxybenzole, Benzylidenaniline, Biphenyle, Terphenyle, 1,3-Dioxane, 2,5-Tetrahydropyrane, Phenyl- oder Cyclohexylbenzoate, Cyclohexancarbonsäurephenyl- oder-cyclohexylester, Phenyl- oder Cyclohexylester der Cyclohexylbenzoesäure, Phenyl- oder Cyclohexylester der Cyclohexylcyclohexancarbonsäure, Cyclohexylphenylester der Benzoesäure, der Cyclohexancarbonsäure, bzw. der Cyclohexylcyclohexancarbonsäure, Phenylcyclohexane, Cyclohexylbiphenyle, Phenylcyclohexylcyclohexane, Cyclohexylcyclohexane, Cyclohexylcyclohexylcyclohexene, 1,4-Biscyclohexylbenzole, 4',4'-Biscyclohexylbiphenyle, Phenyl- oder Cyclohexylpyrimidine, Phenyl- oder Cyclohexylpyridine, Phenyl- oder Cyclohexyldioxane, Phenyl- oder Cyclohexyl-1,3-dithiane, 1,2-Diphenylethane, 1,2-Dicyclohexylethane, 1-Phenyl-2-cyclohexylethane, 1-Cyclohexyl-2-(4-phenylcyclohexyl)ethane, 1-Cyclohexyl-2-biphenylethane, 1-Phenyl-2-cyclohexylphenylethane, gegebenenfalls halogenierten Stilbene, Benzylphenylether, Tolane und substituierten Zimtsäuren. Die 1,4-Phenylengruppen in diesen Verbindungen können auch einfach oder mehrfach fluoriert sein.

Die wichtigsten als weitere Bestandteile erfindungsgemäßer Medien in Frage kommenden Verbindungen lassen sich durch die Formeln (IV), (V), (VI), (VII) und (VIII) charakterisieren:

R'-L-E-R" (IV)

R'-L-COO-E-R" (V)

R'-L-OOC-E-R" (VI)

R'-L-$CH_2CH_2$-E-R" (VII)

R'-L-$CF_2O$-E-R" (VIII)

In den Formeln (IV), (V), (VI), (VII) und (VIII) bedeuten L und E, die gleich oder verschieden sein können, jeweils unabhängig voneinander einen bivalenten Rest aus der aus -Phe-, -Cyc-, -Phe-Phe-, -Phe-Cyc-, -Cyc-Cyc-, -Pyr-, -Dio-, -Thp-, -G-Phe- und -G-Cyc- sowie deren Spiegelbilder gebildeten Gruppe, wobei Phe unsubstituiertes oder durch Fluor substituiertes 1,4-Phenylen, Cyc trans-1,4-Cyclohexylen oder 1,4-Cyclohexenylen, Pyr Pyrimidin-2,5-diyl oder Pyridin-2,5-diyl, Dio 1,3-Dioxan-2,5-diyl, Thp Tetrahydropyran-2,5-diyl und G 2-(trans-1,4-Cyclohexyl)-ethyl, Pyrimidin-2,5-diyl, Pyridin-2,5-diyl, 1,3-Dioxan-2,5-diyl oder Tetrahydropyran-2,5-diyl bedeuten.

Vorzugsweise ist einer der Reste L und E Cyc oder Phe. E ist vorzugsweise Cyc, Phe oder Phe-Cyc. Vorzugsweise enthalten die erfindungsgemäßen Medien eine oder mehrere Komponenten ausgewählt aus den Verbindungen der Formeln (IV), (V), (VI), (VII) und (VIII), worin L und E ausgewählt sind aus der Gruppe Cyc und Phe und gleichzeitig eine oder mehrere Komponenten ausgewählt aus den Verbindungen der Formeln (IV), (V), (VI), (VII) und (VIII), worin einer der Reste L und E ausgewählt ist aus der Gruppe Cyc und Phe und der andere Rest ausgewählt ist aus der Gruppe -Phe-Phe-, -Phe-Cyc-, -Cyc-Cyc-, -G-Phe- und -G-Cyc-, und gegebenenfalls eine oder mehrere Komponenten ausgewählt aus den Verbindungen der Formeln (IV), (V), (VI), (VII) und (VIII), worin die Reste L und E ausgewählt sind aus der Gruppe -Phe-Cyc-, -Cyc-Cyc-, -G-Phe- und -G-Cyc-.

R' und R" bedeuten in einer kleineren Untergruppe der Verbindungen der Formeln (IV), (V), (VI), (VII) und (VIII) jeweils unabhängig voneinander Alkyl, Alkenyl, Alkoxy, Alkoxyalkyl (Oxaalkyl), Alkenyloxy oder Alkanoyloxy mit bis zu 8 C-Atomen. Im folgenden wird diese kleinere Untergruppe Gruppe A genannt und die Verbindungen werden mit den Teilformeln (IVa), (Va), (VIa), (VIIa) und (VIIIa) bezeichnet. Bei den meisten dieser Verbindungen sind R' und R" voneinander verschieden, wobei einer dieser Reste meist Alkyl, Alkenyl, Alkoxy oder Alkoxyalkyl (Oxaalkyl) ist.

In einer anderen als Gruppe B bezeichneten kleineren Untergruppe der Verbindungen der Formeln (IV), (V), (VI), (VII) und (VIII) bedeutet R" -F, -Cl, -NCS oder $-(O)_iCH_{3-k}F_k$, wobei i 0 oder 1 und k 1, 2 oder 3 ist. Die Verbindungen, in denen R" diese Bedeutung hat, werden mit den Teilformeln (IVb), (Vb), (VIb), (VIIb) und (VIIb) bezeichnet. Besonders bevorzugt sind solche Verbindungen der Teilformeln (IVb), (Vb), (VIb), (VIIb) und (VIIb), in denen R" die Bedeutung -F, -Cl, -NCS, $-CF_3$, $-OCHF_2$ oder $-OCF_3$ hat.

In den Verbindungen der Gruppe B, die mit den Teilformeln (IVb), (Vb), (VIb), (VIIb) und (VIIb) bezeichnet werden, hat R' die bei den Verbindungen der Teilformeln (IVa) bis (VIIIa) angegebene Bedeutung und ist vorzugsweise Alkyl, Alkenyl, Alkoxy oder Alkoxyalkyl (Oxaalkyl).

In einer weiteren kleineren Untergruppe der Verbindungen der Formeln (IV), (V), (VI), (VII) und (VIII) bedeutet R" -CN. Diese Untergruppe wird im Folgenden als Gruppe C bezeichnet und die Verbindungen dieser Untergruppe werden entsprechend mit Teilformeln (IVc), (Vc), (VIc), (VIIc) und (VIIIc) beschrieben. In den Verbindungen der Teilformeln (IVc), (Vc), (VIc), (VIIc) und (VIIIc) hat R' die bei den Verbindungen der Teilformeln (IVa) bis (VIIIa) angegebene Bedeutung und ist vorzugsweise Alkyl, Alkenyl, Alkoxy oder Alkoxyalkyl (Oxaalkyl).

Neben den bevorzugten Verbindungen der Gruppen A, B und C sind auch andere Verbindungen der Formeln (IV), (V), (VI), (VII) und (VIII) mit anderen Varianten der vorgesehenen Substituenten gebräuchlich. All diese Substanzen sind nach literaturbekannten Methoden oder in Analogie dazu erhältlich.

Die erfindungsgemäßen Medien enthalten neben den erfindungsgemäßen Verbindungen der allgemeinen Formel I vorzugsweise eine oder mehrere Verbindungen aus den Gruppen A, B und/oder C. Die Massenanteile der Verbindungen aus diesen Gruppen an den erfindungsgemäßen Medien betragen:

Gruppe A:
0 bis 90 %, vorzugsweise 20 bis 90 %, insbesondere 30 bis 90 %.
Gruppe B:
0 bis 80 %, vorzugsweise 10 bis 80 %, insbesondere 10 bis 70 %.
Gruppe C:
0 bis 80 %, vorzugsweise 5 bis 80 %, insbesondere 5 bis 50 %.

Die dichroitische Verbindung der Formel I liegt bevorzugt in einem Anteil von 0.01 bis 10 Gew.-%, besonders bevorzugt 0.05 bis 7 Gew.-% und ganz besonders bevorzugt 0.1 bis 7 Gew.-% in der Schaltschicht vor.
Die Medien enthalten vorzugsweise eine, zwei, drei, vier oder fünf erfindungsgemäße Verbindungen der Formel I.

Bevorzugt ist das erfindungsgemäße FK-Medium ein nematischer Flüssigkristall.

Die Herstellung der erfindungsgemäßen Medien erfolgt in an sich üblicher Weise. In der Regel werden die Komponenten ineinander gelöst, vorzugsweise bei erhöhter Temperatur. Vorzugsweise erfolgt das Mischen unter Inertgas, beispielsweise unter Stickstoff oder Argon. Anschließend werden eine oder mehrere Farbstoffe der Formel I und optional weitere dichroitische Farbstoffe hinzugegeben, bevorzugt bei erhöhter Temperatur, besonders bevorzugt bei mehr als 40 °C und ganz besonders bevorzugt bei mehr als 50 °C. In der Regel wird die gewünschte Menge der in geringerer Menge verwendeten Komponenten in der den Hauptbestandteil ausmachenden Komponenten gelöst,. Es ist auch möglich Lösungen der Komponenten in einem organischen Lösungsmittel, z.B. in Aceton, Toluol, Chloroform oder Methanol, zu mischen und das Lösungsmittel nach Durchmischung wieder zu entfernen, beispielsweise durch Destillation. Das Verfahren zur Herstellung der erfindungsgemäßen FK-Medien ist ein weiterer Gegenstand der Erfindung.

Weiterer Gegenstand der Erfindung ist die Verwendung eines FK-Mediums enthaltend mindestens eine Verbindung der Formel I in einer Flüssigkristallanzeige vom Guest-Host-Typ.

Weiterer Gegenstand der Erfindung ist eine Flüssigkristallanzeige vom Guest-Host-Typ enthalten ein FK-Medium, das mindestens eine Verbindung der Formel I enthält.

Weiterer Gegenstand der Erfindung ist die Verwendung einer Mischung, enthaltend ein flüssigkristallines Medium und mindestens eine Verbindung einer Formel I in einer Vorrichtung zur Regulierung des Energie-Durchtritts von einem Außenraum in einen Innenraum.

Die erfindungsgemäße Vorrichtung enthält bevorzugt in der Schaltschicht zusätzlich zu einer oder mehreren Verbindungen der Formel I, und bevorzugt einem flüssigkristallinen Medium, noch weitere dichroitische Farbstoffe mit anderer Struktur als Formel I. Besonders bevorzugt enthält sie einen, zwei, drei oder vier weitere Farbstoffe, ganz besonders bevorzugt zwei oder drei weitere Farbstoffe und am stärksten bevorzugt drei weitere Farbstoffe mit anderer Struktur als Formel I.

Bezüglich der Eigenschaft des Dichroismus gelten die für die Verbindung der Formel I beschriebenen bevorzugten Eigenschaften auch für die optionalen weiteren dichroitischen Farbstoffe als bevorzugt.

Die Absorptionsspektren der dichroitischen Farbstoffe der Schaltschicht ergänzen sich bevorzugt derart, daß für das Auge der Eindruck von schwarzer Farbe entsteht. Bevorzugt decken die zwei oder mehr dichroitischen Farbstoffe des erfindungsgemäßen flüssigkristallinen Mediums einen großen Teil des sichtbaren Spektrums ab. Wie genau eine Mischung von Farbstoffen hergestellt werden kann, die für das Auge schwarz bzw. grau erscheint, ist dem Fachmann bekannt und beispielsweise in Manfred Richter, Einführung in die Farbmetrik, 2. Auflage, 1981, ISBN 3-11-008209-8, Verlag Walter de Gruyter & Co., beschrieben.

Die Einstellung des Farbortes einer Mischung aus Farbstoffen wird im Rahmen der Farbmetrik beschrieben. Hierzu werden die Spektren der Einzelfarbstoffe unter Berücksichtigung des Lambert-Beer'schen Gesetzes zu einem Gesamtspektrum berechnet und unter der zugehörigen Beleuchtung, z.B. für Tageslicht die Lichtart D65, gemäß den Regeln der Farbmetrik in die entsprechenden Farborte und Helligkeitswerte umgerechnet. Die Lage des Weißpunktes ist durch die jeweilige Lichtart, z.B. D65 festgelegt und in Tabellen (z.B. obenstehende Literaturstelle) aufgeführt. Durch Änderung der Anteile der verschiedenen Farbstoffe lassen sich verschiedene Farborte einstellen.

Gemäß einer bevorzugten Ausführungsform enthält die Schaltschicht einen oder mehrere dichroitische Farbstoffe, die Licht im roten und NIR-Bereich, d.h. von 600 bis 2000 nm Wellenlänge absorbieren, bevorzugt im Bereich

von 650 bis 1800 nm, besonders bevorzugt im Bereich von 650 bis 1300 nm. In einer bevorzugten Ausführung sind diese dichroitischen Farbstoffe gewählt aus Azoverbindungen, Anthrachinonen, Methinverbindungen, Azomethinverbindungen, Merocyaninverbindungen, Naphthochinonen, Tetrazinen, Perylenen, Terrylenen, Quaterrylenen, höheren Rylenen, Pyrromethenen, Azofarbstoffen, Nickeldithiolenen, (Metall-)Phthalocyaninen, (Metall-)Naphthalocyaninen und (Metall-)Porphyrinen. Besonders bevorzugt sind darunter Perylene und Terrylene.

Die weiteren dichroitischen Farbstoffe der Schaltschicht mit anderer Struktur als Formel I sind bevorzugt gewählt aus den in B. Bahadur, Liquid Crystals - Applications and Uses, Vol. 3, 1992, World Scientific Publishing, Abschnitt 11.2.1 angegebenen Farbstoffklassen und besonders bevorzugt aus den in der dort vorhandenen Tabelle aufgeführten expliziten Verbindungen.

Die genannten Farbstoffe gehören zu den dem Fachmann bekannten Klassen von dichroitischen Farbstoffen, die vielfach in der Literatur beschrieben sind. So sind z.B. Anthrachinonfarbstoffe beschrieben in EP 34832, EP 44893, EP 48583, EP 54217, EP 56492, EP 59036, GB 2065158, GB 2065695, GB 2081736, GB 2082196, GB 2094822, GB 2094825, JP-OS 55-123673, DE 3017877, DE 3040102, DE 3115147, DE 3115762, DE 3150803 und DE 3201120, Naphthochinonfarbstoffe beschrieben in DE 3126108 und DE 3202761, Azofarbstoffe in EP 43904, DE 3123519, WO 82/2054, GB 2079770, JP-OS 56-57850, JP-OS 56-104984, US 4308161, US 4308162, US 4340973, T. Uchida, C. Shishido, H. Seki und M. Wada: Mol. Cryst. Liq. Cryst. 39, 39-52 (1977) und H. Seki, C. Shishido, S. Yasui und T. Uchida: Jpn. J. Appl. Phys. 21, 191-192 (1982), und Perylene beschrieben in EP 60895, EP 68427 und WO 82/1191. Rylen-Farbstoffe sind beispielsweise beschrieben in EP 2166040, US 2011/0042651, EP 68427, EP 47027, EP 60895, DE 3110960 und EP 698649.

Gemäß einer bevorzugten Ausführungsform enthält die Schaltschicht der erfindungsgemäßen Vorrichtung neben Verbindungen der Formel I ausschließlich dichroitische Farbstoffe gewählt aus Rylen-Farbstoffen.

Beispiele für bevorzugte weitere dichroitische Farbstoffe, die in der Schaltschicht der erfindungsgemäßen Vorrichtung enthalten sein können, sind in der folgenden Tabelle 1 abgebildet:

Tabelle 1

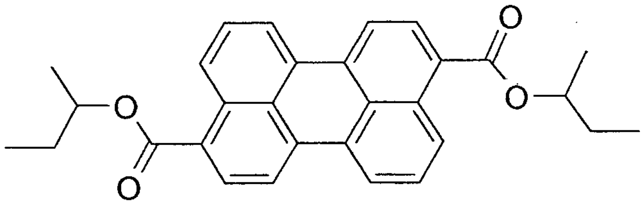

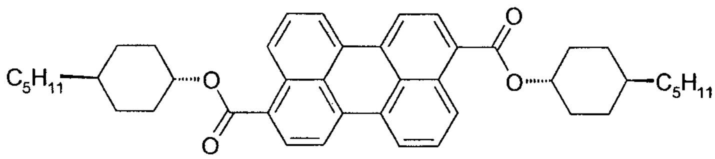

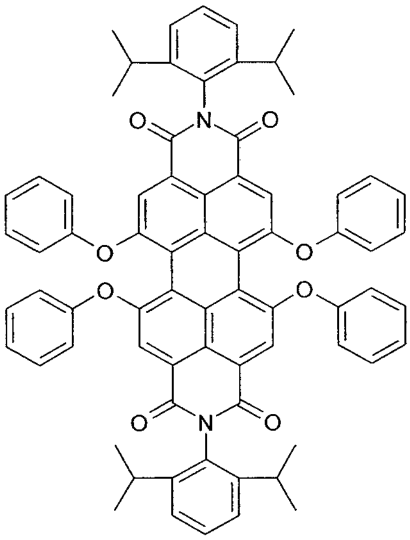

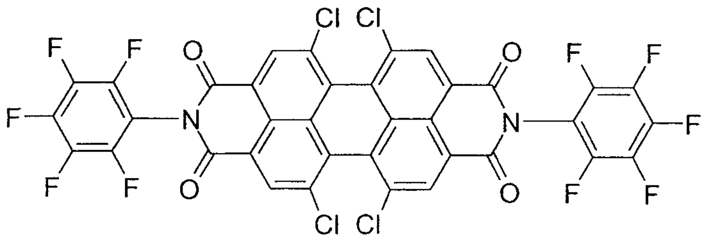

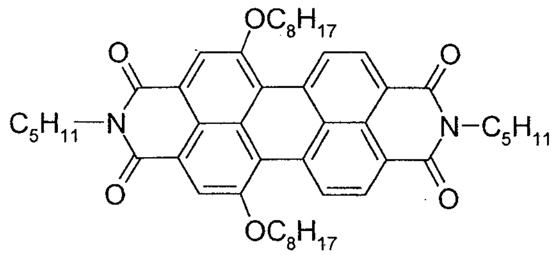

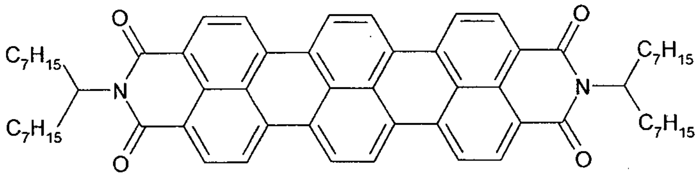

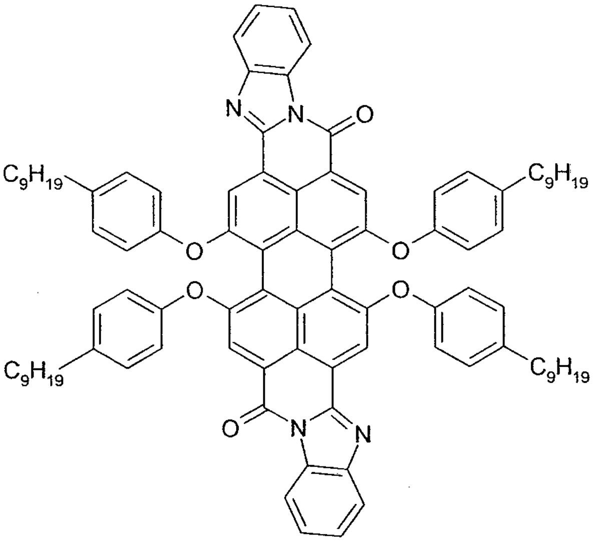

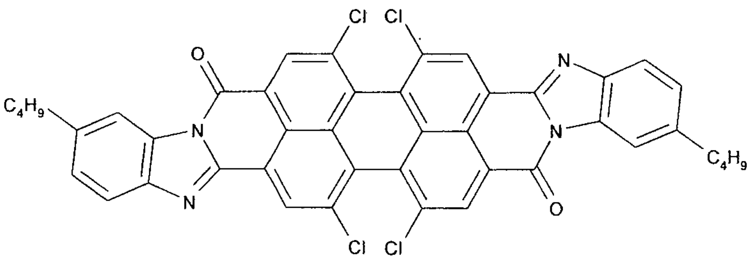

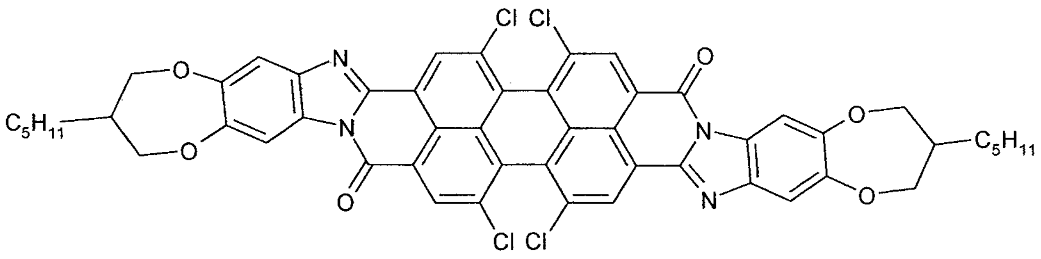

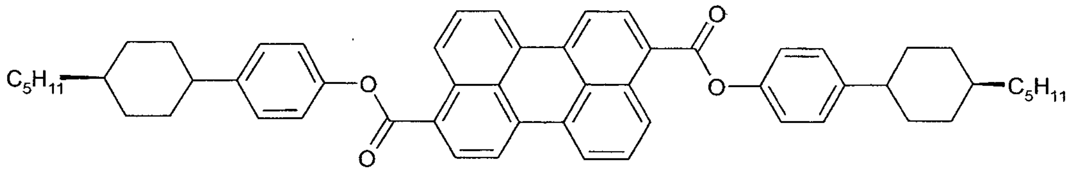

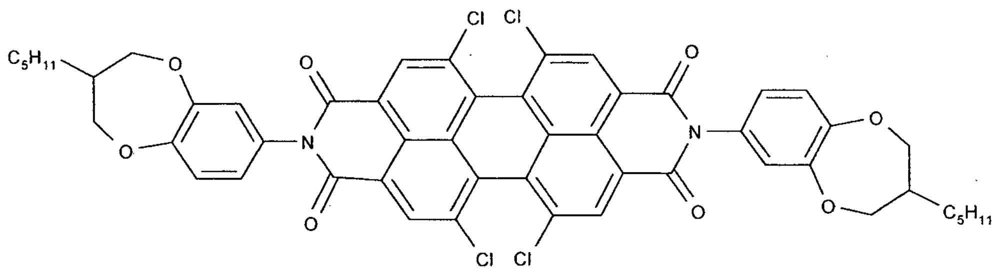

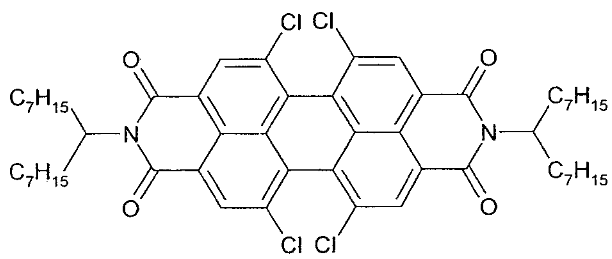

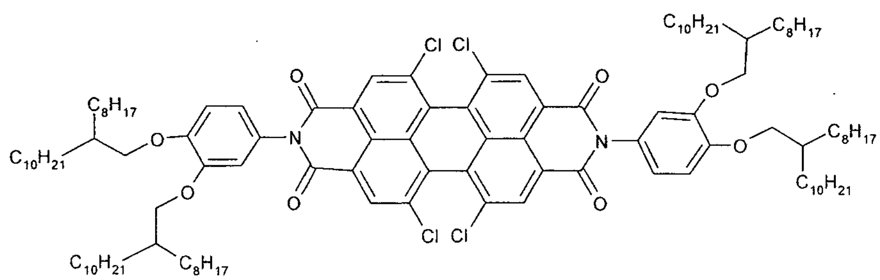

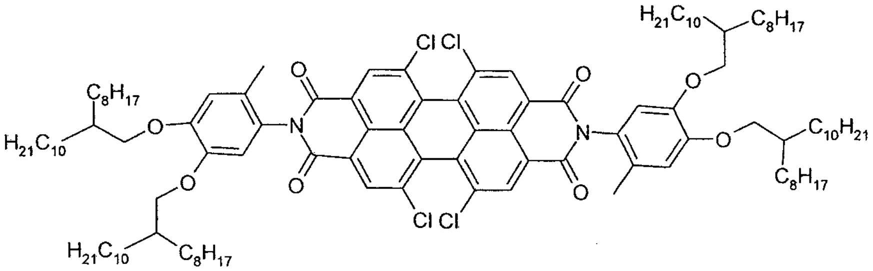

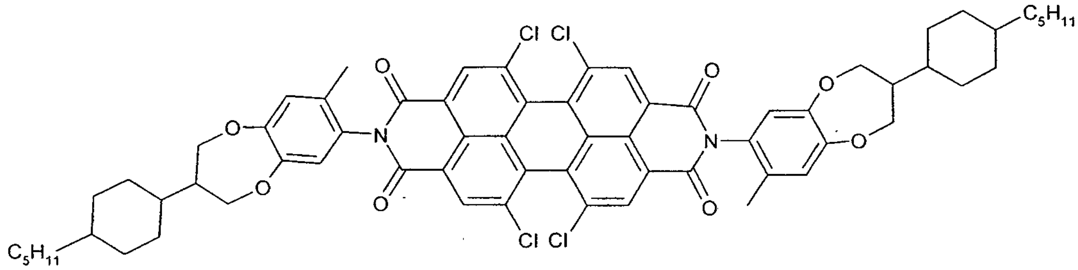

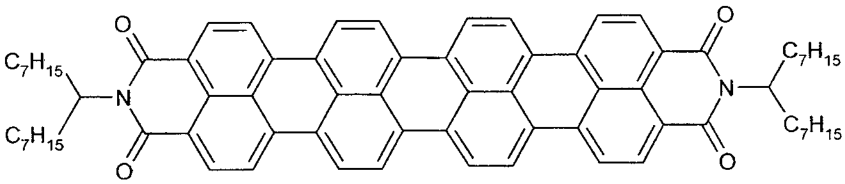

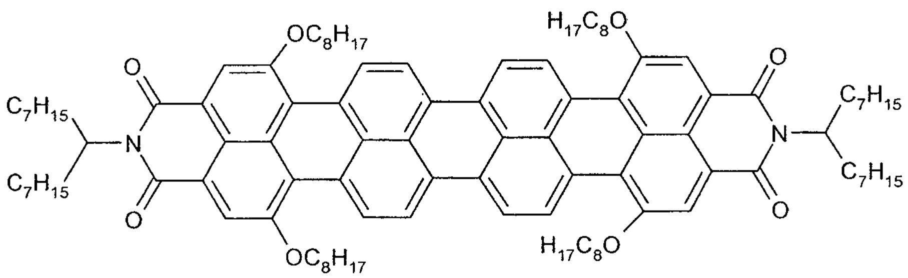

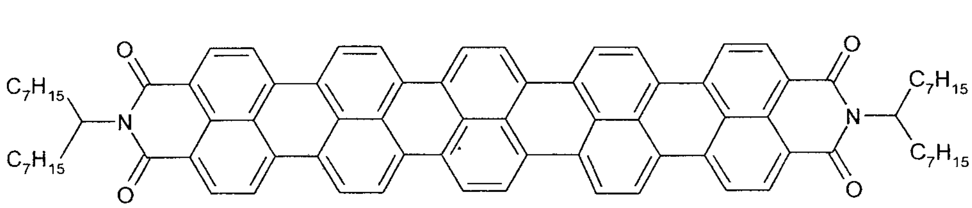

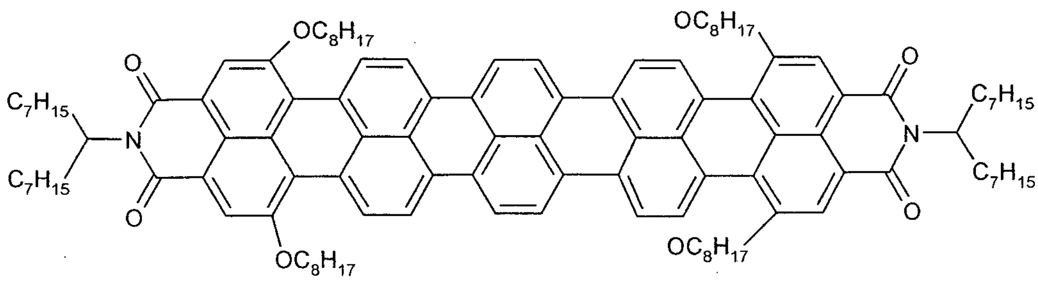

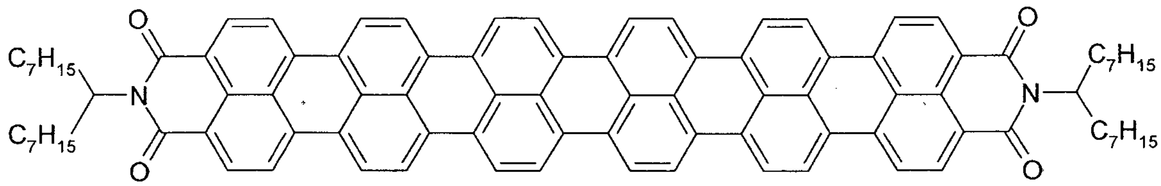

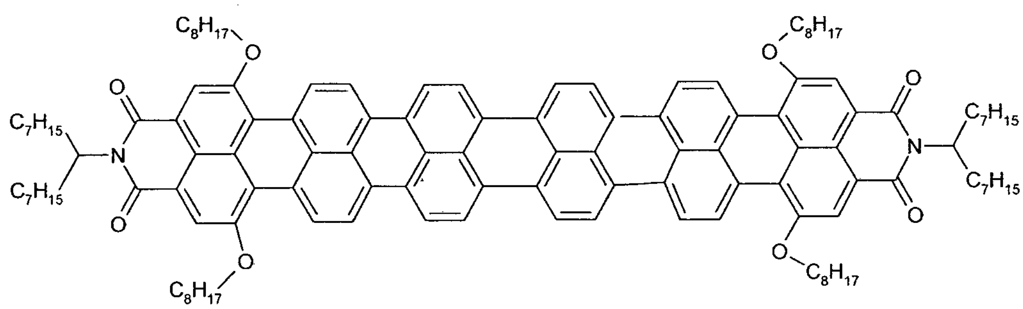

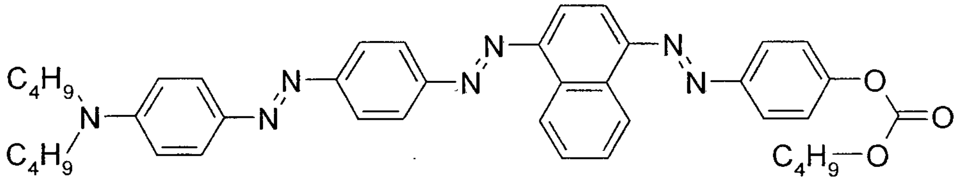

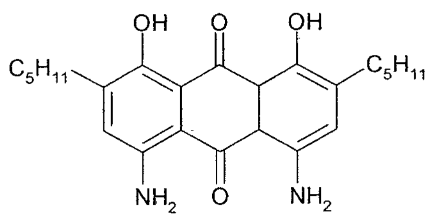

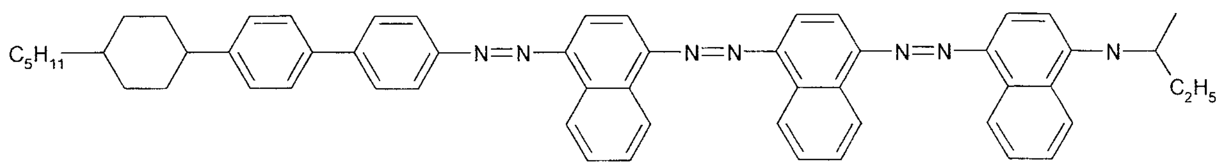

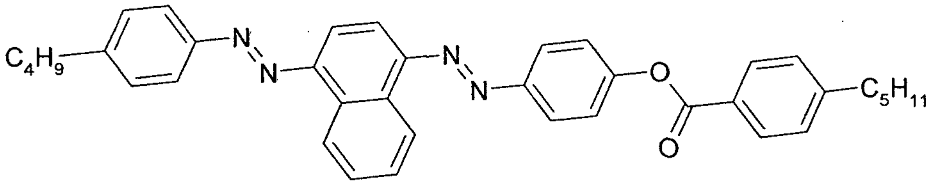

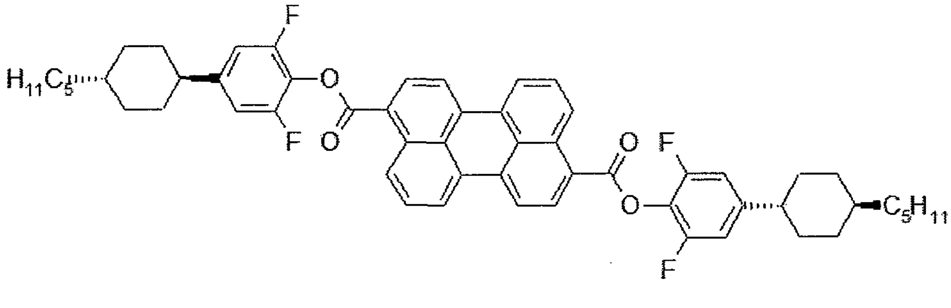

In einer bevorzugten Ausführungsform enthält die Schaltschicht der erfindungsgemäßen Vorrichtung eine oder mehrere Quencherverbindungen. Dies ist insbesondere dann bevorzugt, wenn die erfindungsgemäße Vorrichtung in ihrer Schaltschicht einen oder mehrere fluoreszierende Farbstoffe enthält.

Quencherverbindungen sind Verbindungen, welche die Fluoreszenz löschen. Die Quencherverbindungen können in der Schaltschicht die elektronische Anregungsenergie von Nachbarmolekülen, wie z.B. fluoreszierenden Farbstoffen, übernehmen und gehen dabei in einen elektronisch angeregten Zustand über. Der gequenchte fluoreszierende Farbstoff wechselt dadurch in den elektronischen Grundzustand und wird so an der Fluoreszenz oder einer Folgereaktion gehindert. Die Quencherverbindung selbst kehrt durch strahlungslose Desaktivierung oder durch Abgabe von Licht in den Grundzustand zurück und steht zum erneuten Quenchen wieder zur Verfügung.

In der Schaltschicht der erfindungsgemäßen Vorrichtung können der Quencherverbindung unterschiedliche Funktionen zukommen. Zum einen kann die Quencherverbindung zur Verlängerung der Lebensdauer eines Farbstoffsystems, durch Deaktivierung elektronischer Anregungsenergie, beitragen. Zum anderen eliminiert die Quencherverbindung ästhetisch ggf. unerwünschte zusätzliche Farbeffekte, z.B. farbiges Abstrahlen in den Innenraum, die von den fluoreszierenden Farbstoffen in der Schaltschicht ausgehen.

Um ein effektives Quenchen zu erzielen, ist die Quencherverbindung dem jeweiligen Farbstoffsystem, insbesondere dem am langwelligsten absorbierenden Farbstoff einer Farbstoffkombination, anzupassen. Wie dies zu tun ist, ist dem Fachmann bekannt.

Bevorzugte Quencherverbindungen sind beispielsweise in Tabelle 8.1 auf Seite 279 in Joseph R. Lakowicz, Principles of Fluorescence Spectroscopy, 3rd Edition, 2010, ISBN 10: 0-387-31278-1, Verlag Springer Science+Business Media LLC, beschrieben. Weitere Molekülklassen sind beispielsweise unter den Stichworten Dark-Quencher oder Black Hole Quencher dem Fachmann geläufig. Beispiele sind Azofarbstoffe und Aminoanthrachinone. In der Schaltschicht der erfindungsgemäßen Vorrichtung können als Quencherverbindungen auch nicht-fluoreszierende oder nur im NIR fluoreszierende Farbstoffe zum Einsatz kommen.

In einer bevorzugten Ausführungsform der erfindungsgemäßen Schaltschicht sind gegebenenfalls enthaltene Quencherverbindungen so gewählt, daß die Fluoreszenz im sichtbaren Teil des Spektrums unterdrückt wird.

Die erfindungsgemäße Vorrichtung ist bevorzugt zur Regulierung des Energie-Durchtritts in Form von Sonnenlicht aus der Umgebung in einen Innenraum geeignet. Dabei erfolgt der zu regulierende Energie-Durchtritt von der Umwelt (dem Außenraum) in einen Innenraum. Der Innenraum kann dabei ein beliebiger weitgehend von der Umgebung abgeschlossener Raum sein, beispielsweise ein Gebäude, ein Fahrzeug, oder ein Container.

Gegenstand der Erfindung ist daher weiterhin die Verwendung der Vorrichtung zur Regulierung des Energie-Durchtritts von einem Außenraum in einen Innenraum.

Die Vorrichtung kann jedoch auch zur ästhetischen Raumgestaltung eingesetzt werden, beispielsweise für Licht- und Farbeffekte. Beispielsweise können Tür- und Wandelemente enthaltend die erfindungsgemäße Vorrichtung in grau oder in Farbe nach transparent geschaltet werden. Des weiteren kann die Vorrichtung auch eine weiße oder farbige flächige Hinterleuchtung , die in der Helligkeit moduliert wird, oder eine gelbe flächige Hinterleuchtung, die mit einer blauen Gast-Wirtsanzeige in ihrer Farbe moduliert wird, umfassen. Es können eine oder beide Glasseiten der erfindungsgemäßen Vorrichtung mit angerauhtem oder strukturiertem Glas versehen sein zur Lichtauskopplung und/oder zur Lichteffekterzeugung.

In einer nochmals alternativen Verwendung wird die Vorrichtung zur Regulierung des Lichteinfalls auf die Augen

eingesetzt, beispielsweise in Schutzbrillen, Visieren oder Sonnenbrillen, wobei die Vorrichtung in einem Schaltzustand den Lichteinfall auf die Augen gering hält, und in einem anderen Schaltzustand den Lichteinfall weniger stark verringert.

Die erfindungsgemäße Vorrichtung ist bevorzugt in einer Öffnung einer größeren flächigen Struktur angeordnet, wobei die flächige Struktur selbst nicht oder nur geringfügig Energie-Durchtritt zuläßt, und wobei die Öffnung relativ gesehen energiedurchlässiger ist. Bevorzugt ist die flächige Struktur eine Wand oder eine sonstige Begrenzung eines Innenraums nach außen. Weiterhin bevorzugt bedeckt die flächige Struktur eine mindestens genauso große Fläche, besonders bevorzugt eine mindestens doppelt so große Fläche wie die Öffnung in ihr, in der die erfindungsgemäße Vorrichtung angeordnet ist.

Bevorzugt ist die Vorrichtung dadurch gekennzeichnet, daß sie eine Flächenausdehnung von mindestens 0,05 $m^2$ aufweist, bevorzugt mindestens 0,1 $m^2$, besonders bevorzugt mindestens 0,5 $m^2$ und ganz besonders bevorzugt mindestens 0,8 $m^2$.

Die Vorrichtung ist bevorzugt in einer wie oben beschriebenen, relativ gesehen energiedurchlässigeren Öffnung eines Gebäudes, eines Containers, eines Fahrzeugs oder eines sonstigen weitgehend geschlossenen Raums aufgebracht. Die Vorrichtung kann allgemein für beliebige Innenräume verwendet werden, besonders wenn diese nur begrenzten Luftaustausch mit der Umgebung aufweisen und lichtdurchlässige Begrenzungsflächen aufweisen, durch die EnergieEintrag von außen in Form von Lichtenergie stattfinden kann. Besonders relevant ist die Verwendung der Vorrichtung für Innenräume, welche starker Sonneneinstrahlung durch lichtdurchlässige Flächen, beispielsweise durch Fensterflächen, ausgesetzt sind.

Die erfindungsgemäße Vorrichtung ist schaltbar. Unter Schaltung wird dabei eine Änderung des Energie-Durchtritts durch die Vorrichtung verstanden. Die erfindungsgemäße Vorrichtung ist bevorzugt elektrisch schaltbar, wie beispielsweise in WO 2009/141295 und WO 2014/090373 beschrieben wird.

Sie kann aber auch thermisch schaltbar sein, wie beispielsweise in WO 2010/118422 beschrieben. In diesem Fall erfolgt das Schalten bevorzugt durch einen Übergang von einem nematischen zu einem isotropen Zustand durch Änderung der Temperatur der Schaltschicht enthaltend die Verbindung der Formel I und ein flüssigkristallines Medium. Im nematischen Zustand liegen die Moleküle des flüssigkristallinen Mediums geordnet vor und damit auch die Verbindung der Formel I, beispielsweise ausgerichtet parallel zur Oberfläche der Vorrichtung durch die Wirkung einer Orientierungsschicht. Im isotropen Zustand liegen die Moleküle ungeordnet vor, und damit auch die Verbindung der Formel I. Der Unterschied zwischen geordnetem und ungeordnetem Vorliegen der dichroitischen Verbindung der Formel I bewirkt einen Unterschied in der Lichtdurchlässigkeit der Schaltschicht der erfindungsgemäßen Vorrichtung, gemäß dem Prinzip, daß dichroitische Verbindungen je nach Orientierung in Bezug auf die Schwingungsebene des Lichts einen höheren oder einen niedrigeren Absorptionskoeffizienten aufweisen.

Ist die Vorrichtung elektrisch schaltbar, umfaßt sie bevorzugt zwei oder mehr Elektroden, die zu beiden Seiten der Schaltschicht angebracht sind. Die Elektroden bestehen bevorzugt aus ITO oder aus einer dünnen, bevorzugt transparenten Metall- und/oder Metalloxidschicht, beispielsweise aus Silber oder FTO (Fluor-dotiertes Zinnoxid) oder einem alternativen, dem Fachmann für diese Verwendung bekannten Material. Die Elektroden sind bevorzugt mit elektrischen Anschlüssen versehen. Die Spannung wird bevorzugt durch eine Batterie, einen Akkumulator, oder durch externe Stromversorgung bereitgestellt.

Der Schaltvorgang erfolgt im Fall von elektrischer Schaltung durch eine Ausrichtung der Moleküle des flüssigkristallinen Mediums durch das Anlegen von Spannung.

In einer bevorzugten Ausführungsform wird dabei die Vorrichtung von einem Zustand mit hoher Absorption, d. h. geringer Lichtdurchlässigkeit, der ohne Spannung vorliegt, in einen Zustand mit geringerer Absorption, d. h. höherer Lichtdurchlässigkeit, überführt. Bevorzugt ist das flüssigkristalline Medium der Schaltschicht in beiden Zuständen nematisch. Der spannungslose Zustand ist bevorzugt dadurch gekennzeichnet, daß die Moleküle des flüssigkristallinen Mediums, und damit die Moleküle der Verbindung der Formel I, parallel zur Ebene der Schaltschicht ausgerichtet vorliegen. Dies wird bevorzugt durch eine entsprechend gewählte Orientierungsschicht erreicht. Der Zustand unter Spannung ist bevorzugt dadurch gekennzeichnet, daß die Moleküle des flüssigkristallinen Mediums, und damit die Moleküle der Verbindung der Formel I, senkrecht zur Ebene der Schaltschicht vorliegen.

In einer zur oben genannten Ausführungsform alternativen Ausführungsform wird die Vorrichtung von einem Zustand mit geringer Absorption, d. h. hoher Lichtdurchlässigkeit, der ohne Spannung vorliegt, in einen Zustand mit höherer Absorption, d. h. geringerer Lichtdurchlässigkeit, überführt. Bevorzugt ist das flüssigkristalline Medium der Schaltschicht in beiden Zuständen nematisch. Der spannungslose Zustand ist bevorzugt dadurch gekennzeichnet, daß die Moleküle des flüssigkristallinen Mediums der Schaltschicht, und damit die Moleküle der Verbindung der Formel I, senkrecht zur Ebene der Schaltschicht ausgerichtet vorliegen. Dies wird bevorzugt durch eine entsprechend gewählte Orientierungsschicht erreicht. Der Zustand unter Spannung ist bevorzugt dadurch gekennzeichnet, daß die Moleküle des flüssigkristallinen Mediums der Schaltschicht, und damit die Moleküle der Verbindung der Formel I, parallel zur Ebene der Schaltschicht vorliegen.

Gemäß einer bevorzugten Ausführungsform der Erfindung kann die Vorrichtung ohne externe Stromversorgung betrieben werden, indem die nötige Energie durch eine Solarzelle oder eine sonstige Vorrichtung zur Umwandlung von

Licht und/oder Wärmeenergie in elektrische Energie bereitgestellt wird, die mit der Vorrichtung verbunden ist. Die Bereitstellung der Energie durch die Solarzelle kann direkt oder indirekt, d. h. über eine dazwischengeschaltete Batterie oder Akkumulator oder sonstige Einheit zur Speicherung von Energie, erfolgen. Bevorzugt ist die Solarzelle außen an der Vorrichtung angebracht oder sie ist innerer Bestandteil der Vorrichtung, wie beispielsweise in WO 2009/141295 offenbart. Bevorzugt sind dabei insbesondere Solarzellen, welche bei diffusem Licht besonders effizient sind, sowie transparente Solarzellen.

Die erfindungsgemäße Vorrichtung weist bevorzugt die folgende Schichtenabfolge auf, wobei zusätzlich weitere Schichten vorhanden sein können. Bevorzugt grenzen die im Folgenden angegebenen Schichten in der Vorrichtung direkt aneinander.

- Substratschicht, bevorzugt aus Glas oder Polymer
- elektrisch leitfähige transparente Schicht, bevorzugt aus ITO
- Orientierungsschicht
- Schaltschicht, enthaltend eine oder mehrere Verbindungen der Formel I
- Orientierungsschicht
- elektrisch leitfähige transparente Schicht, bevorzugt aus ITO
- Substratschicht, bevorzugt aus Glas oder Polymer

Die bevorzugten Ausführungsformen der einzelnen Schichten werden im Folgenden dargestellt.

Bevorzugt umfaßt die erfindungsgemäße Vorrichtung eine oder mehrere, besonders bevorzugt zwei Orientierungsschichten. Die Orientierungsschichten liegen bevorzugt direkt angrenzend an die beiden Seiten der Schaltschicht enthaltend die Verbindung der Formel I vor.

Als Orientierungsschichten der erfindungsgemäßen Vorrichtung können beliebige dem Fachmann hierzu bekannte Schichten verwendet werden. Bevorzugt sind Polyimid-Schichten, besonders bevorzugt Schichten aus geriebenem Polyimid. Auf bestimmte, dem Fachmann bekannte Art geriebenes Polyimid führt zu einer Ausrichtung der Moleküle des flüssigkristallinen Mediums in Reiberichtung, wenn die Moleküle parallel zur Orientierungsschicht vorliegen (planare Ausrichtung). Dabei ist es bevorzugt, daß die Moleküle des flüssigkristallinen Mediums nicht völlig planar auf der Orientierungsschicht vorliegen, sondern einen leichten Aufstellwinkel aufweisen (pretilt). Zum Erreichen von vertikaler Ausrichtung der Verbindungen des flüssigkristallinen Mediums zur Oberfläche der Orientierungsschicht (homöotrope Ausrichtung) wird bevorzugt auf bestimmte Art behandeltes Polyimid als Material für die Orientierungsschicht eingesetzt (Polyimid für sehr hohe Pretiltwinkel). Weiterhin können Polymere, die durch einen Belichtungsvorgang mit polarisiertem Licht erhalten wurden, als Orientierungsschicht zum Erreichen einer Ausrichtung der Verbindungen des flüssigkristallinen Mediums gemäß einer Orientierungsachse verwendet werden (photoalignment).

Weiterhin bevorzugt ist in der erfindungsgemäßen Vorrichtung die Schaltschicht zwischen zwei Substratschichten angeordnet bzw. von diesen eingeschlossen. Die Substratschichten können beispielsweise aus Glas oder einem Polymer, bevorzugt einem lichtdurchlässigen Polymer, bestehen.

Bevorzugt ist die Vorrichtung dadurch gekennzeichnet, daß sie keinen Polarisator auf Polymerbasis, besonders bevorzugt keinen in fester Materiephase vorliegenden Polarisator und ganz besonders bevorzugt überhaupt keinen Polarisator umfaßt.

Die Vorrichtung kann jedoch gemäß einer alternativen Ausführungsform auch einen oder mehrere Polarisatoren aufweisen. Bevorzugt sind die Polarisatoren in diesem Fall Linearpolarisatoren.

Wenn genau ein Polarisator vorhanden ist, so ist dessen Absorptionsrichtung bevorzugt senkrecht stehend zur Orientierungsachse der Verbindungen des flüssigkristallinen Mediums der erfindungsgemäßen Vorrichtung auf derjenigen Seite der Schaltschicht, auf der sich der Polarisator befindet.

In der erfindungsgemäßen Vorrichtung können sowohl absorptive als auch reflektive Polarisatoren eingesetzt werden. Bevorzugt werden Polarisatoren verwendet, die als dünne optische Filme vorliegen. Beispiele für reflektive Polarisatoren, die in der erfindungsgemäßen Vorrichtung verwendet werden können, sind DRPF- (diffusive reflective polariser film, 3M), DBEF- (dual brightness enhanced film, 3M), DBR- (layered-polymer distributed Bragg reflectors, wie in US 7,038,745 und US 6,099,758 beschrieben) und APF-Filme (advanced polariser film, 3M, vgl. Technical Digest SID 2006, 45.1, US 2011/0043732 und US 7,023,602). Weiterhin können Polarisatoren basierend auf Drahtgittern (WGP, wire-gridpolarisers), welche Infrarotlicht reflektieren, eingesetzt werden. Beispiele für absorptive Polarisatoren, welche in den erfindungsgemäßen Vorrichtungen eingesetzt werden können, sind der Itos XP38-Polarisatorfilm und der Nitto Denko GU-1220DUN-Polarisatorfilm. Ein Beispiel für einen circularen Polarisator, welcher erfindungsgemäß verwendet werden kann, ist der Polarisator APNCP37-035-STD (American Polarizers). Ein weiteres Beispiel ist der Polarisator CP42 (ITOS).

Weiterhin bevorzugt enthält erfindungsgemäße Vorrichtung ein Lichtleitsystem, das Licht zu einer Solarzelle oder einer sonstigen Vorrichtung zur Umwandlung von Licht und/oder Wärmeenergie in elektrische Energie leitet, bevorzugt wie in WO 2009/141295 beschrieben. Das Lichtleitsystem sammelt und konzentriert Licht, das auf die Vorrichtung

trifft. Bevorzugt sammelt und konzentriert es Licht, das von fluoreszierenden dichroitischen Farbstoffen in der Schaltschicht emittiert wird. Das Lichtleitsystem steht mit einer Vorrichtung zur Umwandlung von Lichtenergie in elektrische Energie, bevorzugt einer Solarzelle, in Kontakt, so daß das gesammelte Licht konzentriert auf diese trifft. In einer bevorzugten Ausführungsform der Erfindung ist die Vorrichtung zur Umwandlung von Lichtenergie in elektrische Energie am Rand der Vorrichtung angebracht, in diese integriert und elektrisch mit Mitteln zur elektrischen Schaltung der erfindungsgemäßen Vorrichtung verbunden.

In einer bevorzugten Ausführungsform ist die erfindungsgemäße Vorrichtung Bestandteil eines Fensters, besonders bevorzugt eines Fensters enthaltend mindestens eine Glasfläche, ganz besonders bevorzugt eines Fensters, welche Mehrscheiben-Isolierglas enthält.

Unter Fenster wird dabei insbesondere eine Struktur in einem Gebäude verstanden, welche einen Rahmen und mindestens eine von diesem Rahmen umfaßte Glasscheibe enthält. Bevorzugt enthält sie einen wärmeisolierenden Rahmen und zwei oder mehr Glasscheiben (Mehrscheiben-Isolierglas).

Gemäß einer bevorzugten Ausführungsform ist die erfindungsgemäße Vorrichtung direkt auf einer Glasfläche eines Fensters aufgebracht, besonders bevorzugt im Zwischenraum zwischen zwei Glasscheiben von Mehrscheiben-Isolierglas.

Ein Fenster enthaltend eine erfindungsgemäße Vorrichtung, bevorzugt mit den oben angegebenen bevorzugten Merkmalen, ist weiterer Gegenstand der Erfindung.

Aufgrund der elektronischen Eigenschaften der erfindungsgemäßen Verbindungen sind sie neben der Verwendung als Farbstoff auch als organische Halbleiter geeignet.

Weiterer Gegenstand der Erfindung ist daher die Verwendung von Verbindungen der Formel I in organischen elektronischen Bauelementen, wie beispielsweise organischen Leuchtdioden (OLED), organischen Feldeffekttransistoren (OFET), gedruckten Schaltungen, Radiofrequenz-Identifikationselementen (RFID), Beleuchtungselementen, photovoltaischen Vorrichtungen und optischen Sensoren.

Aufgrund ihrer Farbigkeit und guten Löslichkeit in organischen Materialien sind die erfindungsgemäßen Verbindungen hervorragend als Farbstoffe geeignet.

Ebenfalls Gegenstand der Erfindung ist daher die Verwendung von Farbstoffen der Formel I zum Anfärben eines Polymers.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschftskombinationen zugänglich sind.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste $C_nH_{2n+1}$ und $C_mH_{2m+1}$ sind geradkettige Alkylreste mit n bzw. m C-Atomen; n, m und k sind ganze Zahlen und bedeuten vorzugsweise 0, 1, 2, 3, 4, 5, 6, 7, 8, 9, 10, 11 oder 12. Die Codierung gemäß Tabelle B versteht sich von selbst. In Tabelle A ist nur das Akronym für den Grundkörper angegeben. Im Einzelfall folgt getrennt von Akronym für den Grundkörper mit einem Strich ein Code für die Substituenten $R^{1*}$, $R^{2*}$, $L^{1*}$ und $L^{2*}$:

| Code für $R^{1*}$, $R^{2*}$, $L^{1*}$ $L^{2*}$, $L^{3*}$ | $R^{1*}$ | $R^{2*}$ | $L^{1*}$ | $L^{2*}$ |
|---|---|---|---|---|
| nm | $C_nH_{2n+1}$ | $C_mH_{2m+1}$ | H | H |
| nOm | $C_nH_{2n+1}$ | $OC_mH_{2m+1}$ | H | H |
| nO.m | $OC_nH_{2n+1}$ | $C_mH_{2m+1}$ | H | H |
| n | $C_nH_{2n+1}$ | CN | H | H |
| nN | $C_nH_{2n+1}$ | CN | H | H |
| nN.F | $C_nH_{2n+1}$ | CN | F | H |
| nN.F.F | $C_nH_{2n+1}$ | CN | F | F |
| nF | $C_nH_{2n+1}$ | F | H | H |
| nCl | $C_nH_{2n+1}$ | Cl | H | H |
| nOF | $OC_nH_{2n+1}$ | F | H | H |
| nF.F | $C_nH_{2n+1}$ | F | F | H |
| nF.F.F | $C_nH_{2n+1}$ | F | F | F |
| $nOCF_3$ | $C_nH_{2n+1}$ | $OCF_3$ | H | H |
| $nOCF_3$.F | $C_nH_{2n+1}$ | $OCF_3$ | F | H |
| n-Vm | $C_nH_{2n+1}$ | $-CH=CH-C_mH_{2m+1}$ | H | H |
| nV-Vm | $C_nH_{2n+1}-CH=CH-$ | $-CH=CH-C_mH_{2m+1}$ | H | H |

In einer bevorzugten Ausführungsform der vorliegenden Erfindung enthalten die erfindungsgemäßen FK-Medien eine oder mehrere Verbindungen ausgewählt aus der Gruppe bestehend aus Verbindungen der Tabelle A und B.

**Tabelle A**

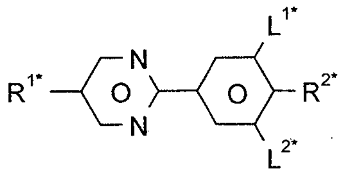

PYP

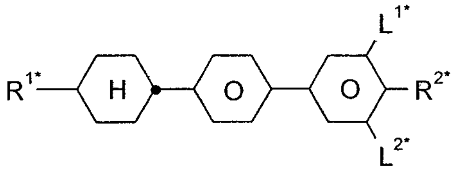

BCH

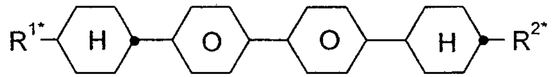

CBC

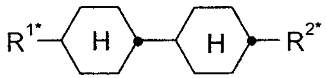

CCH

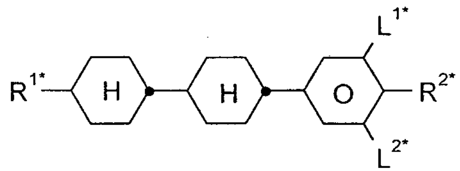

CCP

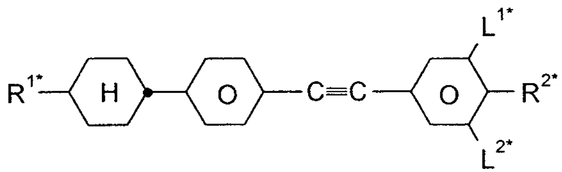

CPTP

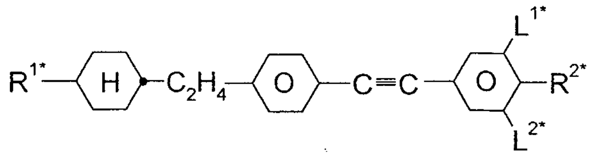

CEPTP

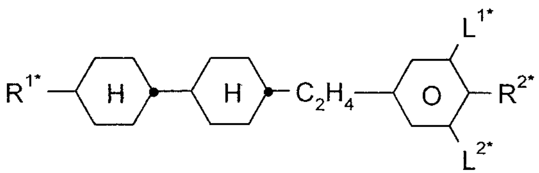

ECCP

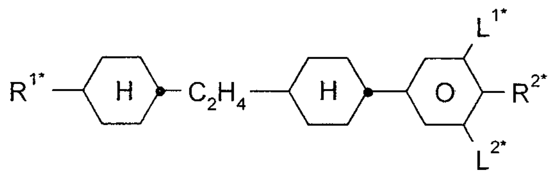

CECP

(fortgesetzt)

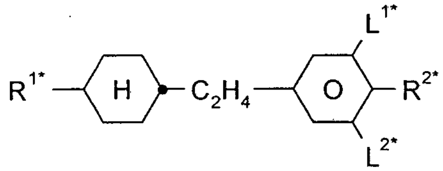

**EPCH**

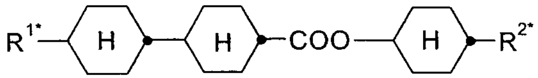

**CH**

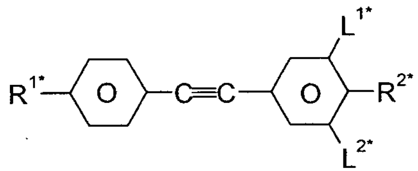

**PTP**

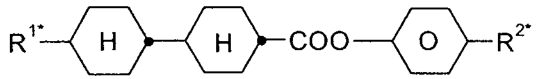

**CP**

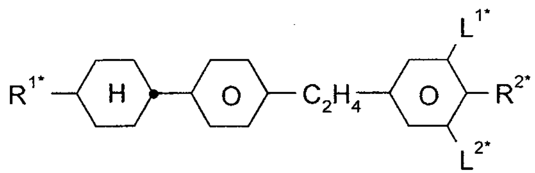

**EBCH**

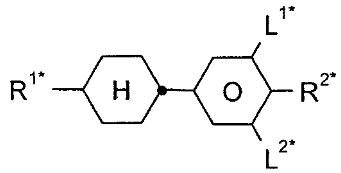

**PCH**

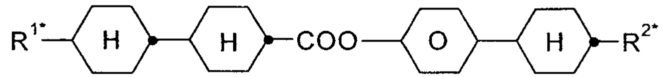

**CCZPC**

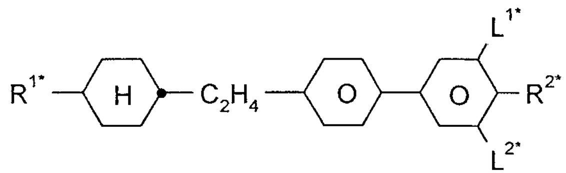

**BECH**

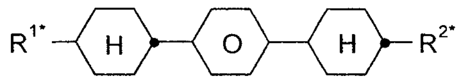

**CPC**

(fortgesetzt)

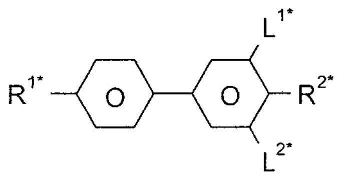

**B**

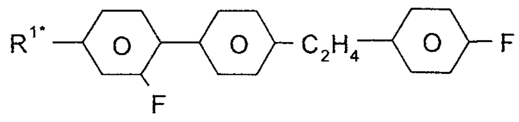

**FET-nF**

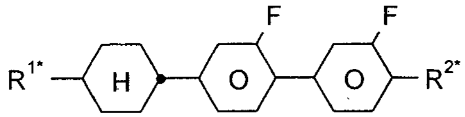

**CGG**

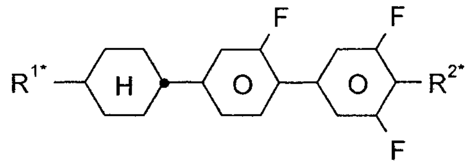

**CGU**

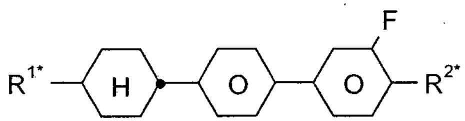

**CPG**

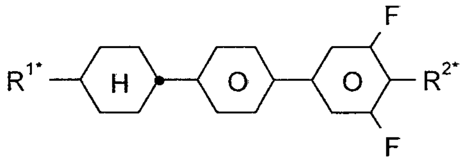

**CPU**

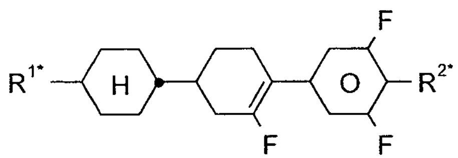

**CFU**

**Tabelle B**

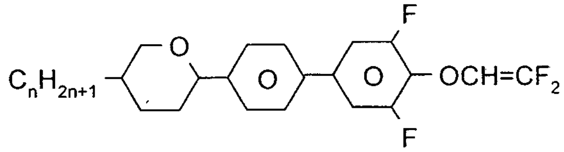

**APU-n-OXF**

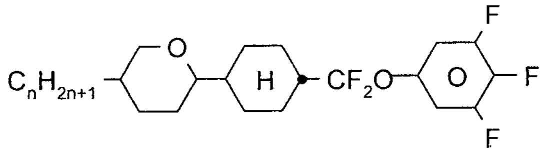

**ACQU-n-F**

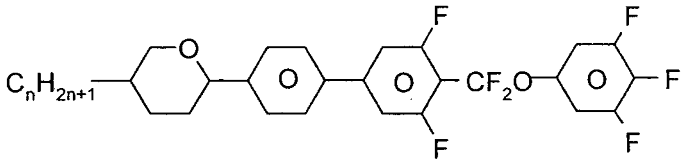

**APUQU-n-F**

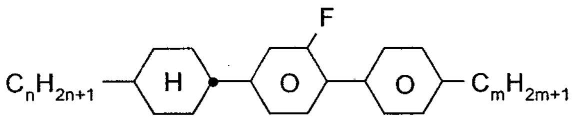

**BCH-n.Fm**

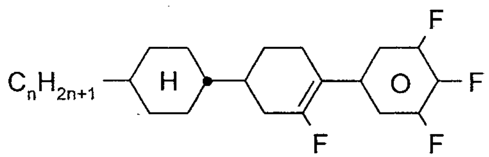

**CFU-n-F**

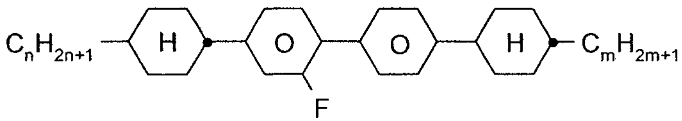

**CGPC**

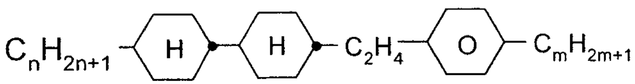

**ECCP-nm**

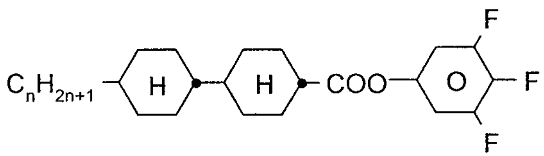

**CCZU-n-F**

(fortgesetzt)

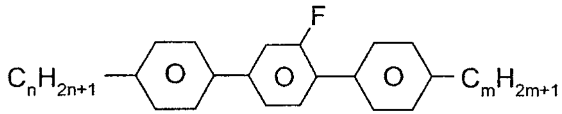

**PGP-n-m**

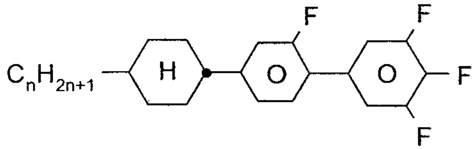

**CGU-n-F**

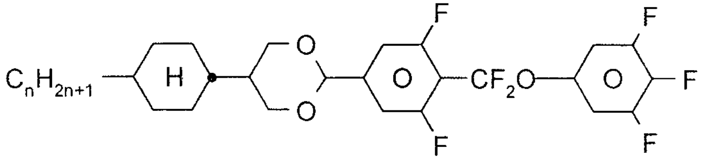

**CDUQU-n-F**

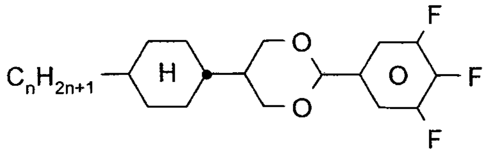

**CDU-n-F**

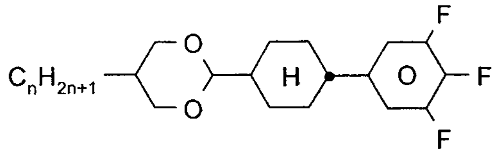

**DCU-n-F**

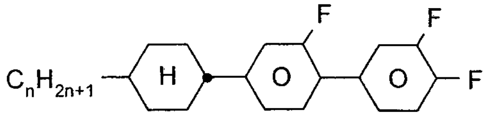

**CGG-n-F**

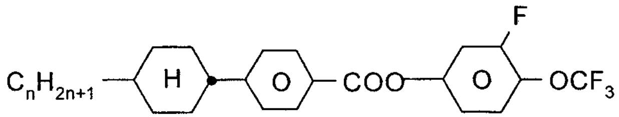

**CPZG-n-OT**

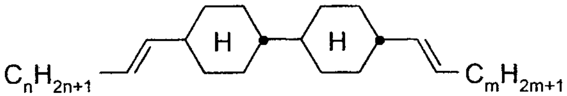

**CC-nV-Vm**

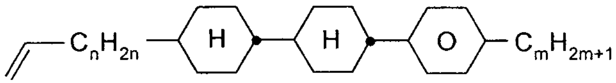

**CCP-Vn-m**

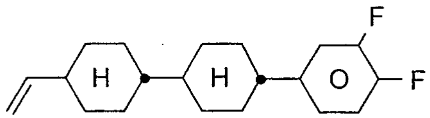

**CCG-V-F**

(fortgesetzt)

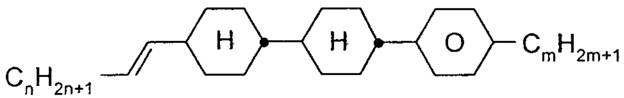

**CCP-nV-m**

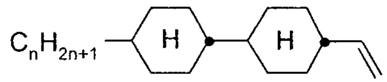

**CC-n-V**

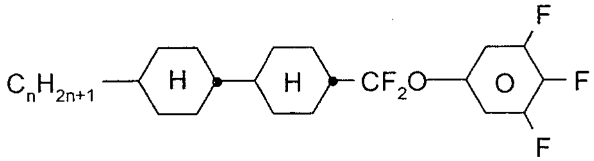

**CCQU-n-F**

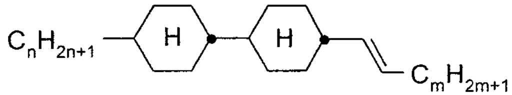

**CC-n-Vm**

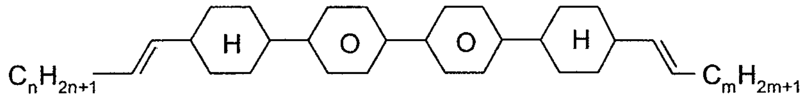

**CPPC-nV-Vm**

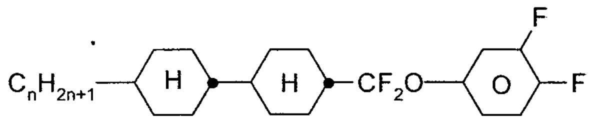

**CCQG-n-F**

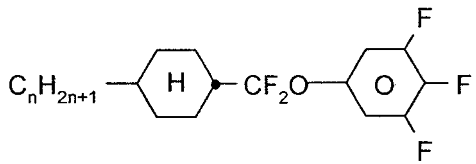

**CQU-n-F**

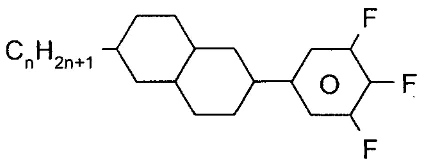

**Dec-U-n-F**

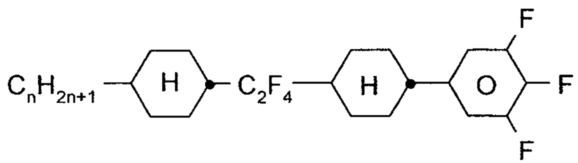

**CWCU-n-F**

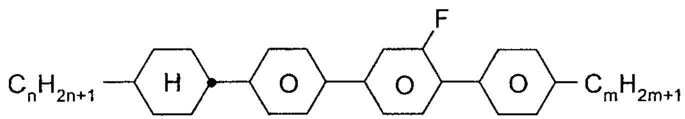

(fortgesetzt)

CPGP-n-m

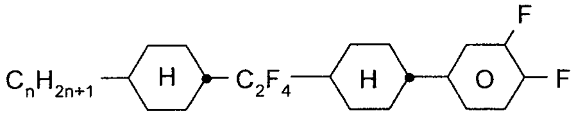

CWCG-n-F

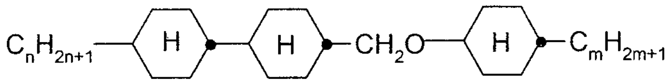

CCOC-n-m

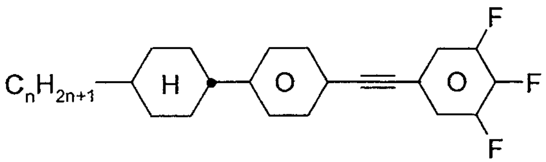

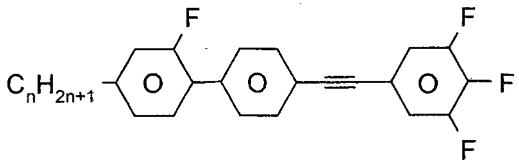

CPTU-n-F

GPTU-n-F

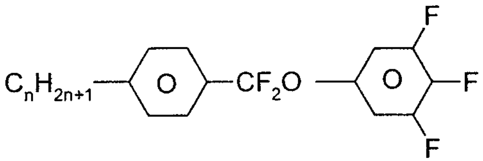

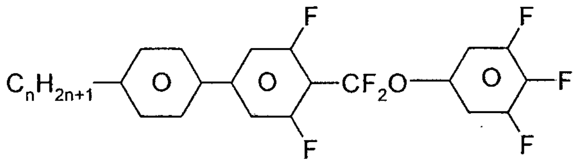

PQU-n-F

PUQU-n-F

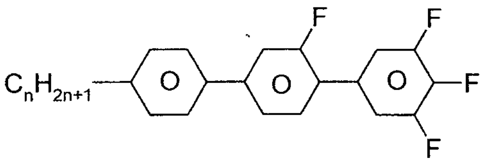

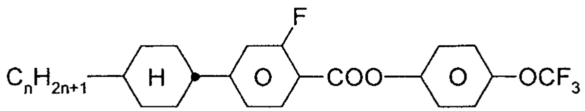

PGU-n-F

CGZP-n-OT

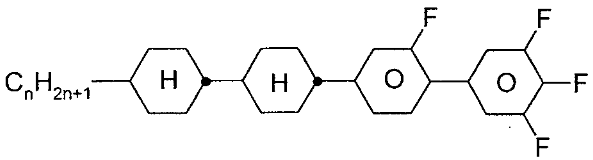

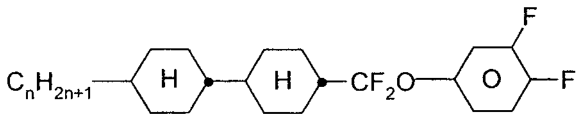

CCGU-n-F

CCQG-n-F

(fortgesetzt)

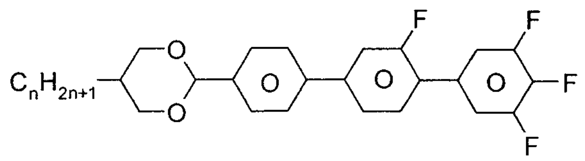

DPGU-n-F

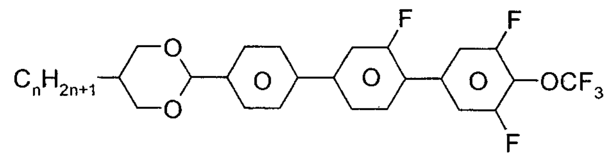

DPGU-n-OT

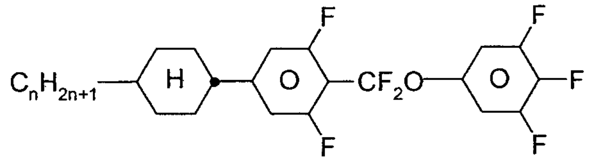

CUQU-n-F

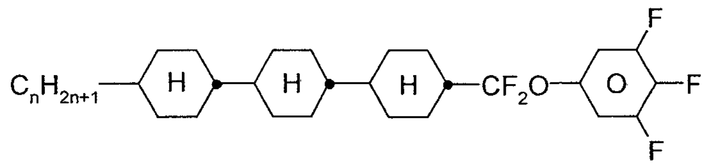

CCCQU-n-F

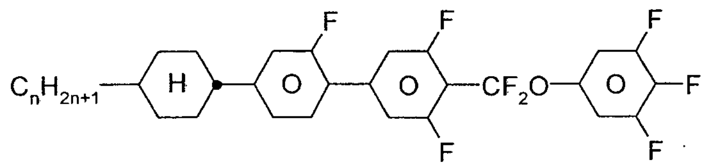

CGUQU-n-F

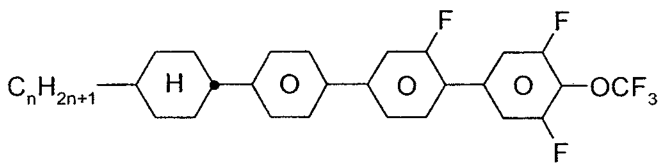

CPGU-n-OT

(fortgesetzt)

| | |
|---|---|
| 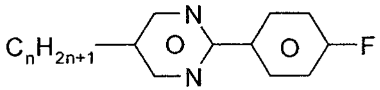 | 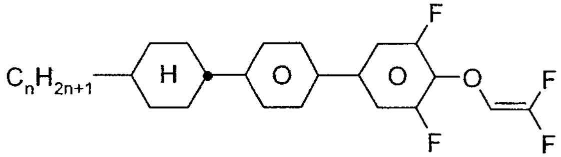 |
| **PYP-n-F** | **CPU-n-OXF** |
| 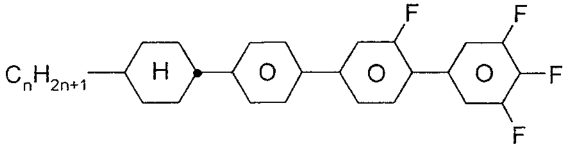 | 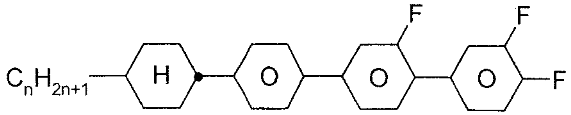 |
| **CPGU-n-F** | **CPGG-n-F** |
| 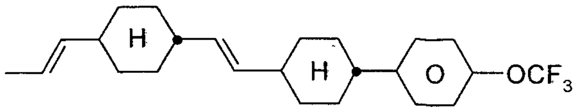 | 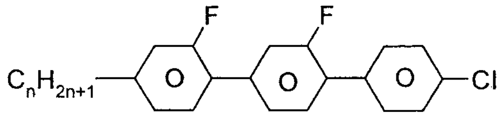 |
| **CVCP-1V-OT** | **GGP-n-Cl** |
| 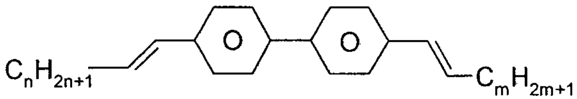 | 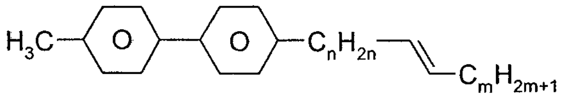 |
| **PP-nV-Vm** | **PP-1-nVm** |
| 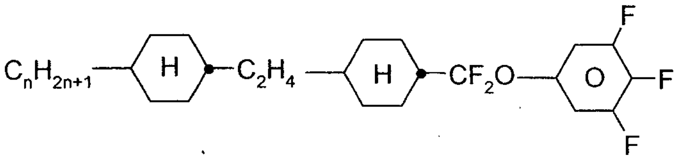 | |
| **CWCQU-n-F** | |
| 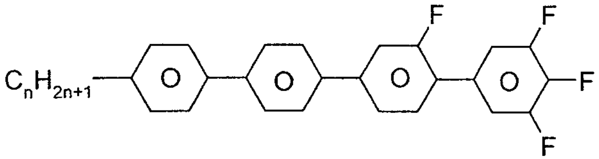 | |
| **PPGU-n-F** | |

(fortgesetzt)

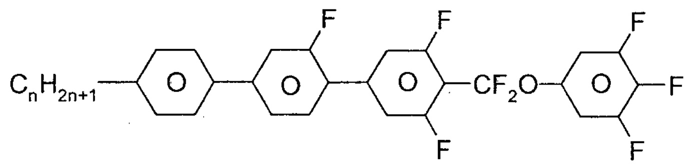

PGUQU-n-F

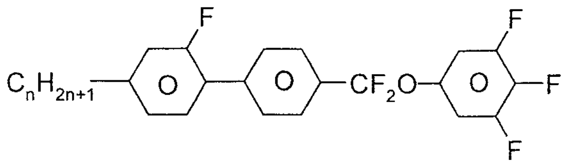

GPQU-n-F

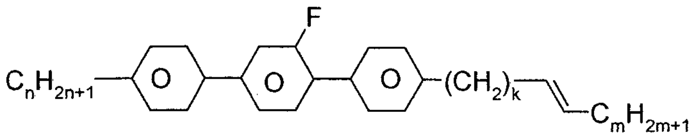

PGP-n-kVm

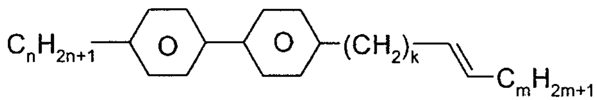

PP-n-kVm

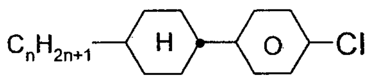

PCH-nCl

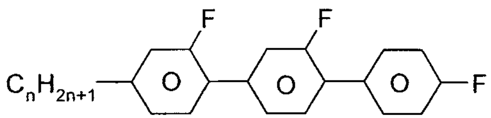

GGP-n-F

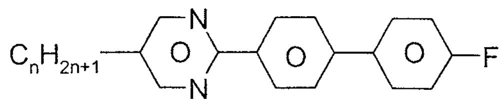

MPP-n-F

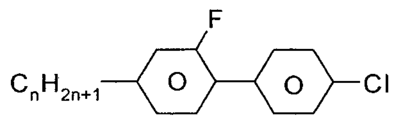

GP-n-Cl

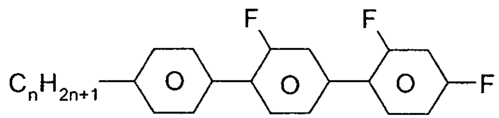

PGIGI-n-F

(fortgesetzt)

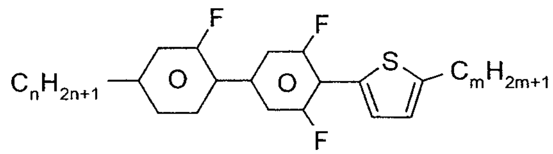

GUS-n-m

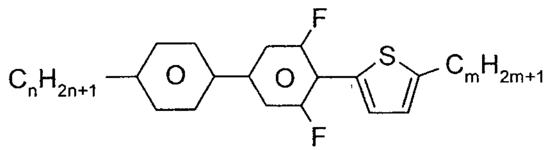

PUS-n-m

Es ist weiterhin bevorzugt, daß das flüssigkristalline Medium der Schaltschicht einen oder mehrere chirale Dotierstoffe enthält. Bevorzugt liegen in diesem Fall in der Schaltschicht der Vorrichtung die Moleküle des flüssigkristallinen Medium gegeneinander verdrillt vor, besonders bevorzugt wie aus dem TN-Modus von Displays bekannt.

Gemäß einer alternativen, ebenfalls bevorzugten Ausführungsform, enthält das flüssigkristalline Medium der Schaltschicht keine chiralen Dotierstoffe. Bevorzugt liegen in diesem Fall in der Schaltschicht der Vorrichtung die Moleküle des flüssigkristallinen Medium nicht gegeneinander verdrillt vor.

Vorzugsweise enthalten die FK-Medien 0 bis 10 Gew.%, insbesondere 0,01 bis 5 Gew.% und besonders bevorzugt 0,1 bis 3 Gew.% an Dotierstoffen. Vorzugsweise enthalten die FK-Medien einen oder mehrere Dotierstoffe ausgewählt aus der Gruppe bestehend aus Verbindungen der Tabelle C.

**Tabelle C**

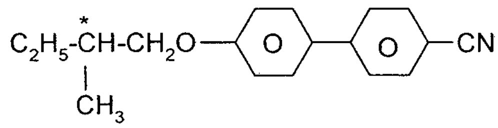

**C 15**

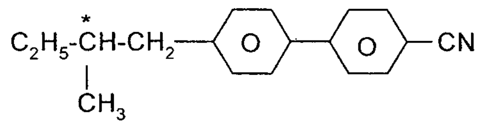

**CB 15**

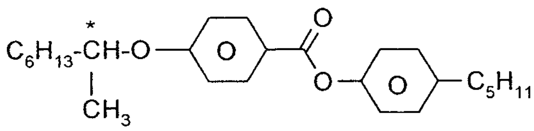

**CM 21**

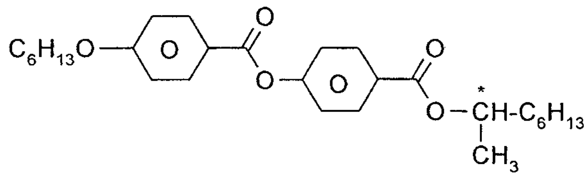

**R/S-811**

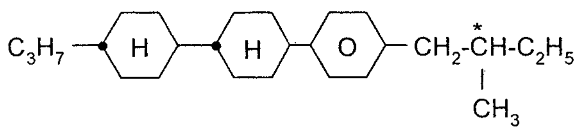

**CM 44**

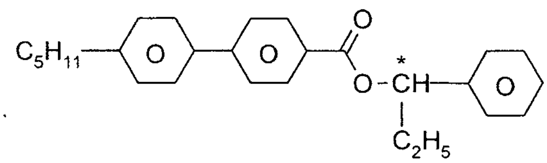

**CM 45**

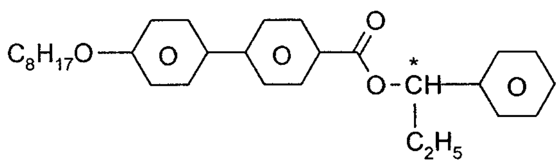

**CM 47**

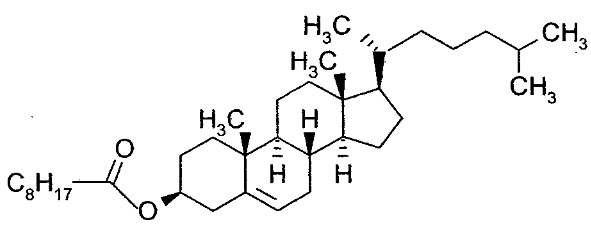

**CN**

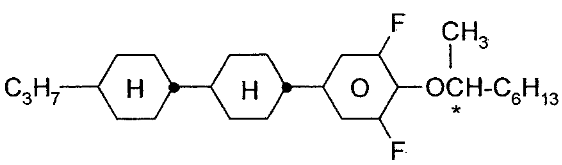

**R/S-2011**

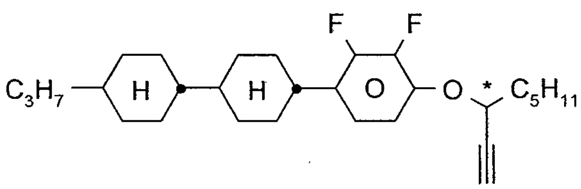

**R/S-3011**

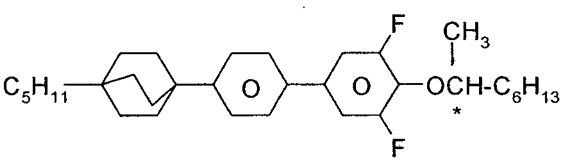

**R/S-4011**

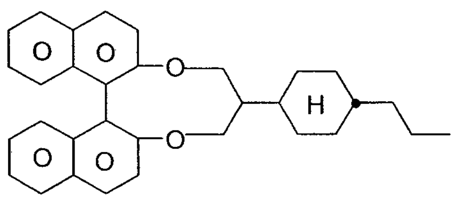

**R/S-5011**

(fortgesetzt)

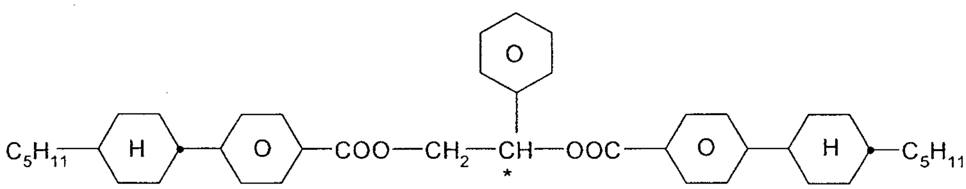

**R/S-1011**

In der Tabelle D werden mögliche Stabilisatoren angegeben, die den erfindungsgemäßen FK-Medien zugesetzt werden können.
(n bedeutet hier eine ganze Zahl von 1 bis 12). Vorzugsweise enthalten die FK-Medien 0 bis 10 Gew.%, insbesondere 0,01 bis 5 Gew.% und besonders bevorzugt 0,1 bis 3 Gew.% an Stabilisatoren. Vorzugsweise enthalten die FK-Medien einen oder mehrere Stabilisatoren ausgewählt aus der Gruppe bestehend aus Verbindungen der Tabelle D.

## Tabelle D

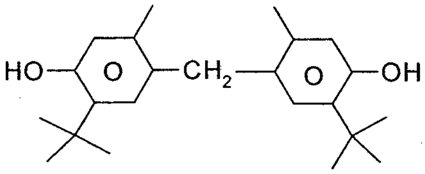

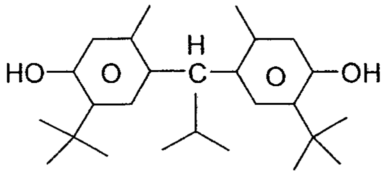

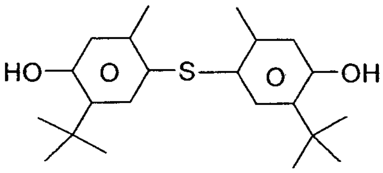

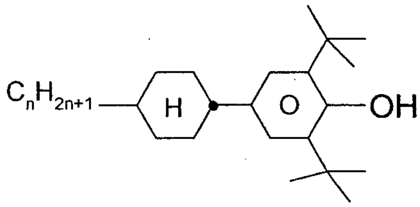

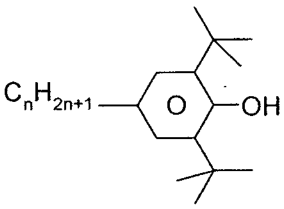

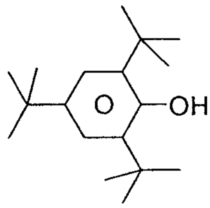

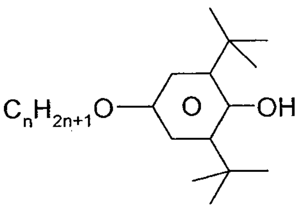

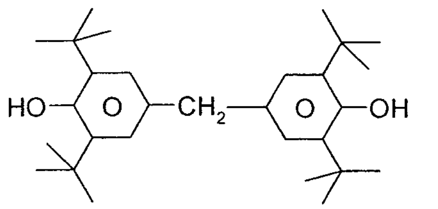

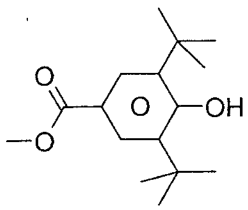

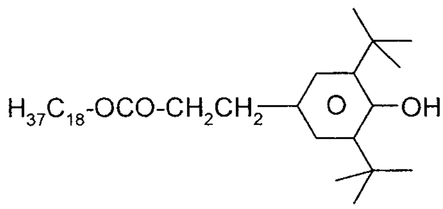

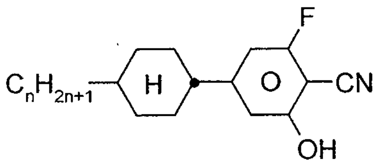

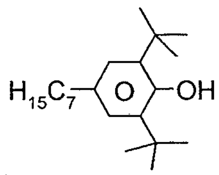

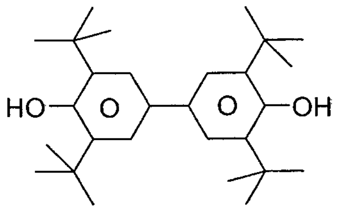

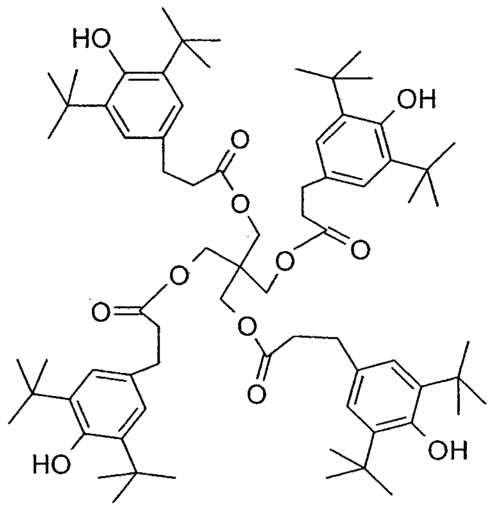

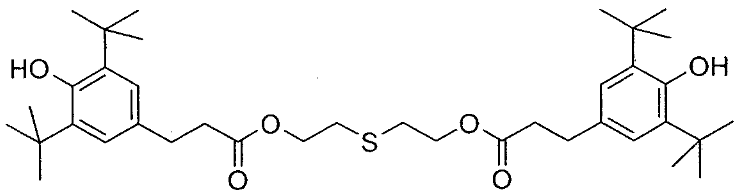

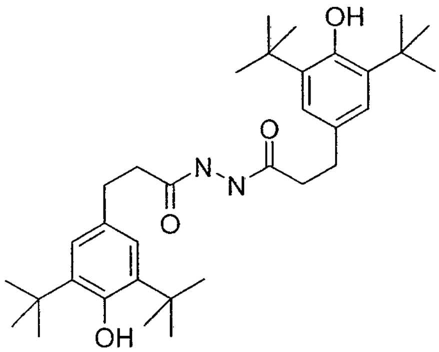

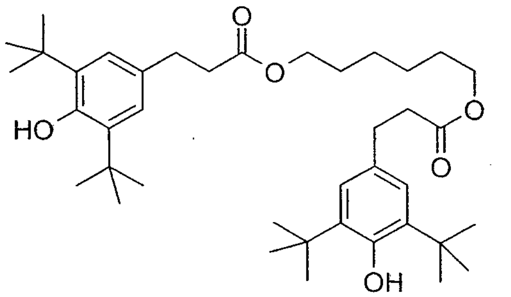

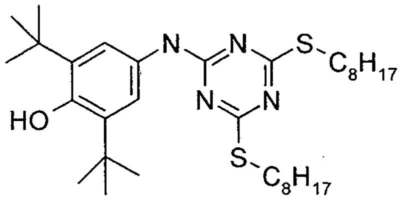

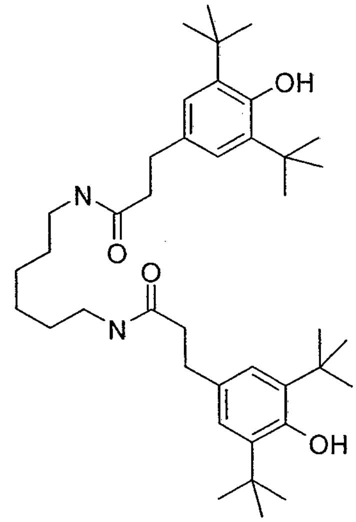

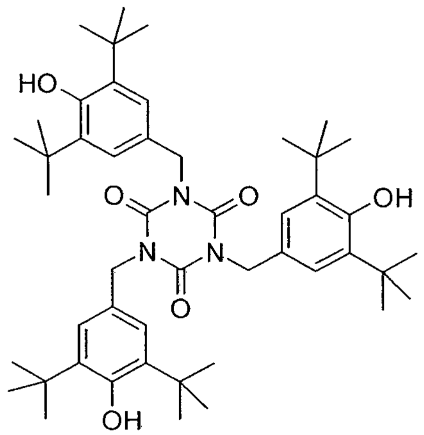

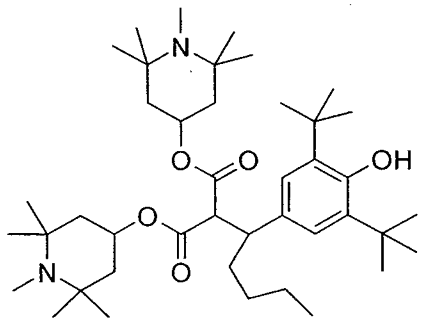

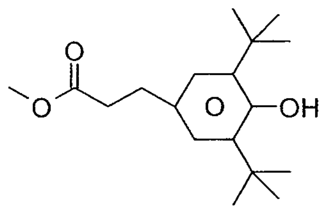

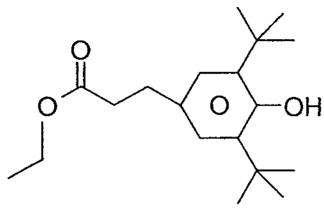

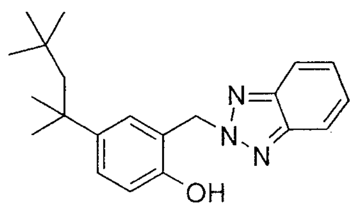

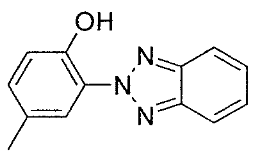

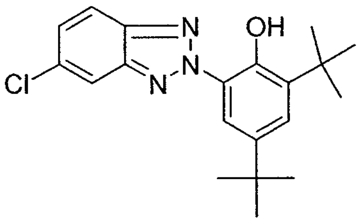

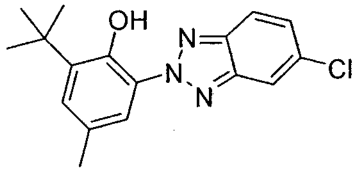

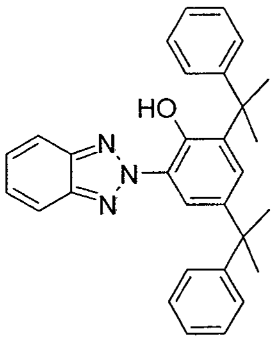

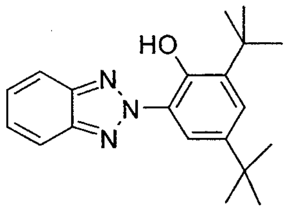

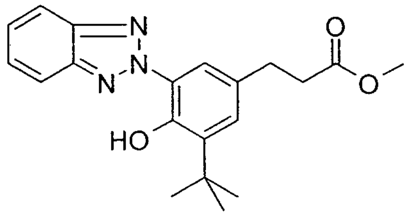

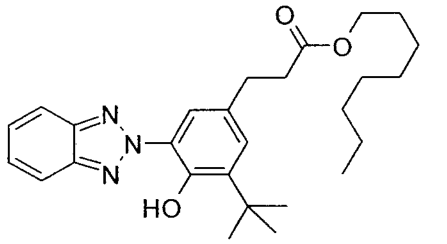

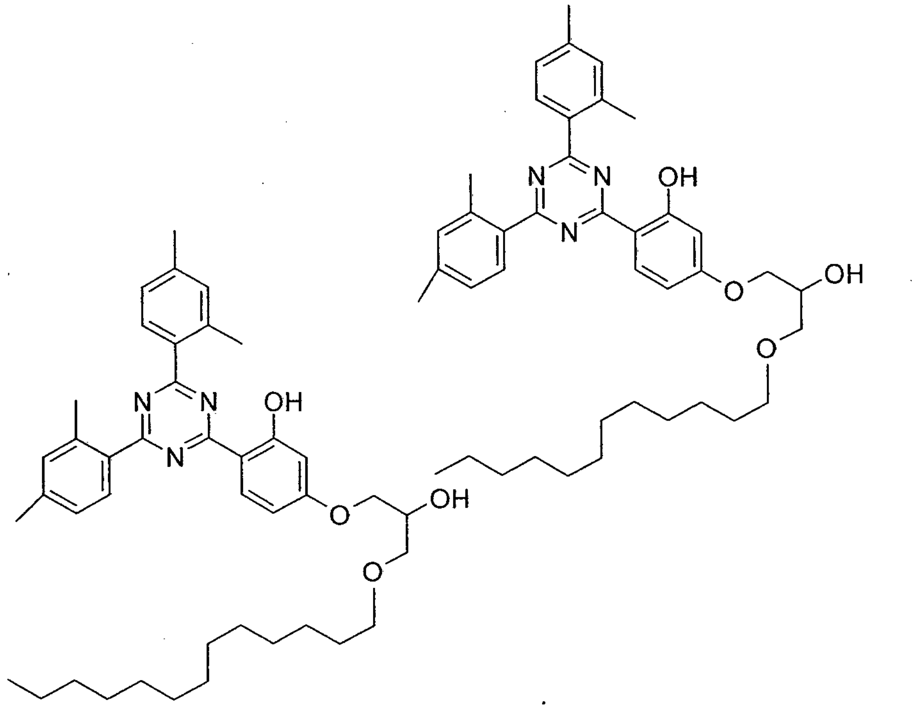

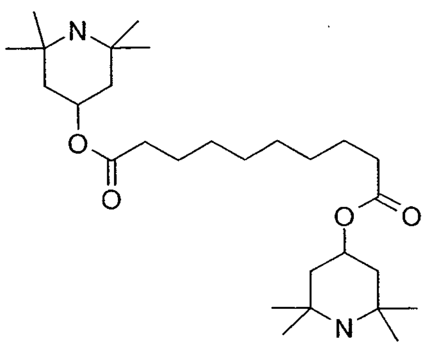

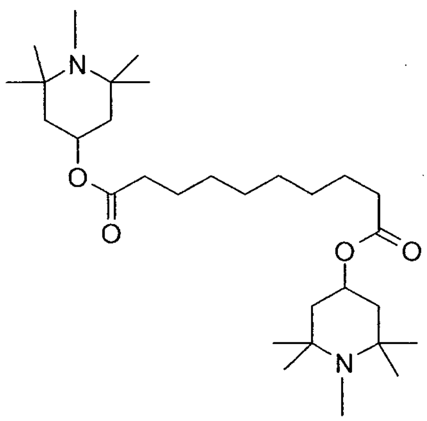

Die Anteile dieser Verbindungen und anderer Mindermengenkomponenten werden bei der Angabe der Anteile der flüssigkristallinen Verbindungen und der dichroitischen Farbstoffe vernachlässigt.

Es versteht sich für den Fachmann von selbst, daß die erfindungsgemäßen FK-Medien auch Verbindungen enthalten können, worin beispielsweise H, N, O, Cl oder F durch die entsprechenden Isotope ersetzt sind.

Alle Prozentangaben und Mengenverhältnisse sind Gewichtsprozent.

<u>Beispiele</u>

Die vorliegende Erfindung wird durch die nachfolgenden nicht einschränkenden Beispiele detailliert beschrieben.

Alle physikalischen Eigenschaften werden nach "Merck Liquid Crystals, Physical Properties of Liquid Crystals", Status Nov. 1997, Merck KGaA, Deutschland bestimmt und gelten für eine Temperatur von 20°C. Der Wert von $\Delta n$ wird bei 589 nm bestimmt und der Wert von $\Delta\varepsilon$ wird bei 1 kHz bestimmt, sofern nicht jeweils explizit anders angegeben. $n_e$ und $n_o$ sind jeweils die Brechungsindices des außerordentlichen und des ordentlichen Lichtstrahls unter den oben angegebenen Bedingungen.

Der Anisotropiegrad R wird ermittelt aus dem Wert für den Extinktionskoeffizienten E(p) (Extinktionskoeffizient der Mischung bei paralleler Ausrichtung der Moleküle zur Polarisationsrichtung des Lichts) und dem Wert für den Extinktionskoeffizienten der Mischung E(s) (Extinktionskoeffizient der Mischung bei senkrechter Ausrichtung der Moleküle

zur Polarisationsrichtung des Lichts), jeweils bei der Wellenlänge des Maximums der Absorptionsbande des betreffenden Farbstoffs. Hat der Farbstoff mehrere Absorptionsbanden, so wird die intensivste Absorptionsbande ausgewählt. Die Ausrichtung der Moleküle der Mischung wird durch eine Orientierungsschicht erreicht, wie sie dem Fachmann auf dem Gebiet der LC-Displaytechnik bekannt ist. Zur Eliminierung von Einflüssen durch flüssigkristallines Medium, sonstigen Absorptionen oder Reflexionen wird jeweils gegen eine identisch vorliegende Mischung, die keinen Farbstoff enthält, gemessen und der erhaltene Wert subtrahiert. Die Messung erfolgt mit linear polarisiertem Licht, dessen Schwingungsrichtung entweder parallel zur Orientierungsrichtung ist (Bestimmung von E(p)) oder senkrecht zur Orientierungsrichtung ist (Bestimmung von E(s)). Dies kann durch einen Linearpolarisator erreicht werden, wobei der Polarisator gegen die Vorrichtung gedreht wird, um die beiden unterschiedlichen Schwingungsrichtungen zu realisieren. Die Messung von E(p) und E(s) erfolgt also über die Drehung der Schwingungsrichtung des eingestrahlten polarisierten Lichts.
Der Anisotropiegrad R wird aus den erhaltenen Werten für E(s) und E(p) nach der Formel

$$R=[E(p)-E(s)] / [E(p) + 2*E(s)]$$

berechnet, wie unter anderem in "Polarized Light in Optics and Spectroscopy", D. S. Kliger et al., Academic Press, 1990, angegeben. Eine detaillierte Beschreibung des Verfahrens zur Bestimmung des Anisotropiegrads von flüssigkristallinen Medien enthaltend einen dichroitischen Farbstoff findet sich auch in B. Bahadur, Liquid Crystals - Applications and Uses, Vol. 3, 1992, World Scientific Publishing, Abschnitt 11.4.2.

Synthesebeispiele

*Beispiel 1:* 4,9-Bis-{5-[4-(3-ethyl-heptyl)-2-fluorphenyl]-thiophen-2-yl}-6,7-dimethyl-2-thia-1,3,5,8-tetraaza-cyclopenta[b]naphthalin **[TDC-1]**

*1.1.* 5,6-Dinitro-4,7-bis-{5-[4-(3-ethyl-heptyl)-2-fluor-phenyl]-thiophen-2-yl}-benzo[1,2,5]thiadiazol **[12]**

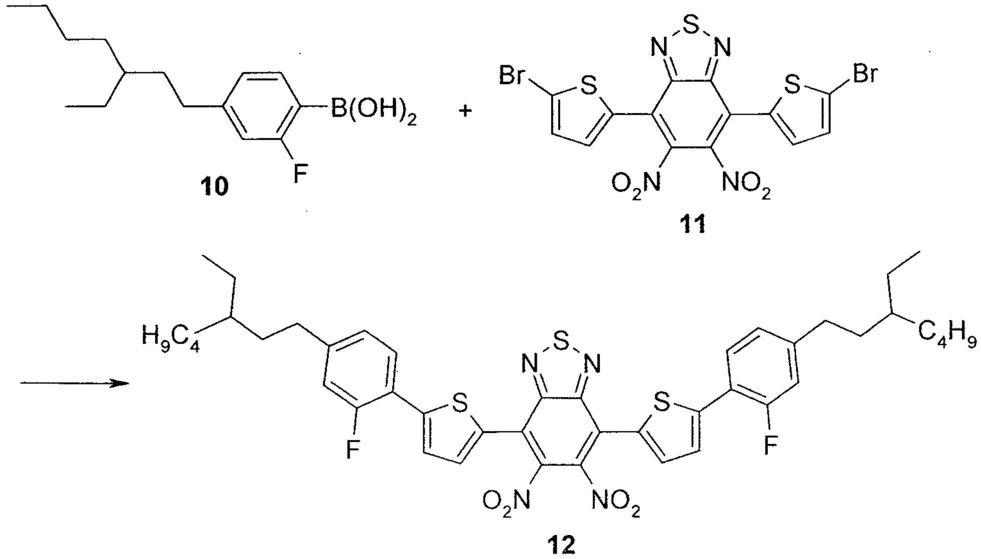

**10**

**11**

**12**

Eine sorgfältig entgaste Mischung von 4-(3-Ethylheptyl)-2-fluor-benzolboronsäure (2.1 g, 7.7 mmol), 4,7-Bis-(5-brom-thiophen-2-yl)-5,6-dimethyl-benzo[1,2,5]thiadiazol (2.0 g, 3.65 mmol), Tris(dibenzylidenaceton)dipalladium(0) (37 mg, 0.04 mmol), Tris(o-tolyl)phosphin (50 mg, 0.16 mmol), Toluol (65 ml) und 2 M wäßriger $Na_2CO_3$-Lösung (40 ml) wird unter Argonatmosphäre 18 h unter Rückfluß erhitzt. Man läßt den Ansatz abkühlen, arbeitete auf wie üblich und reinigt das Rohprodukt durch Chromatographie ($SiO_2$; Toluol/n-Heptan 2:3). Nachfolgende Kristallisation aus Toluol/n-Heptan 1:1. liefert 5,6-Dinitro-4,7-bis-{5-[4-(3-ethyl-heptyl)-2-fluor-phenyl]-thiophen-2-yl}-benzo[1,2,5]thiadiazol (11) als gelblichen Feststoff.

1.2. 5,6-Diamino-4,7-bis-{5-[4-(3-ethyl-heptyl)-2-fluor-phenyl]-thiophen-2-yl}-benzo[1,2,5]thiadiazol **[13]**

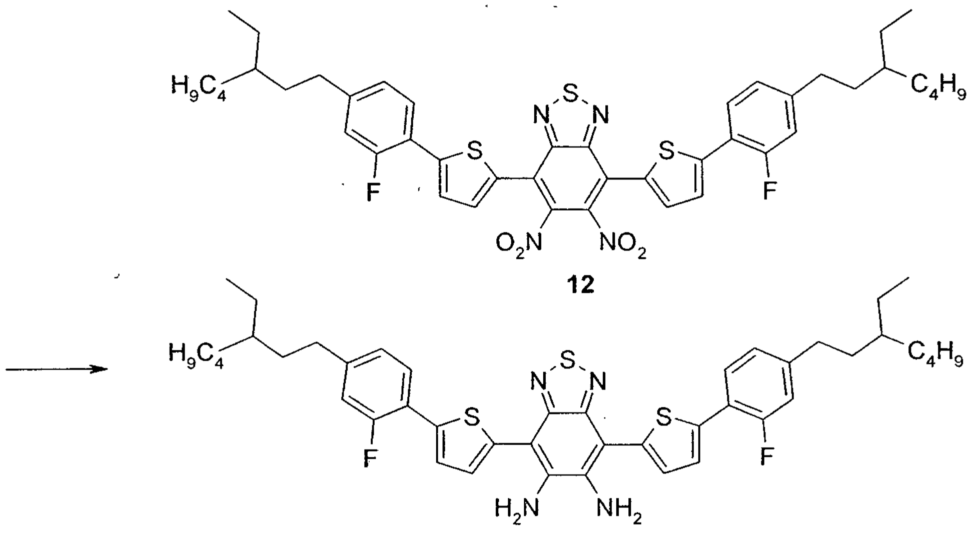

12

13

Eine Lösung von 5,6-Dinitro-4,7-bis-{5-[4-(3-ethyl-heptyl)-2-fluor-phenyl]-thiophen-2-yl}-benzo[1,2,5]thiadiazol (6.3 g, 7.5 mmol) in THF (65 ml) wird in Gegenwart von Nickelschwamm-Katalysator (Johnson-Matheson A-7000) bei Normaldruck und Raumtemperatur bis zur äquivalenten Wasserstoffaufnahme hydriert. Filtration und Eindampfen zur Trockne liefert 5,6-Diamino-4,7-bis-{5-[4-(3-ethyl-heptyl)-2-fluor-phenyl]-thiophen-2-yl}-benzo[1,2,5]thiadiazol (13) als bräunliches Harz, das ohne weitere Aufreinigung in die nächste Stufe eingesetzt wird.

1.3. 4,9-Bis-{5-[4-(3-ethyl-heptyl)-2-fluorphenyl]-thiophen-2-yl}-6,7-dimethyl-2-thia-1,3,5,8-tetraaza-cyclopenta[b]naphthalin **[TDC-1]**

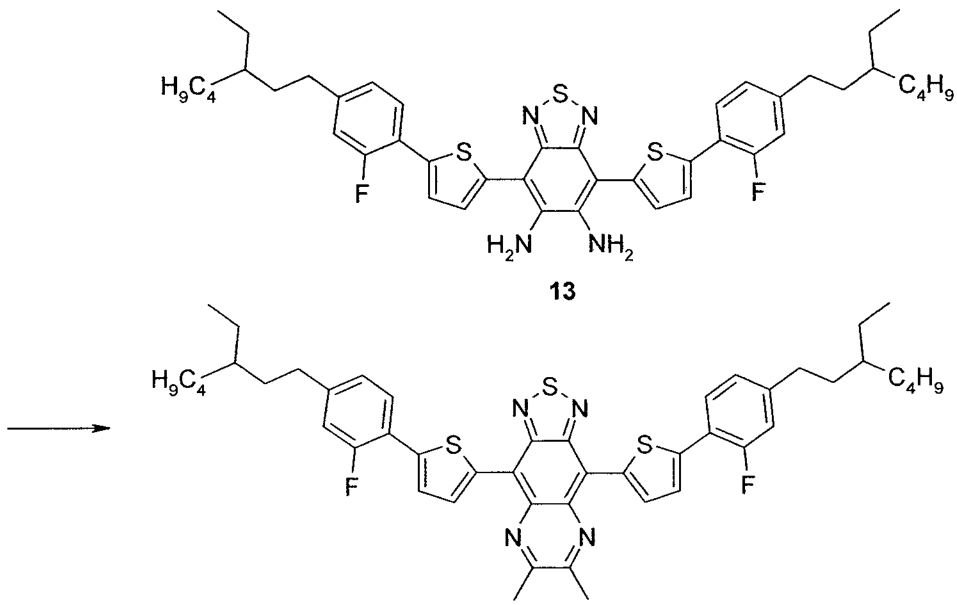

13

**TDC-1**

Eine Lösung von 13 (5.8 g, 7.5 mmol) in Methanol (300 ml) wird mit Diacetyl (1.3 ml, 15 mmol) versetzt und 18 h unter Rückfluß erhitzt. Man arbeitet wie üblich wäßrig auf und reinigt das Rohprodukt durch Chromatographie ($SiO_2$; n-Heptan/Toluol 1:1). Nachfolgende Kristallisation aus n-Heptan liefert 5,6-Diamino-4,7-bis-{5-[4-(3-ethyl-heptyl)-2-fluorphenyl]-thiophen-2-yl}-benzo[1,2,5]thiadiazol als blauen Feststoff vom Schmp. 160 °C.

In Analogie zu Beispiel 1 werden die nachfolgenden Verbindungen erhalten:

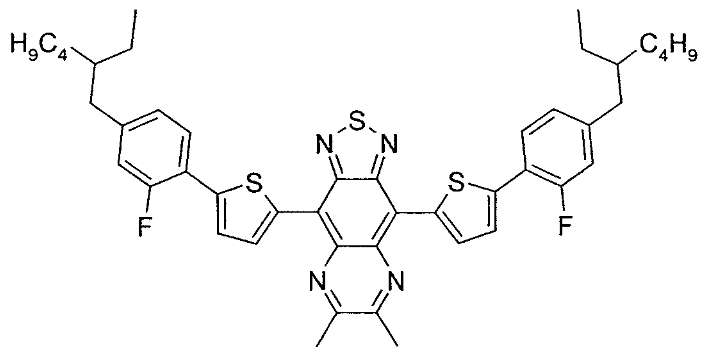

TDC-2

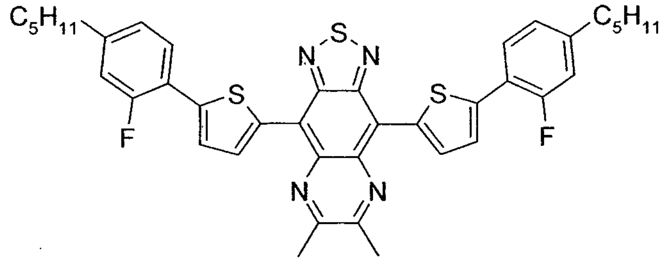

TDC-3

Schmp. 209 °C

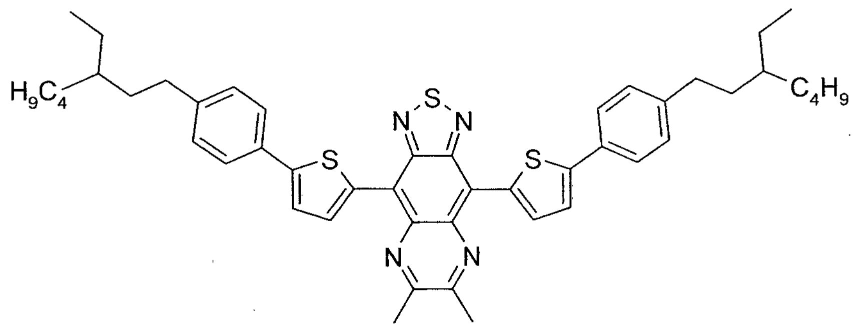

TDC-4

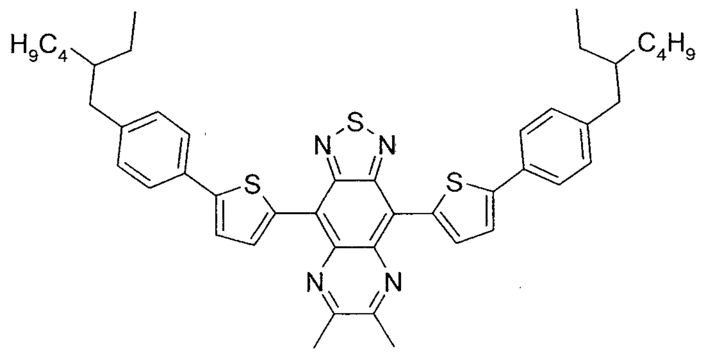

TDC-5

(fortgesetzt)

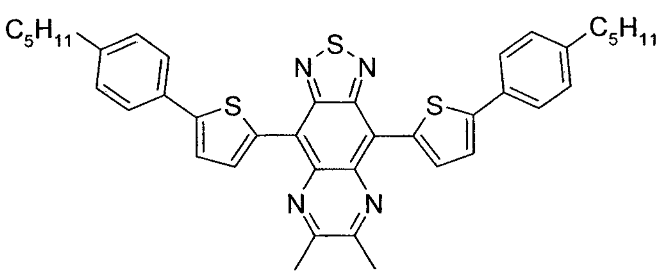

TDC-6

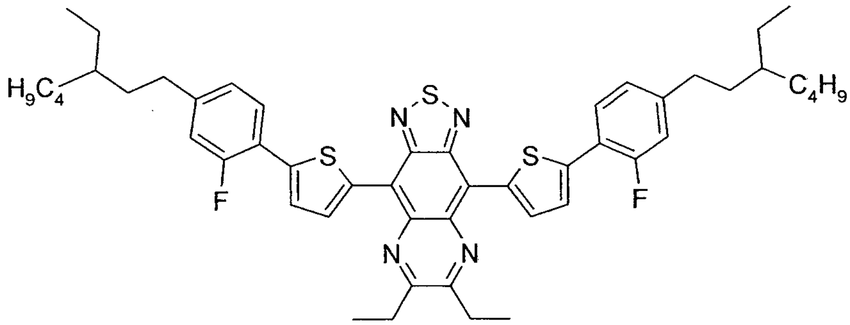

TDC-7

Schmp. 135 °C

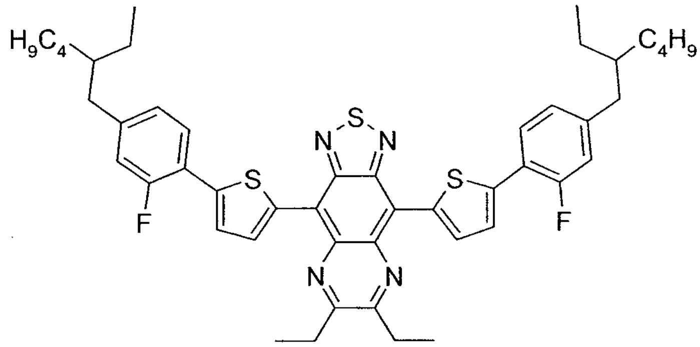

TDC-8

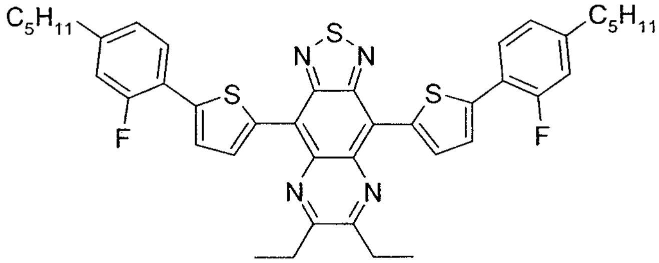

TDC-9

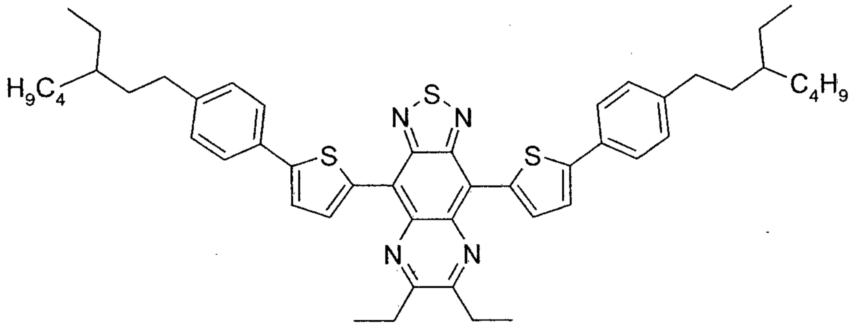

TDC-10

(fortgesetzt)

TDC-11

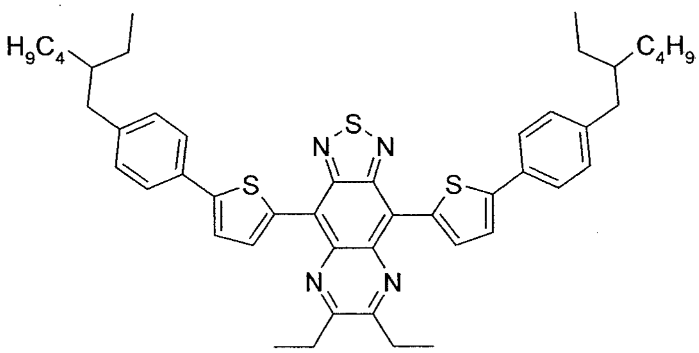

TDC-12

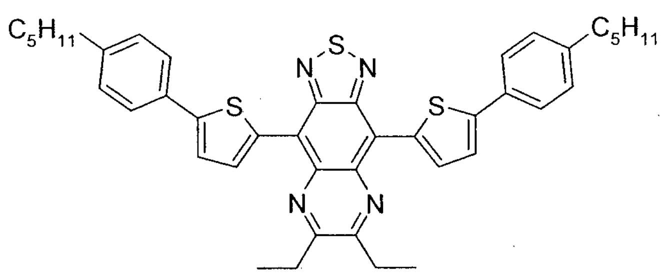

TDC-13

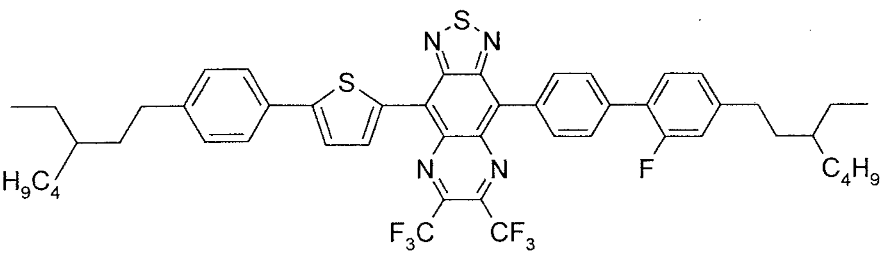

TDC-14

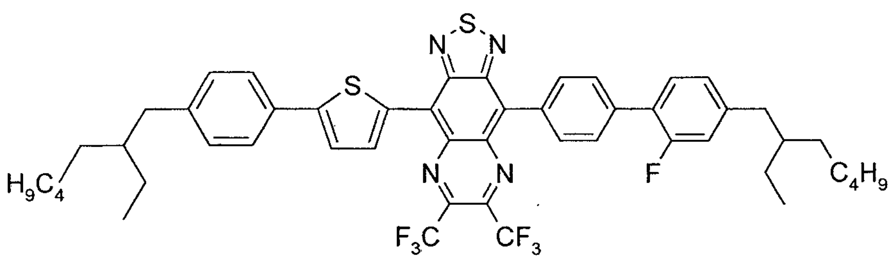

TDC-15

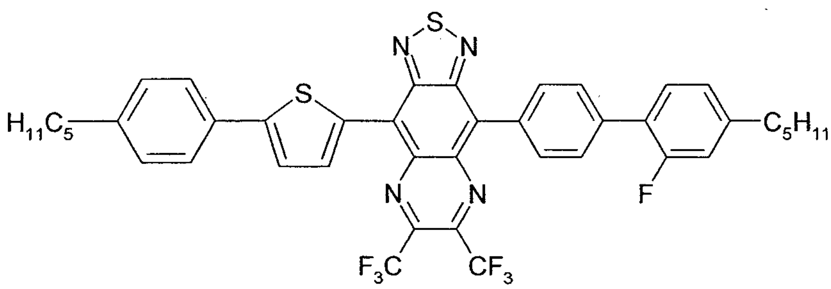

(fortgesetzt)

TDC-16

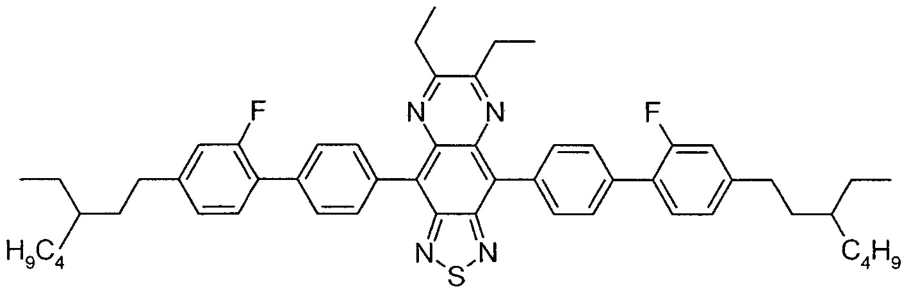

TDC-17

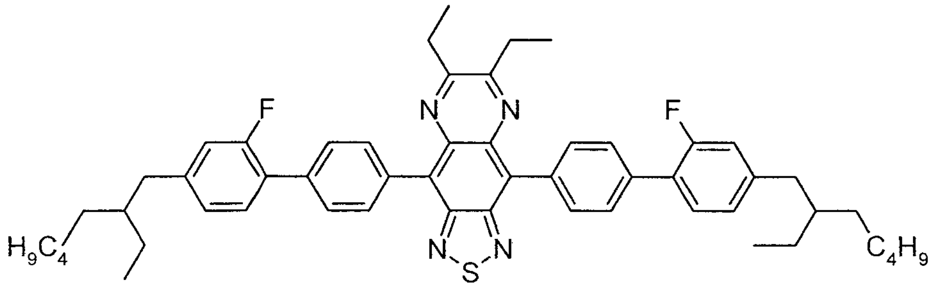

TDC-18

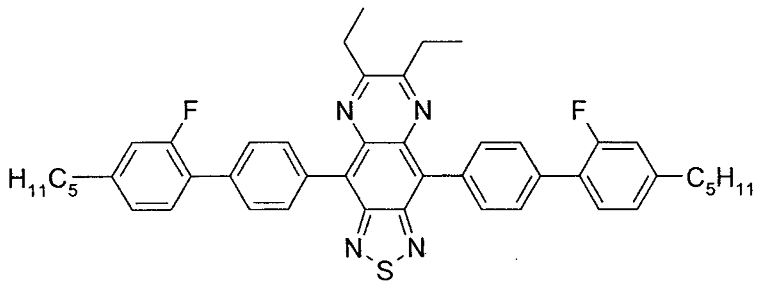

TDC-19

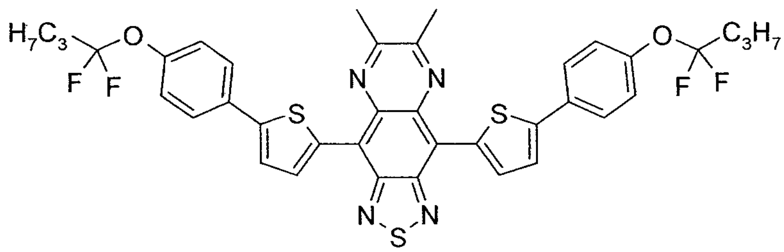

TDC-20

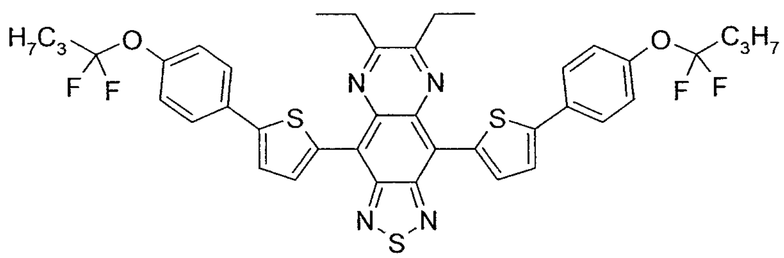

(fortgesetzt)

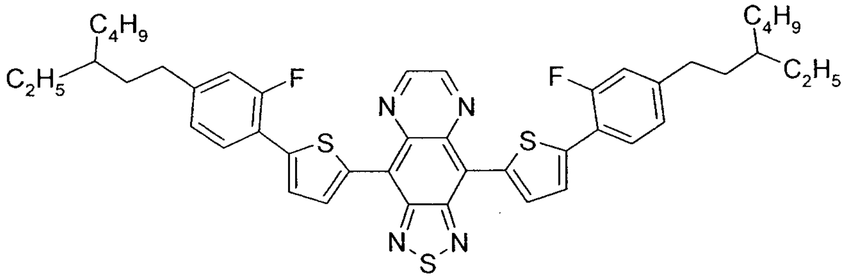

TDC-21

Schmp. 155 °C

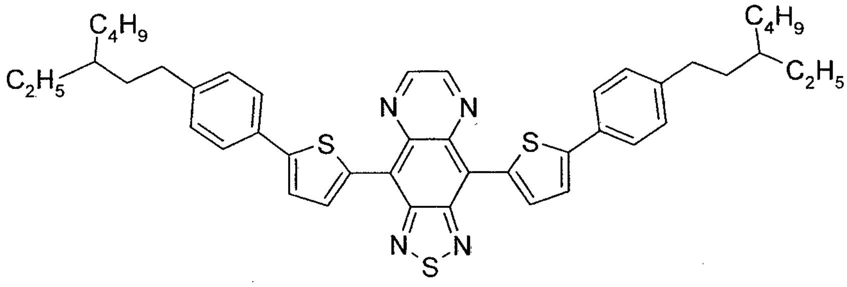

TDC-22

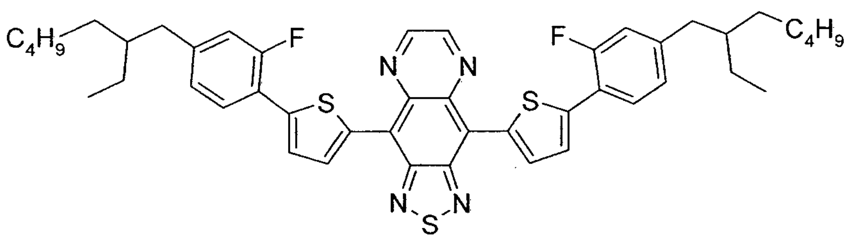

TDC-23

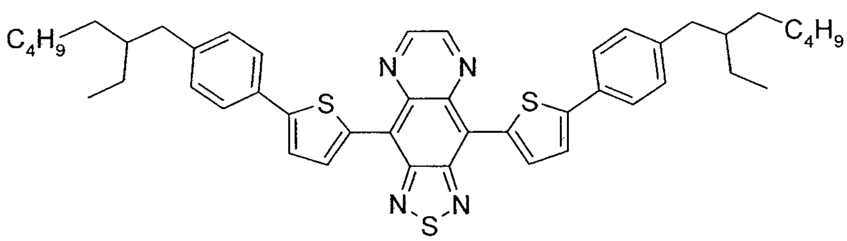

TDC-24

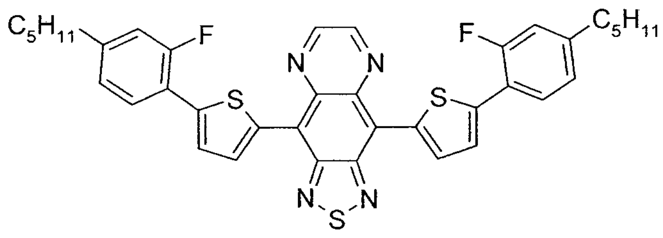

TDC-25

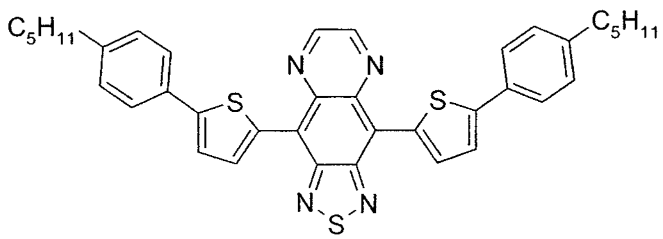

TDC-26

(fortgesetzt)

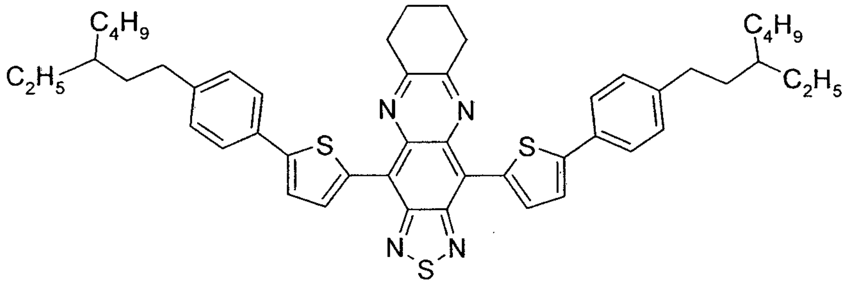

TDC-27

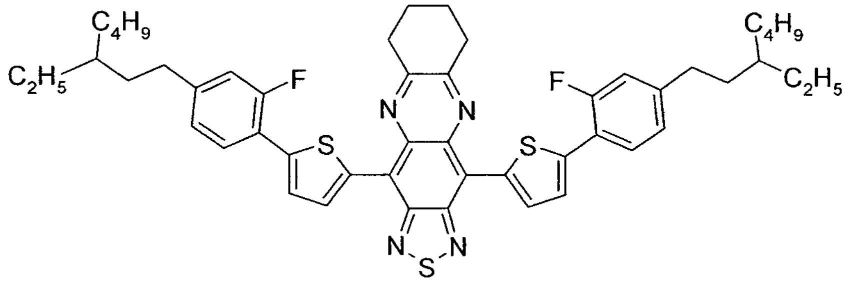

TDC-28

Schmp. 151 °C

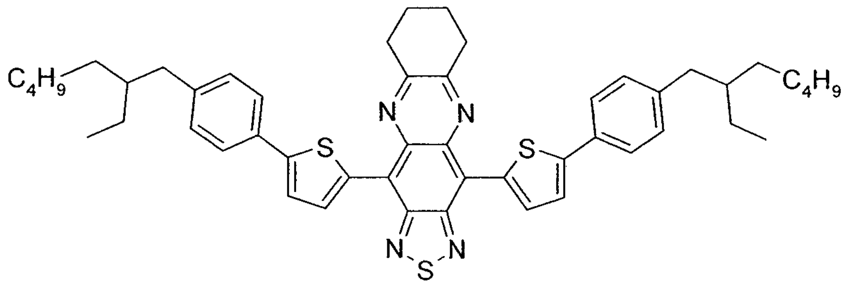

TDC-29

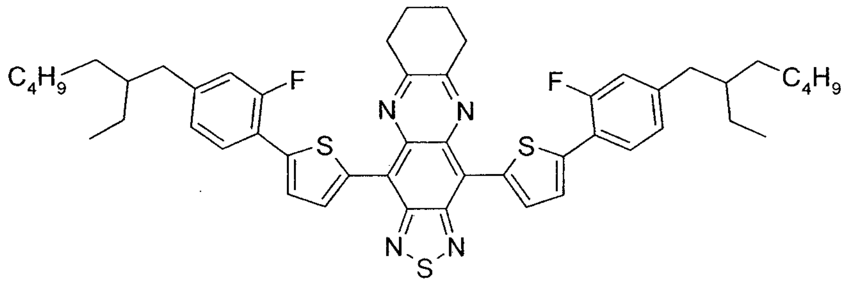

TDC-30

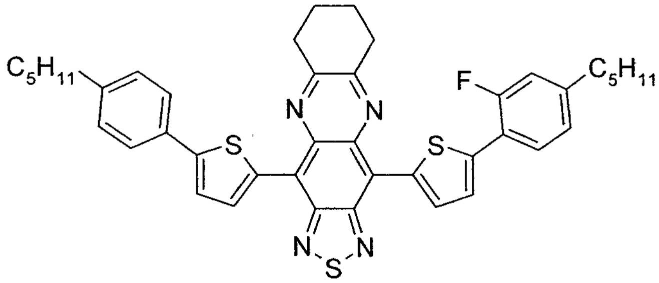

TDC-31

(fortgesetzt)

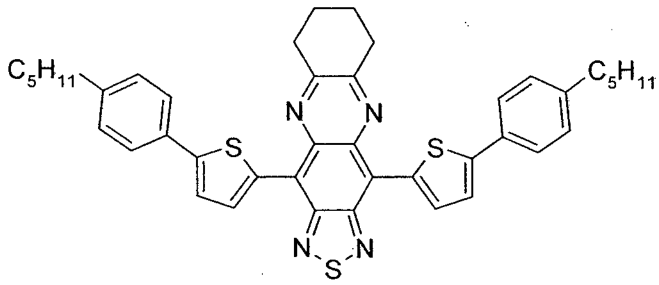

TDC-32

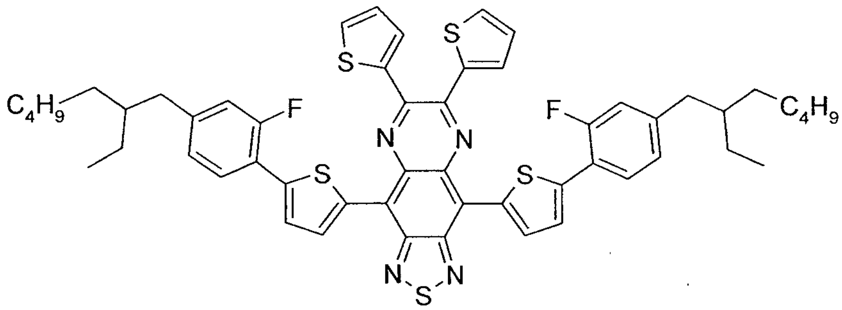

TDC-33

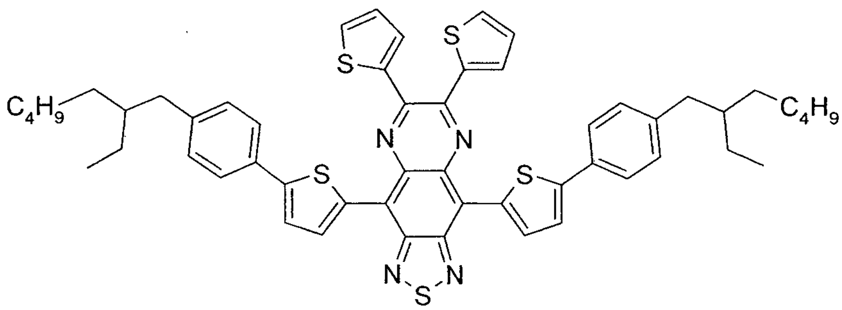

TDC-34

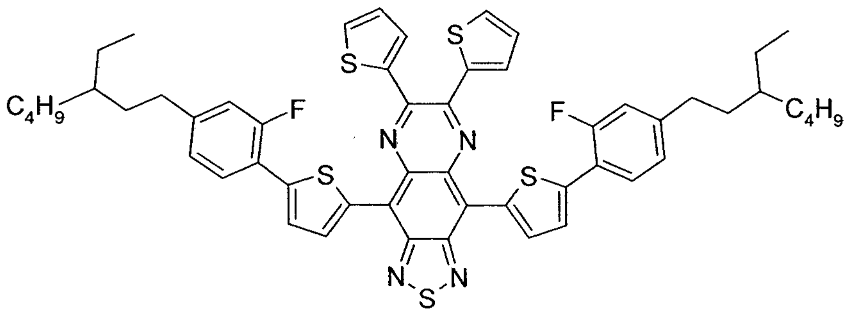

TDC-35

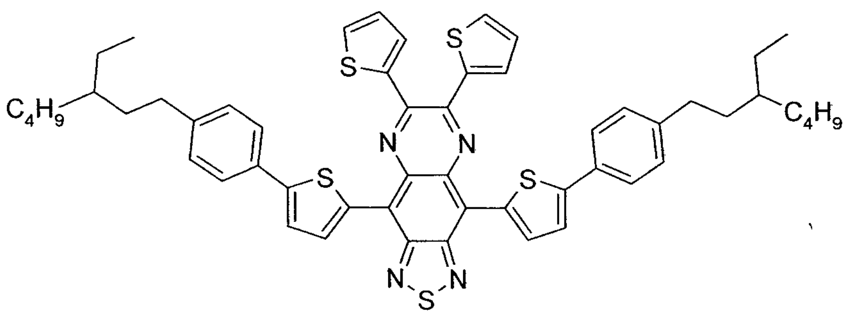

TDC-36

Schmp. 163 °C

(fortgesetzt)

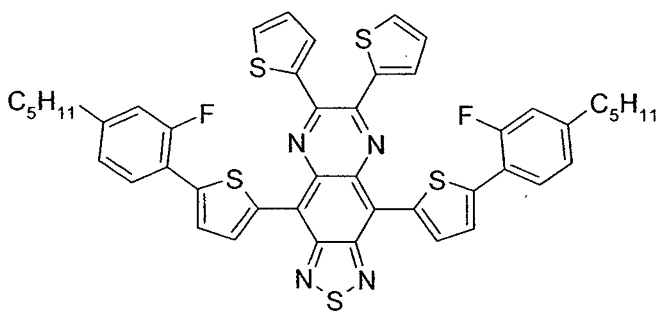

TDC-37

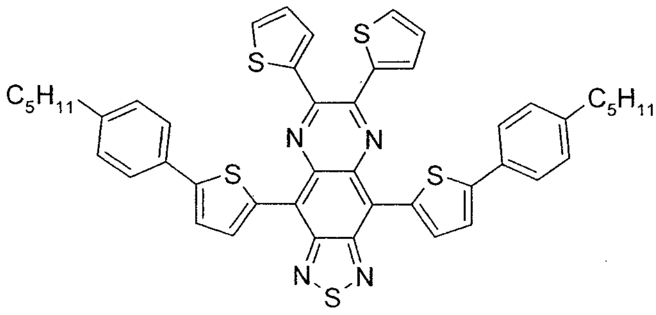

TDC-38

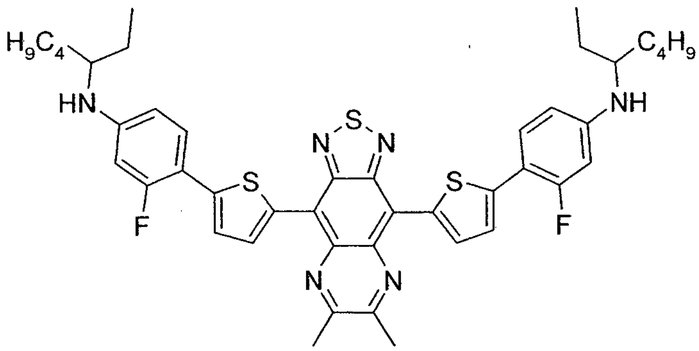

TDC-39

Schmp. 74 °C

Anwendungsbeispiele

Die hergestellten Farbstoffe werden auf ihre physikalischen Eigenschaften hin untersucht, um ihre Eignung zur Verwendung in Vorrichtungen zur Regulierung der Energie-Transmission festzustellen. Zum Vergleich werden die entsprechenden Eigenschaften für die Verbindungen D-1 und D-2 (Struktur siehe unten) angegeben.

Herstellung von flüssigkristallinen Farbstoffmischungen

Eine FK-Grundmischung G-1 wird wie folgt hergestellt:

| | | | |
|---|---|---|---|
| CPG-3-F | 5 % | Klärpunkt [°C] | 114,5 |
| CPG-5-F | 5 % | $\Delta n$ | 0,1342 |
| CPU-3-F | 15 % | $n_e$ | 1,6293 |
| CPU-5-F | 15 % | $n_o$ | 1,4951 |
| PCH-3 | 16 % | | |
| PCH-5 | 16 % | | |
| CCGU-3-F | 7 % | | |
| CGPC-3-3 | 4 % | | |
| CGPC-5-3 | 4 % | | |
| CGPC-5-5 | 4 % | | |

(fortgesetzt)

| | |
|---|---|
| CCZPC-3-3 | 3 % |
| CCZPC-3-4 | 3 % |
| CCZPC-3-5 | 3 % |

Es werden die folgenden Farbstoffe in den angegebenen Anteilen in der Grundmischung G-1 gelöst:

Mischungsbeispiel M-1

| | |
|---|---|
| G-1 | 99,75 % |
| TDC-1 | 0,25 % |

Entsprechend werden aus je 99,75 % der Grundmischung G-1 und je 0,25 % der Farbstoffe TDC-3, TDC-7, TDC-21, TDC-28, TDC-36 und TDC-39 die Mischungen M-2 bis M-7 erhalten.

Eine Vergleichsmischung V-1 wird wie folgt hergestellt:

| | |
|---|---|
| G-1 | 99,75 % |
| D-1 | 0,25 % |

Das Mischungsbeispiel M-8 wird wie folgt hergestellt:

| | |
|---|---|
| G-1 | 99,75 % |
| D-2 | 0,25 % |
| TDC-41 | 1,00 % |

Strukturen der weiteren verwendeten Farbstoffe:

Tabelle 2

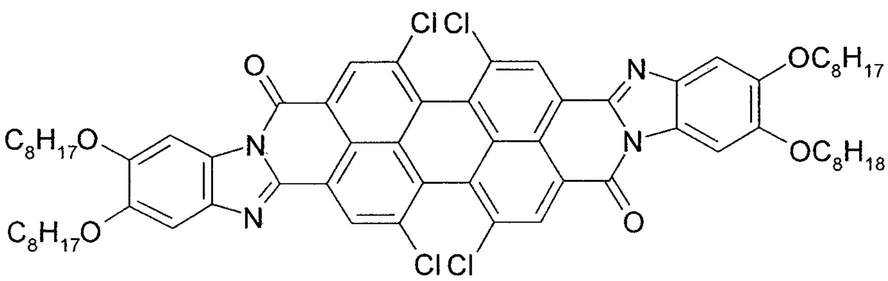

D-1

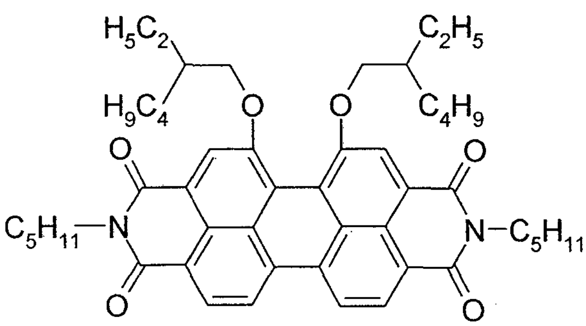

D-2

In Tabelle 3 sind Absorptionsmaximum, Anisotropiegrad und Löslichkeit für die Farbstoffe TDC-1, TDC-3, TDC-7, TDC-21, TDC-28, TDC-36 und TDC-39 aufgeführt.

Das Absorptionsmaximum der Vergleichssubstanz D-1 ist vergleichbar mit dem von TDC-1.

Tabelle 3

| Farbstoff | Mischung | Absorptions-Maximum / nm | Anisotropie grad R | Löslichkeit in Gew.-% in M-1 |
|---|---|---|---|---|
| TDC-1 | M-1 | 679 | 0,69 | >1,00 |
| TDC-3 | M-2 | 676 | 0,71 | - |
| TDC-7 | M-3 | 670 | 0,71 | - |
| TDC-21 | M-4 | 705 | 0,70 | - |
| TDC-28 | M-5 | 694 | 0,65 | - |
| TDC-36 | M-6 | 742 | 0,67 | - |
| TDC-39 | M-7 | 777, 420 | 0,67 0,63 | - |
| D-1 | V-1 | 675 | - | - |

Fig. 1 zeigt das UV-VIS-Spektrum der Farbstoffe TDC-1 und D-1, gemessen in der Grundmischung G-1.

Die Messungen zeigen, daß die erfindungsgemäßen Thiadiazolochinoxalin-Verbindungen hervorragende Eigenschaften in Bezug auf Anisotropiegrad und Löslichkeit in flüssigkristallinen Medien aufweisen. Der Vergleich des UV-VIS-Spektrums von TDC-1 (Mischung M-1) mit dem vom Absorptionsbereich vergleichbaren Rylenfarbstoff D-1 (Mischung V-1) zeigt außerdem, daß bei TDC-1 keine Banden im Bereich 500-550 nm vorliegen. Hierdurch lassen sich Anwendungen realisieren, die deutlich besser innerhalb ihrer Farbart bleiben. D.h. bei Verwendung von TDC-1 liegen Hell und Dunkel näher in ihren Farbarten als bei Verwendung von D-1. Des weiteren kann man wegen der schmaleren Bande auch deutlich bessere Farbsättigungen erreichen.

<u>Verwendung von flüssigkristallinen Medien enthaltend die Farbstoffe in Vorrichtungen zur Regulierung des Energiedurchtritts</u>

Um die Vorrichtung herzustellen, wird die Flüssigkristallmischung M-8 in den Zwischenraum der folgenden Schichtenanordnung gefüllt:

- Substratschicht
- ITO-Schicht
- Polyimid-Orientierungsschicht
- mit Spacern offengehaltener Zwischenraum
- Polyimid-Orientierungsschicht
- ITO-Schicht
- Substratschicht

Die Flüssigkristallschicht ist in dieser Anordnung planar mit antiparallelem Pretiltwinkel orientiert. Diese Orientierung wird durch zwei antiparallel zueinander geriebene Polyimidschichten erreicht. Die Dicke der flüssigkristallinen Schicht wird durch Spacer definiert und beträgt üblicherweise 25 $\mu$m.

Es werden Werte für den Lichttransmissionsgrad $\tau_v$ jeweils für den dunklen und den hellen Schaltzustand der Vorrichtung ermittelt und im Folgenden aufgeführt. Der helle Schaltzustand wird durch Anlegen einer Spannung erreicht, während der dunkle Schaltzustand ohne Spannung vorliegt. Weiterhin wird der Farbort der Vorrichtung (in CIE-Koordinaten) im Dunkel- und im Hellzustand ermittelt.

Die Messung erfolgt mit der Vorrichtung enthaltend das flüssigkristalline Medium mit Farbstoffen im Meßstrahl und einer baugleichen Vorrichtung, entsprechend ohne die Farbstoffe im Referenzstrahl. Hierdurch werden Reflexions- und Absorptionsverluste der Zelle eliminiert.

Der Wert $\tau_v$ und die CIE-Koordinaten (x,y) sind wie folgt definiert:

$\tau_v$= Lichttransmissionsgrad, bestimmt nach DIN EN410

Der Farbort (für weiß, grau schwarz) der hier zugrunde gelegten Normlichtart D65 liegt bei x=0.3127 und y=0.3290 (Manfred Richter, Einführung in die Farbmetrik, zweite Auflage 1991, ISBN 3-11-008209-8). Die angegebenen Farborte (x,y) beziehen sich alle auf die Normlichtart D65 und den 2° Normalbeobachter nach CIE 1931.

Erhaltene Meßwerte für die Vorrichtung (Doppelzelle):

- Dunkelzustand: x = 0,148; y = 0,160; $\tau_V$ = 12,6%
- Hellzustand: x = 0,256; y = 0,305; $\tau_V$ = 56,5%

Im Beispiel zeigt sich eine gute Stabilität des flüssigkristallinen Mediums und eine gute Löslichkeit der Farbstoffe im flüssigkristallinen Medium.

Weiterhin zeigt das Beispiel, daß sich die Vorrichtung durch Anlegen einer Spannung von einem Dunkelzustand mit deutlich geringerer Lichttransmission zu einem Hellzustand mit deutlich erhöhter Lichttransmission schalten läßt.

Weiterhin wird beobachtet, daß mit dem Farbstoff TDC-1 in Kombination mit Farbstoff D-2 eine Mischung mit besonders guter Farbsättigung im Blau erhalten wird.

## Patentansprüche

**1.** FK-Medium enthaltend eine Farbstoffkomponente A) enthaltend eine oder mehrere Verbindungen der Formel I wie nachfolgend definiert, und
eine flüssigkristalline Komponente B), enthaltend eine oder mehrere mesogene Verbindungen,

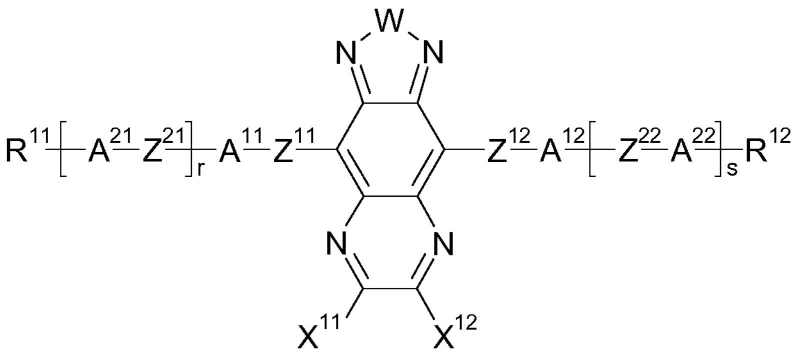

I

worin

W S oder Se,
$X^{11}$, $X^{12}$ gleich oder verschieden H, Alkyl mit 1-6 C-Atomen, worin ein oder mehrere H-Atome durch F ersetzt sein können und ein oder mehrere $CH_2$-Gruppen durch -O- oder -S- so ersetzt sein können, daß keine O- oder S-Atome benachbart sind, Perfluoralkyl mit 1-6 C-Atomen, Halogen, CN, $SF_5$, eine Aryl- oder Heteroarylgruppe, die mit einem oder mehreren Resten L substituiert sein kann, und alternativ auch die Gruppen $X^{11}$ und $X^{12}$ gemeinsam eine geradkettige oder verzweigte Alkylengruppe mit 2 bis 10 C-Atomen, in der ein, mehrere oder sämtliche H-Atome durch F ersetzt sein können,
$R^{11}$, $R^{12}$ gleich oder verschieden F, geradkettiges oder verzweigtes Alkyl mit 1 bis 25 C-Atomen, worin auch eine oder mehrere nicht benachbarte $CH_2$-Gruppen jeweils unabhängig voneinander durch $-C(R^z)=C(R^z)-$,-C≡C-, $-N(R^z)-$, -O-, -S-, -C(O)-, -C(O)-O-, -O-C(O)-, -O-C(O)-O- so ersetzt sein können, daß O- und/oder S-Atome nicht direkt miteinander verknüpft sind, und worin auch ein oder mehrere H-Atome durch F, Cl, Br, I oder CN ersetzt sein können,
$R^z$ bei jedem Auftreten gleich oder verschieden H, Halogen, geradkettiges, verzweigtes oder cyclisches Alkyl mit 1 bis 25 C-Atomen, worin auch eine oder mehrere nicht benachbarte $CH_2$-Gruppen durch -O-, -S-, -C(O)-, -C(O)-O-, -O-C(O)-, -O-C(O)-O- so ersetzt sein können, daß O- und/oder S-Atome nicht direkt miteinander verknüpft sind und worin auch ein oder mehrere H-Atome durch F oder Cl ersetzt sein können,
$A^{11}$, $A^{12}$ jeweils unabhängig voneinander eine Aryl- oder Heteroarylgruppe, die mit einem oder mehreren Resten L substituiert sein kann,
$A^{21}$, $A^{22}$ jeweils unabhängig voneinander definiert sind wie $A^{11}$ oder eine cyclische Alkylgruppe mit 3 bis 10 C-Atomen, in der 1 bis 4 $CH_2$-Gruppen durch O so ersetzt sein können, daß keine zwei O-Atome benachbart sind,
L bei jedem Auftreten gleich oder verschieden OH, $CH_2OH$, F, Cl, Br, I, -CN, $-NO_2$, $SF_5$, -NCO, -NCS,-OCN, -SCN, $-C(=O)N(R^z)_2$, $-C(=O)R^z$, $-N(R^z)_2$, optional substituiertes Silyl, optional substituiertes Aryl mit 6 bis 20 C Atomen, oder geradkettiges oder verzweigtes Alkyl, Alkoxy, Alkylcarbonyl, Alkoxycarbonyl, Alkylcarbonlyoxy

oder Alkoxycarbonyloxy mit 1 bis 25 C-Atomen, worin auch ein oder mehrere H-Atome durch F oder Cl ersetzt sein können,
$Z^{11}$, $Z^{12}$ bei jedem Auftreten gleich oder verschieden eine Einfachbindung, $-CR^{x1}=CR^{x2}-$, -C≡C- oder -C(O)-,
$Z^{21}$, $Z^{22}$ bei jedem Auftreten gleich oder verschieden definiert sind wie $Z^{11}$ oder -O-, -S-, $-CR^{y1}R^{y2}-$, $-CF_2O-$, $-OCF_2-$, -C(O)-O-, -O-C(O)-, -O-C(O)-O-, $-OCH_2-$, $-CH_2O-$,$-SCH_2-$, $-CH_2S-$, $-CF_2S-$, $-SCF_2-$, $-(CH_2)_{n1}-$, $-CF_2CH_2-$, $-CH_2CF_2-$, $-(CF_2)_{n1}-$, -CH=CH-COO, oder -OCO-CH=CH-,
$R^{x1}$, $R^{x2}$ unabhängig voneinander H, F, Cl, CN, Alkyl mit 1-12 C-Atomen,
$R^{y1}$, $R^{y2}$ jeweils unabhängig voneinander H oder Alkyl mit 1-12 C-Atomen,
r, s unabhängig voneinander 0, 1, 2 oder 3,
n1 1, 2, 3 oder 4

bedeuten,
mit der Maßgabe, daß die Verbindung der Formel

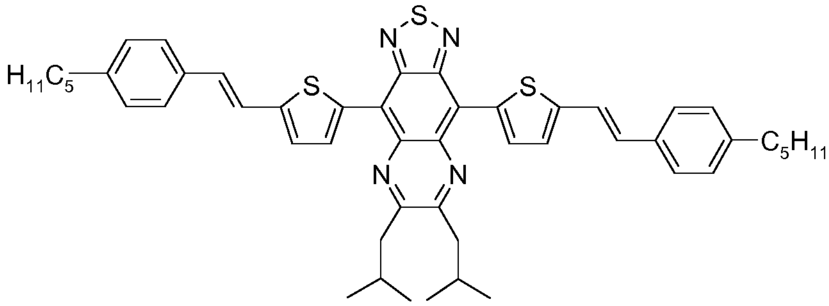

ausgeschlossen ist.

2. FK-Medium nach Anspruch 1, wobei das Medium eine oder mehrere Verbindungen der Formel I, wie in Anspruch 1 definiert, enthält, worin wenn r und s gleich sind mindestens eine der Gruppen
$A^{11}$ und $A^{12}$, oder
$R^{11}$ und $R^{12}$, oder
$A^{21}$ und $A^{22}$, oder
$Z^{11}$ und $Z^{12}$, oder
$Z^{21}$ und $Z^{22}$, oder
$X^{11}$ und $X^{12}$
voneinander verschieden sind.

3. FK-Medium nach Anspruch 1, wobei das Medium eine oder mehrere Verbindungen der Formel I, wie in Anspruch 1 definiert, enthält, worin r gleich 0, 1 oder 2 und s gleich r+1 bedeuten.

4. FK-Medium nach einem oder mehreren der Ansprüche 1 bis 3, wobei das Medium eine oder mehrere Verbindungen der Formel I, wie in Anspruch 1 definiert, enthält, worin W -S- bedeutet.

5. FK-Medium nach einem oder mehreren der Ansprüche 1 bis 4, wobei das Medium eine oder mehrere Verbindungen der Formel I, wie in Anspruch 1 definiert, enthält, worin $X^{11}$ und $X^{12}$ jeweils unabhängig voneinander H, $CH_3$, $C_2H_5$, F, Cl, $CF_3$, $OCF_3$, CN oder gemeinsam 1,4-Butylen, 1,3-Hexafluorpropyliden oder 1,4-Octafluorbutyliden bedeuten.

6. FK-Medium nach einem oder mehreren der Ansprüche 1 bis 5, wobei das Medium eine oder mehrere Verbindungen der Formel I, wie in Anspruch 1 definiert, enthält, worin $A^{11}$, $A^{12}$, $A^{21}$, $A^{22}$ bei jedem Auftreten gleich oder verschieden ausgewählt sind aus wahlweise mit Resten L substituierten Gruppen abgeleitet aus den Grundkörpern Benzol, Fluoren, Naphthalin, Pyridin, Pyrimidin, Thiophen, Thiazol, Dihydrothienodioxin, Benzothiophen, Dibenzothiophen, Benzodithiophen, Cyclopentadithiophen, Thienothiophen, Indenothiophen, Furan, Benzofuran, Dibenzofuran und Chinolin, wobei L ausgewählt ist aus den Gruppen F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$ und Phenyl.

7. FK-Medium nach Anspruch 1, wobei das Medium eine oder mehrere Verbindungen der Formel I ausgewählt sind aus den folgenden Unterformeln enthält:

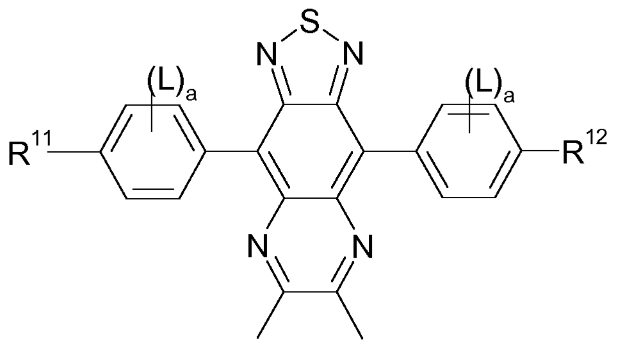

I-1-3-1

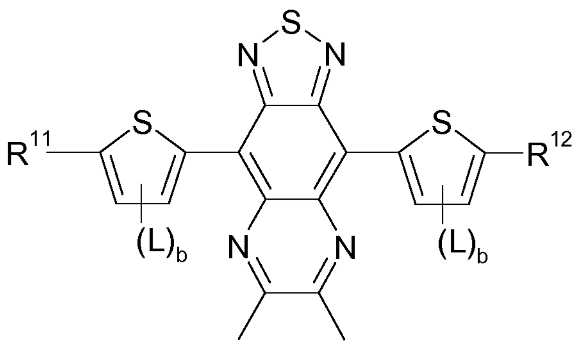

I-1-3-2

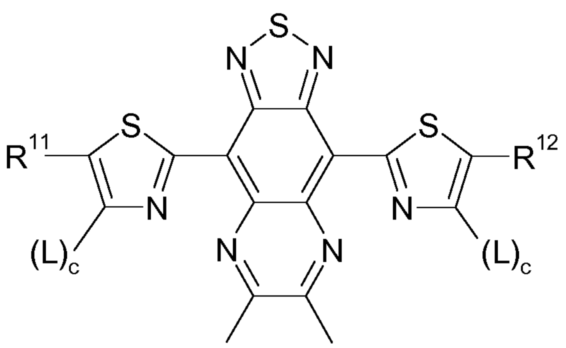

I-1-3-3

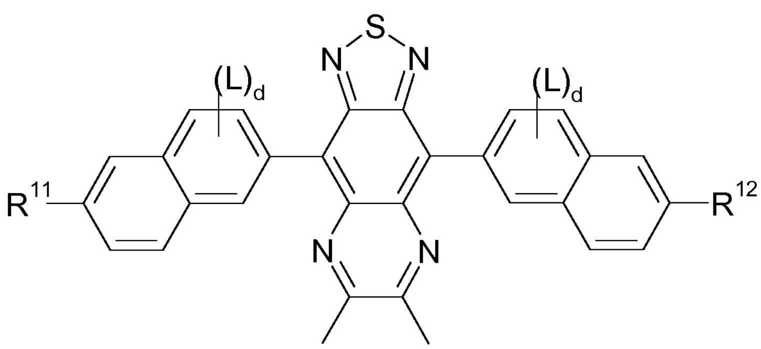

I-1-3-4

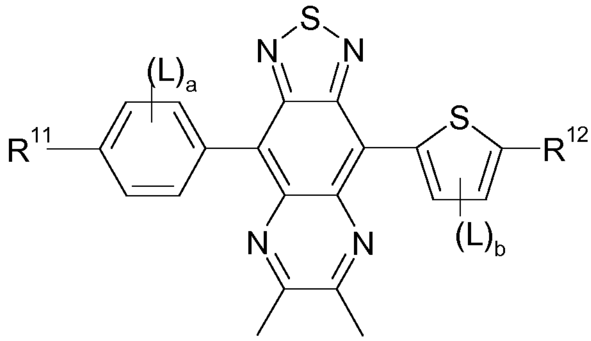

I-1-3-5

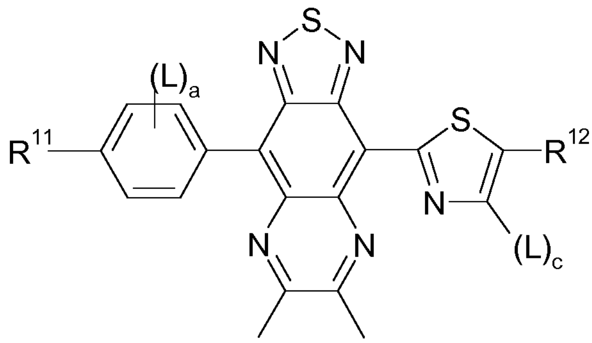

I-1-3-6

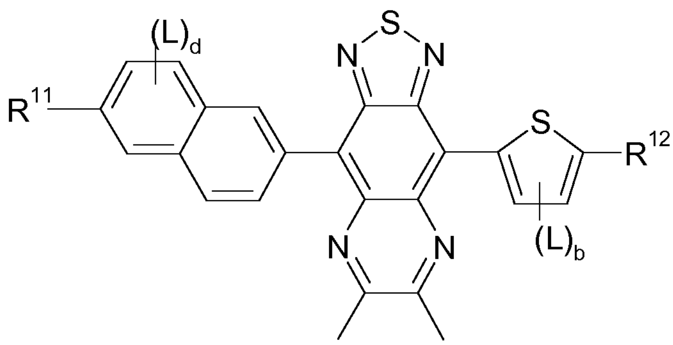

I-1-3-7

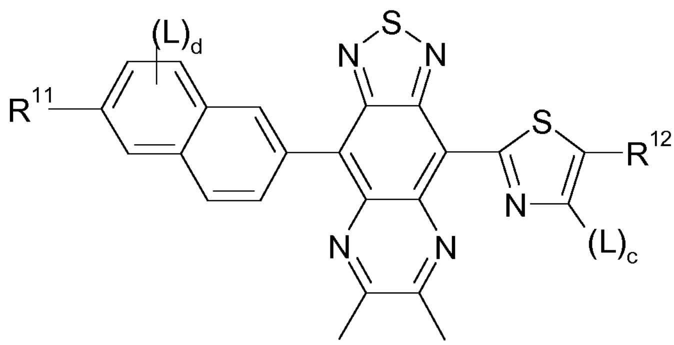

I-1-3-8

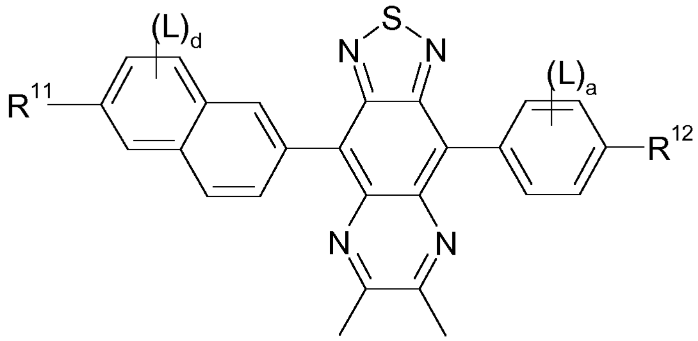

I-1-3-9

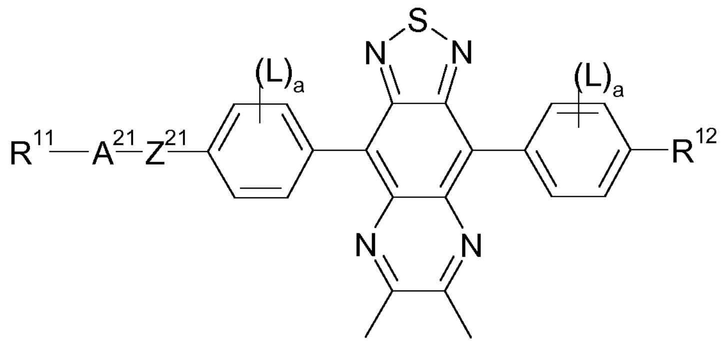

I-2-4-1

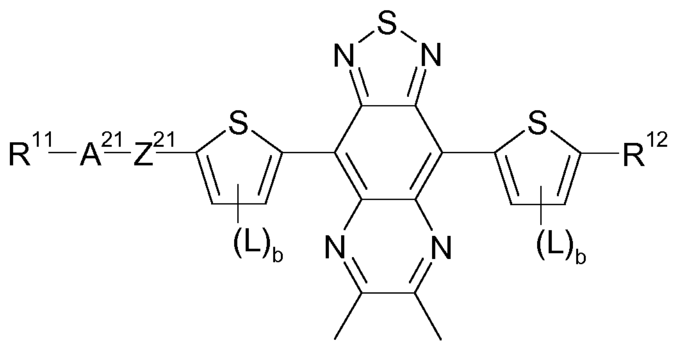

I-2-4-2

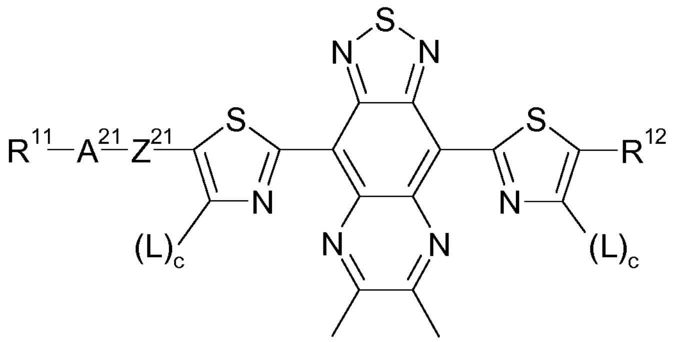

I-2-4-3

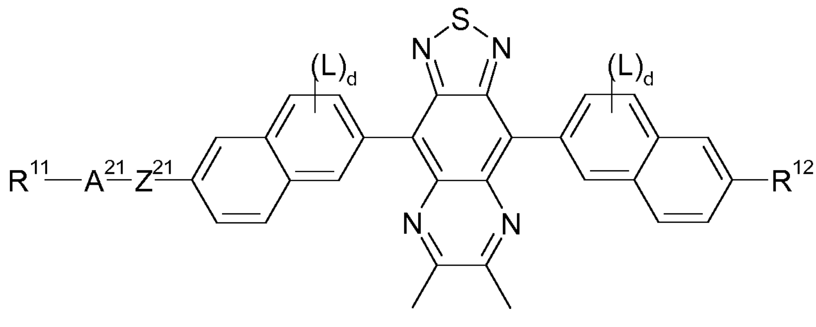

I-2-4-4

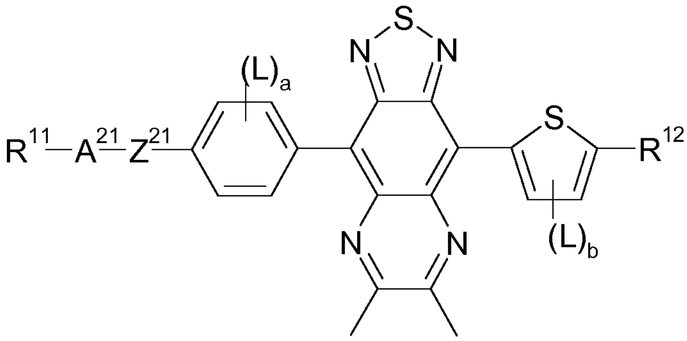

I-2-4-5

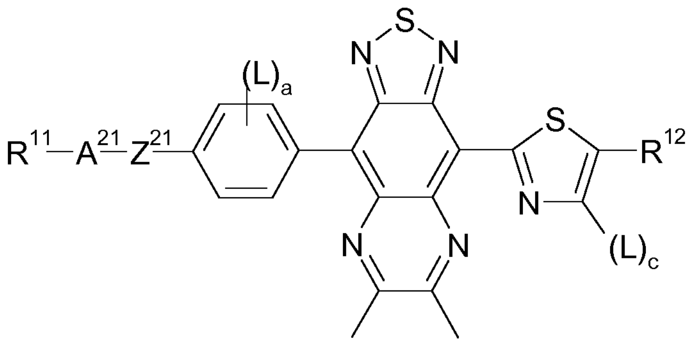

I-2-4-6

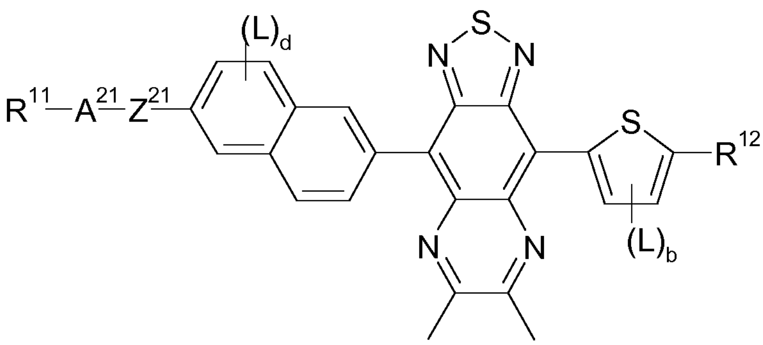

I-2-4-7

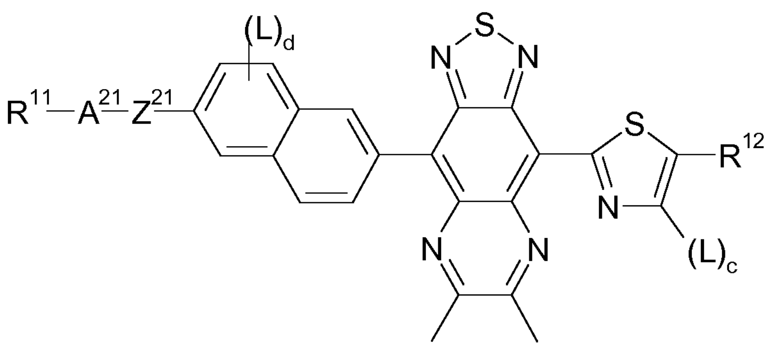

I-2-4-8

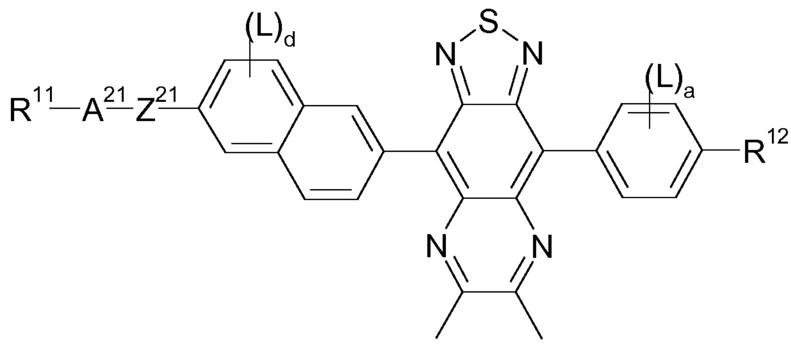

I-2-4-9

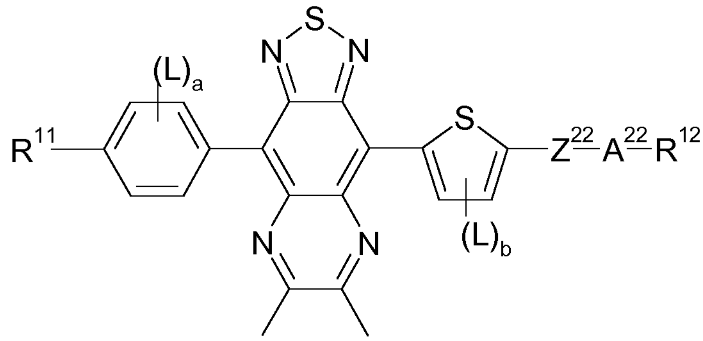

I-2-4-10

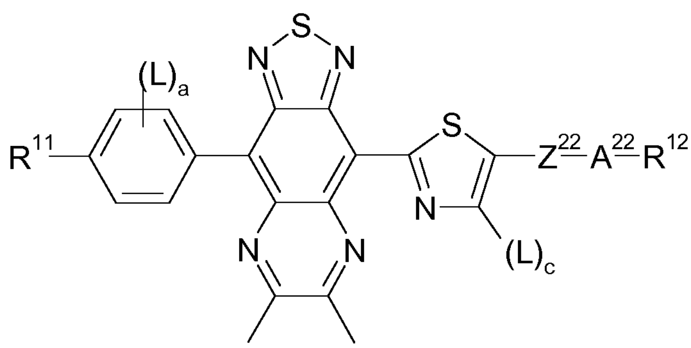

I-2-4-11

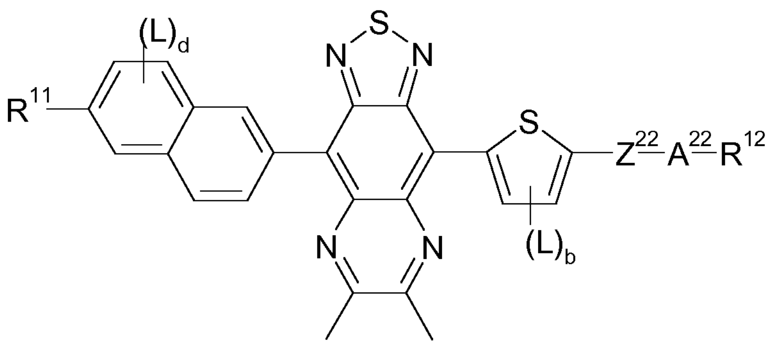

I-2-4-12

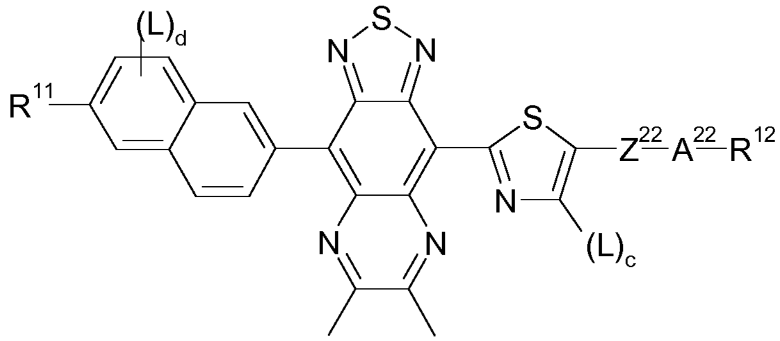

I-2-4-13

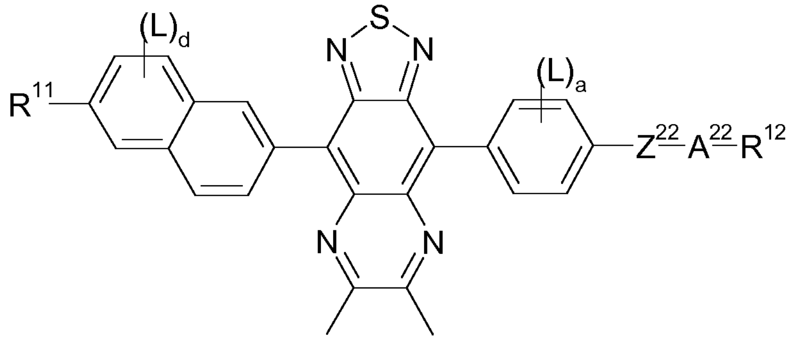

I-2-4-14

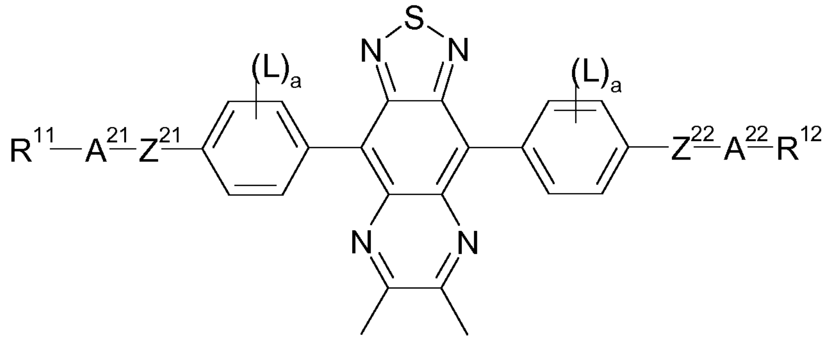

I-3-3-1

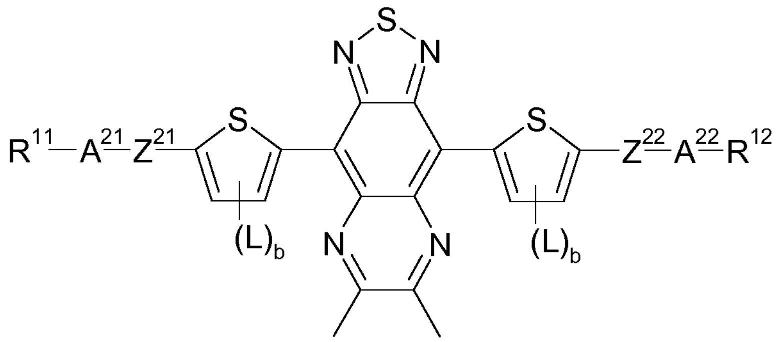

I-3-3-2

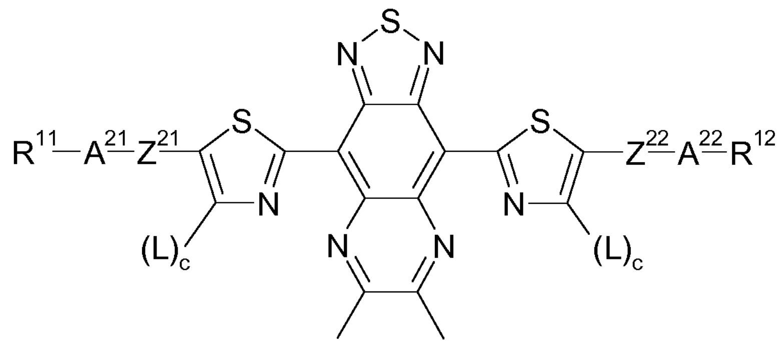

I-3-3-3

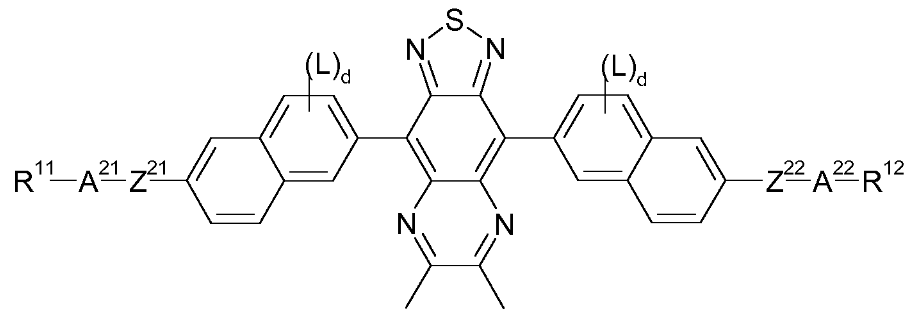

I-3-3-4

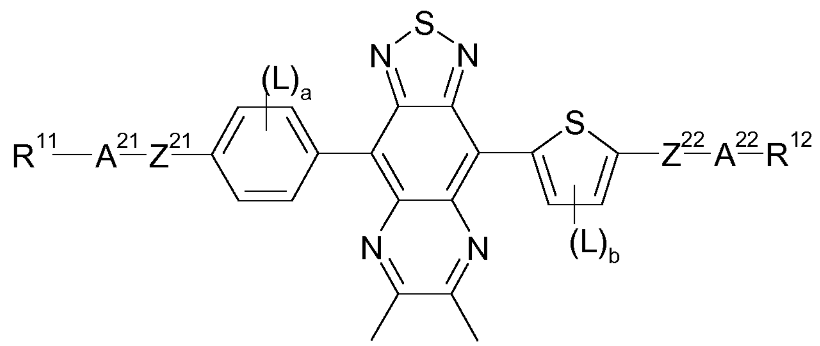

I-3-3-5

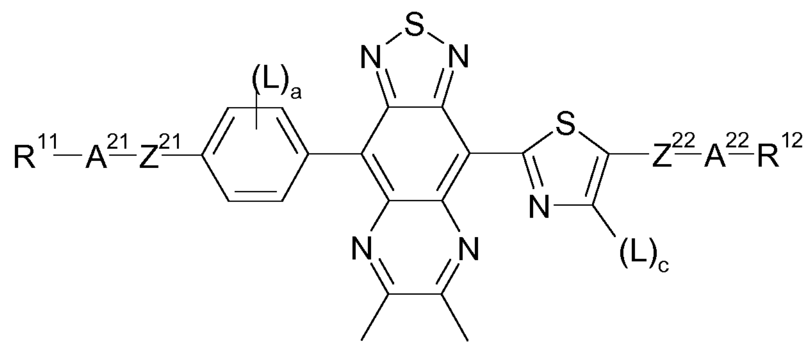

I-3-3-6

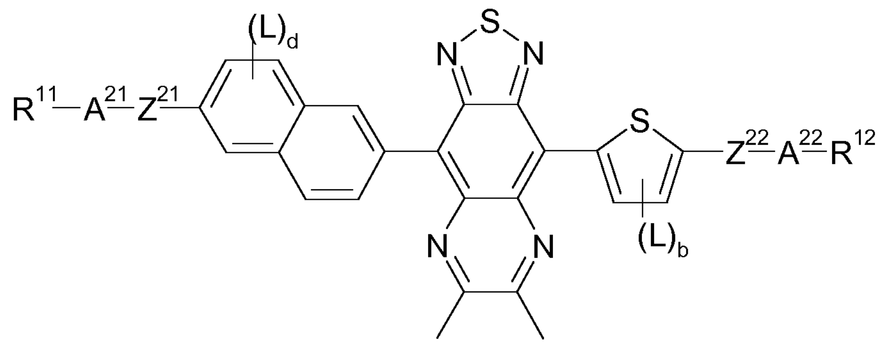

I-3-3-7

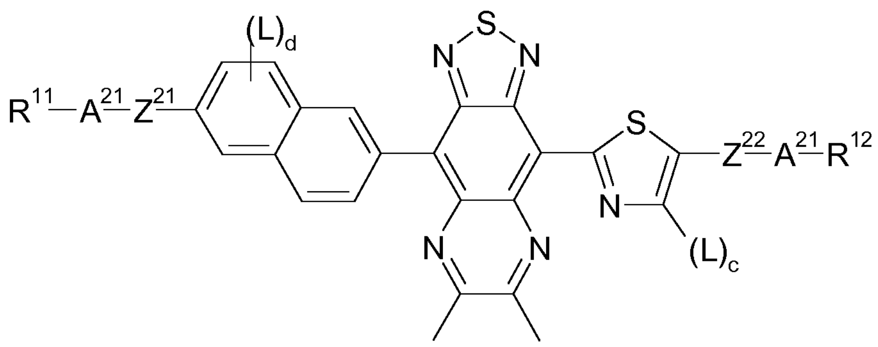

I-3-3-8

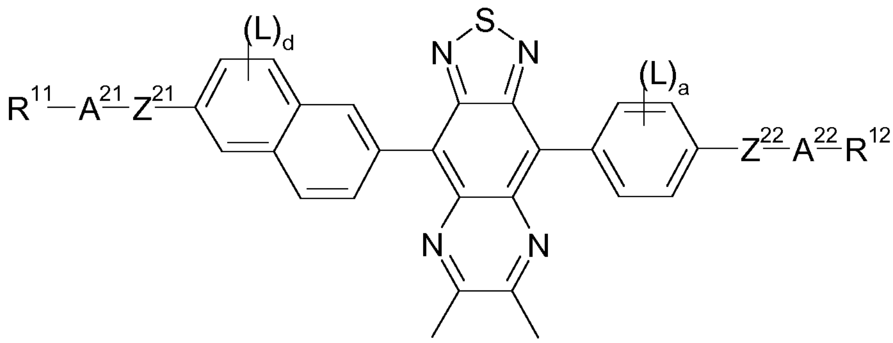

I-3-3-9

worin

$R^{11}$, $R^{12}$ unabhängig voneinander F, eine geradkettige Alkyl- oder Alkoxygruppe mit 1 bis 15 C-Atomen oder eine verzweigte Alkyl- oder Alkoxygruppe mit 3 bis 20 C-Atomen, worin auch ein oder mehrere H-Atome durch F ersetzt sein können,
$A^{11}$, $A^{12}$, $A^{21}$, $A^{22}$ jeweils unabhängig voneinander 1,4-Phenylen, 2,6-Naphthylen, Thiophen-2,5-diyl, oder Thiazol-2,5-diyl,
$Z^{21}$, $Z^{22}$ unabhängig voneinander $-CH_2CH_2-$, $-CF_2CF_2-$,-CH=CH-, -CF=CF-, -C≡C-, $-OCH_2-$, $-CH_2O-$, $-OCF_2-$, $-CF_2O-$ oder eine Einfachbindung
a unabhängig voneinander 0, 1, 2, 3, oder 4,
b unabhängig voneinander 0, 1 oder 2,
c unabhängig voneinander 0 oder 1, und
d unabhängig voneinander 1, 2, 3, 4, 5 oder 6

bedeuten und L die in Anspruch 1 angegebene Bedeutung hat.

8. FK-Medium nach einem oder mehreren der Ansprüche 1 bis 7, wobei das Medium eine oder mehrere Verbindungen der Formel I, wie in Anspruch 1 definiert, enthält, worin $Z^{21}$ und $Z^{22}$ eine Einfachbindung bedeuten.

9. Verwendung der FK-Medien nach mindestens einem der Ansprüche 1 bis 8 in elektrooptischen Anzeigen oder Vorrichtungen zur Regulierung des Energie-Durchtritts von einem Außenraum in einen Innenraum.

10. Verfahren zur Herstellung der FK-Medien nach Anspruch 1, **dadurch gekennzeichnet, daß** man zwei oder mehr mesogene Verbindungen miteinander mischt und in einem weiteren Verfahrensschritt einen oder mehrere Farbstoffe der Formel I hinzufügt.

11. Vorrichtung zur Regulierung des Energie-Durchtritts von einem Außenraum in einen Innenraum, wobei die Vorrichtung eine Schaltschicht enthaltend ein FK-Medium nach Anspruch 1 enthält.

12. Fenster, enthaltend eine Vorrichtung nach Anspruch 11.

## Claims

**1.** LC medium comprising a dye component A) comprising one or more compounds of the formula I as defined below, and a liquid-crystalline component B) comprising one or more mesogenic compounds,

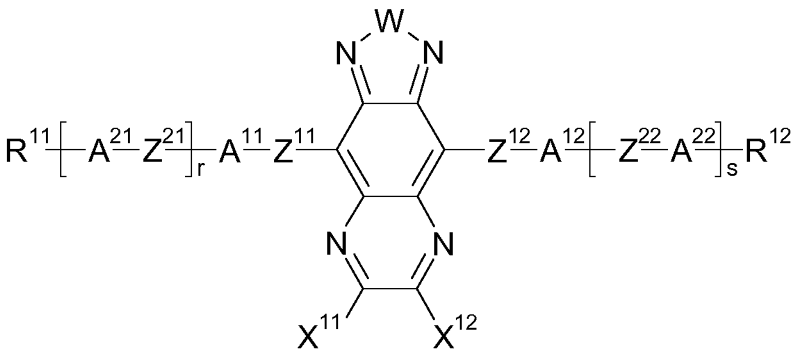

I

in which

W denotes S or Se,

$X^{11}$, $X^{12}$, identically or differently, denote H, alkyl having 1-6 C atoms, in which one or more H atoms may be replaced by F and one or more $CH_2$ groups may be replaced by -O- or -S- in such a way that no O or S atoms are adjacent, perfluoroalkyl having 1-6 C atoms, halogen, CN, $SF_5$, an aryl or heteroaryl group, which may be substituted by one or more radicals L, and alternatively the groups $X^{11}$ and $X^{12}$ together also denote a straight-chain or branched alkylene group having 2 to 10 C atoms, in which one, several or all H atoms may be replaced by F,

$R^{11}$, $R^{12}$, identically or differently, denote F, straight-chain or branched alkyl having 1 to 25 C atoms, in which, in addition, one or more non-adjacent $CH_2$ groups may in each case be replaced, independently of one another, by $-C(R^z)=C(R^z)-$, -C≡C-, $-N(R^z)-$, -O-, -S-, -C(O)-, -C(O)-O-, -O-C(O)- or -O-C(O)-O- in such a way that O and/or S atoms are not linked directly to one another, and in which, in addition, one or more H atoms may be replaced by F, Cl, Br, I or CN,

$R^z$ on each occurrence, identically or differently, denotes H, halogen, straight-chain, branched or cyclic alkyl having 1 to 25 C atoms, in which, in addition, one or more non-adjacent $CH_2$ groups may be replaced by -O-, -S-, -C(O)-, -C(O)-O-, -O-C(O)- or -O-C(O)-O- in such a way that O and/or S atoms are not linked directly to one another and in which, in addition, one or more H atoms may be replaced by F or Cl,

$A^{11}$, $A^{12}$ in each case, independently of one another, denote an aryl or heteroaryl group, which may be substituted by one or more radicals L,

$A^{21}$, $A^{22}$ are in each case, independently of one another, defined like $A^{11}$ or denote a cyclic alkyl group having 3 to 10 C atoms, in which 1 to 4 $CH_2$ groups may be replaced by O in such a way that two O atoms are not adjacent,

L on each occurrence, identically or differently, denotes OH, $CH_2OH$, F, Cl, Br, I, -CN, $-NO_2$, $SF_5$, -NCO, -NCS, -OCN, -SCN, $-C(=O)N(R^z)_2$, $-C(=O)R^z$, $-N(R^z)_2$, optionally substitu-ted silyl, optionally substituted aryl having 6 to 20 C atoms, or straight-chain or branched alkyl, alkoxy, alkylcarbonyl, alkoxycarbonyl, alkylcarbonyloxy or alkoxycarbonyloxy having 1 to 25 C atoms, in which, in addition, one or more H atoms may be replaced by F or Cl,

$Z^{11}$, $Z^{12}$ on each occurrence, identically or differently, denote a single bond, $-CR^{x1}=CR^{x2}-$, -C≡C- or -C(O)-,

$Z^{21}$, $Z^{22}$ are on each occurrence, identically or differently, defined like $Z^{11}$ or denote -O-, -S-, $-CR^{y1}R^{y2}-$, $-CF_2O-$, $-OCF_2-$, -C(O)-O-, -O-C(O)-, -O-C(O)-O-, $-OCH_2-$, $-CH_2O-$, $-SCH_2-$, $-CH_2S-$, $-CF_2S-$, $-SCF_2-$, $-(CH_2)_{n1}-$, $-CF_2CH_2-$, $-CH_2CF_2-$, $-(CF_2)_{n1}-$, -CH=CH-COO- or -OCO-CH=CH-,

$R^{x1}$, $R^{x2}$, independently of one another, denote H, F, Cl, CN or alkyl having 1-12 C atoms,

$R^{y1}$, $R^{y2}$ in each case, independently of one another, denote H or alkyl having 1-12 C atoms,

r, s, independently of one another, denote 0, 1, 2 or 3,

n1 denotes 1, 2, 3 or 4,

with the proviso that the compound of the formula

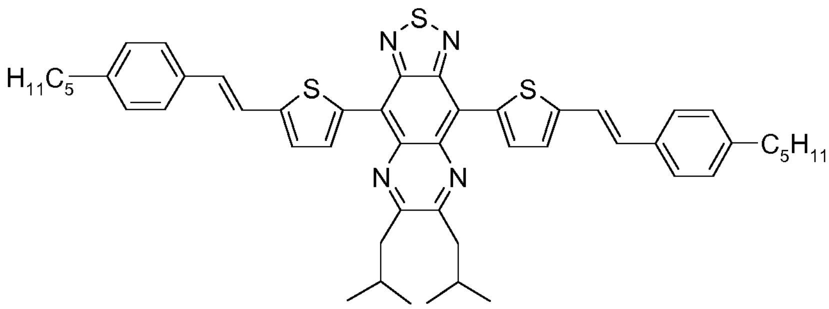

is excluded.

2. LC medium according to Claim 1, where the medium comprises one or more compounds of the formula I, as defined in Claim 1, in which, if r and s are identical, at least one of the groups
$A^{11}$ and $A^{12}$, or
$R^{11}$ and $R^{12}$, or
$A^{21}$ and $A^{22}$, or
$Z^{11}$ and $Z^{12}$, or
$Z^{21}$ and $Z^{22}$, or
$X^{11}$ and $X^{12}$
are different from one another.

3. LC medium according to Claim 1, where the medium comprises one or more compounds of the formula I, as defined in Claim 1, in which r denotes 0, 1 or 2 and s denotes r+1.

4. LC medium according to one or more of Claims 1 to 3, where the medium comprises one or more compounds of the formula I, as defined in Claim 1, in which W denotes -S-.

5. LC medium according to one or more of Claims 1 to 4, where the medium comprises one or more compounds of the formula I, as defined in Claim 1, in which $X^{11}$ and $X^{12}$ in each case, independently of one another, denote H, $CH_3$, $C_2H_5$, F, Cl, $CF_3$, $OCF_3$, CN or together denote 1,4-butylene, 1,3-hexafluoropropylidene or 1,4-octafluoro-butylidene.

6. LC medium according to one or more of Claims 1 to 5, where the medium comprises one or more compounds of the formula I, as defined in Claim 1, in which $A^{11}$, $A^{12}$, $A^{21}$, $A^{22}$ are selected on each occurrence, identically or differently, from groups optionally substituted by radicals L and derived from the parent structures benzene, fluorene, naphthalene, pyridine, pyrimidine, thiophene, thiazole, dihydrothienodioxin, benzothiophene, dibenzothiophene, benzodithiophene, cyclo-pentadithiophene, thienothiophene, indenothiophene, furan, benzofuran, dibenzofuran and quinoline, where L is selected from the groups F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$ and phenyl.

7. LC medium according to Claim 1, where the medium comprises one or more compounds of the formula I selected from the following sub-formulae:

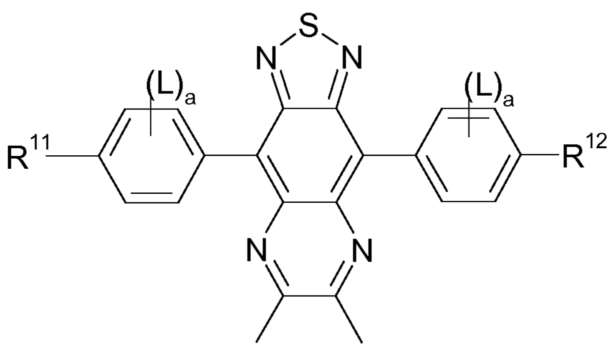

I-1-3-1

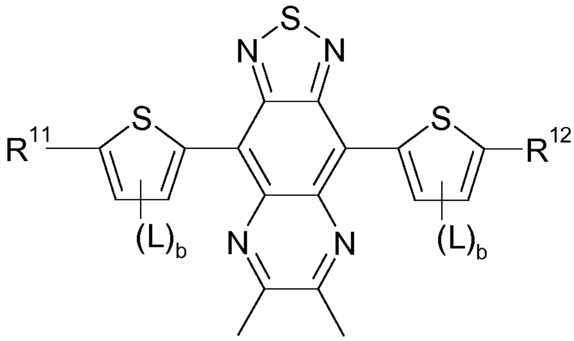

I-1-3-2

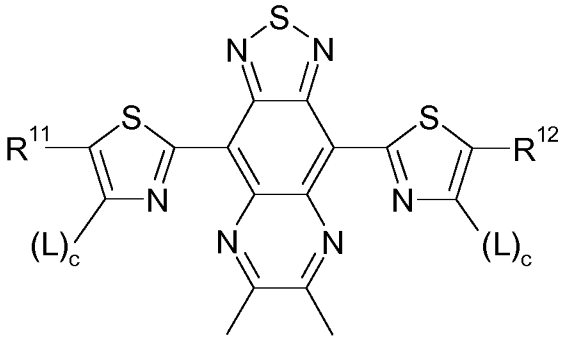

I-1-3-3

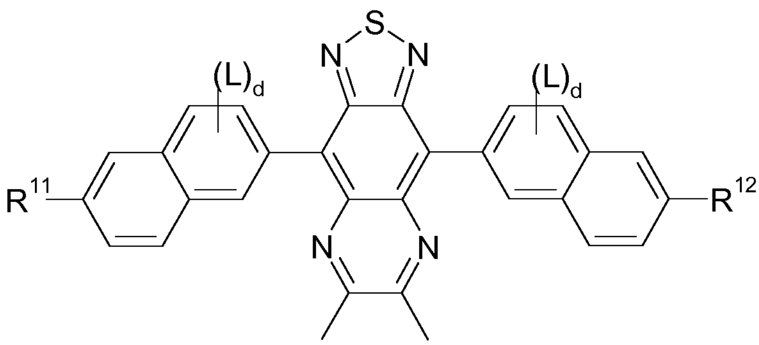

I-1-3-4

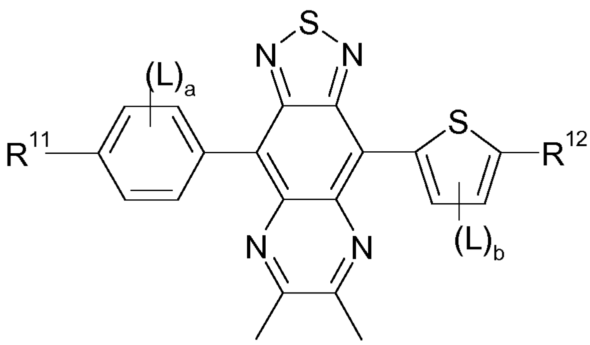

I-1-3-5

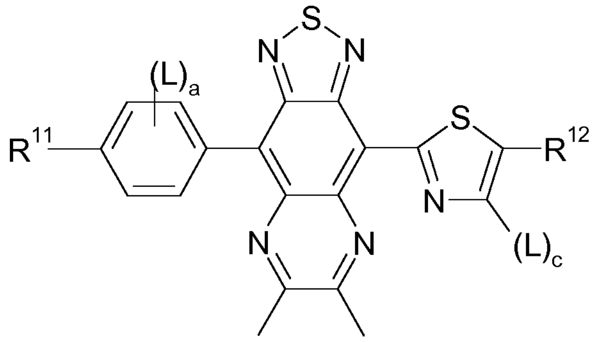

I-1-3-6

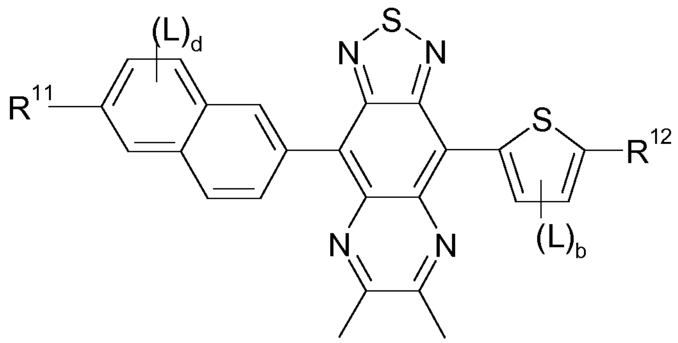

I-1-3-7

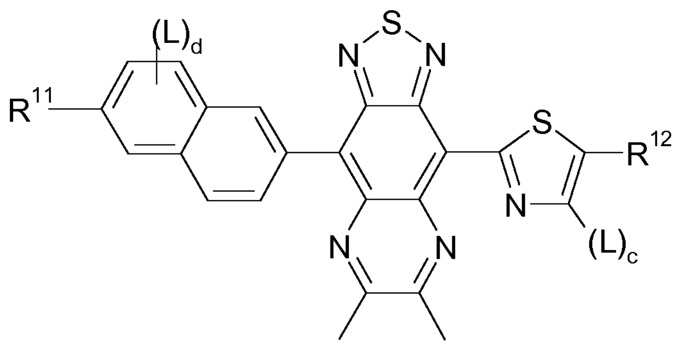

I-1-3-8

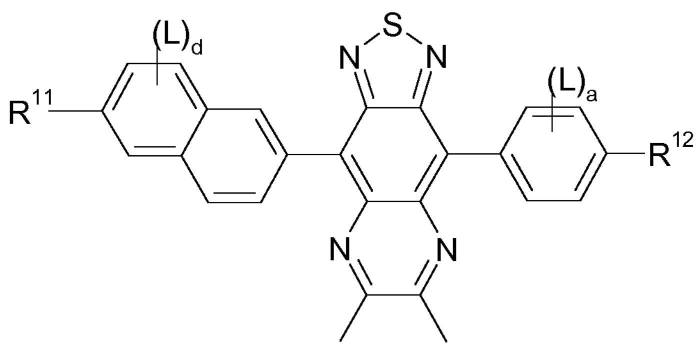

I-1-3-9

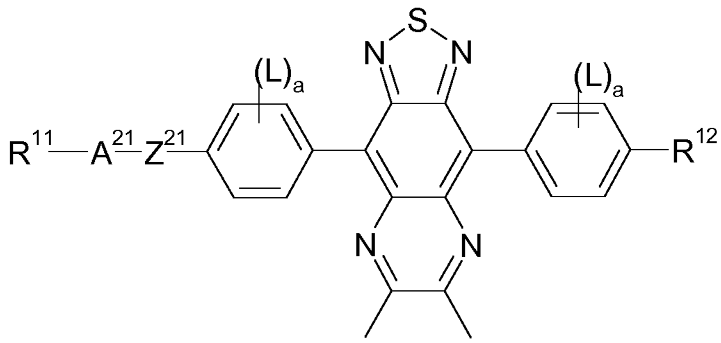

I-2-4-1

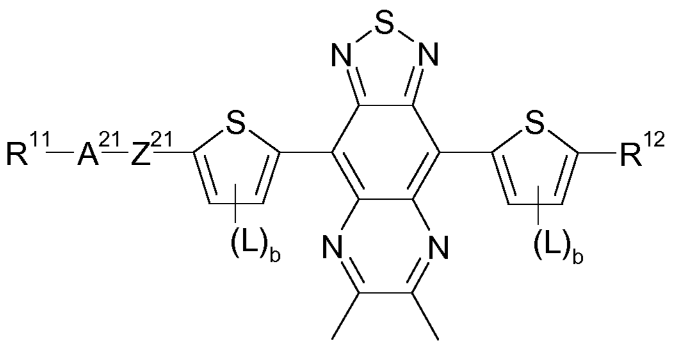

I-2-4-2

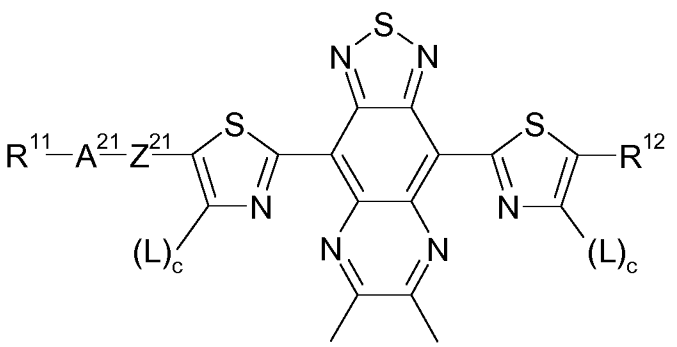

I-2-4-3

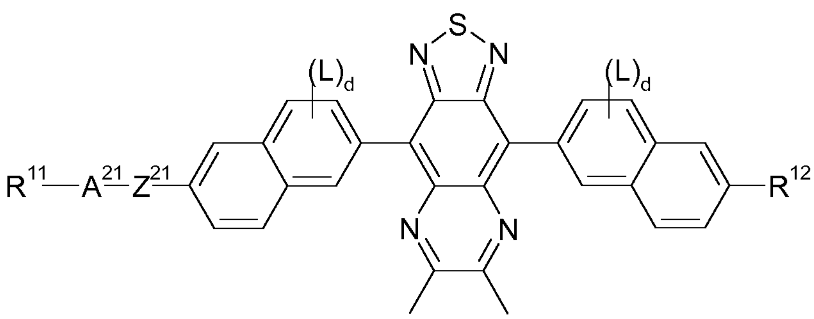

I-2-4-4

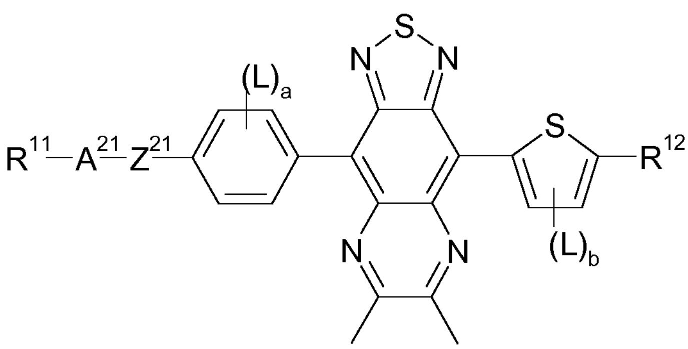

I-2-4-5

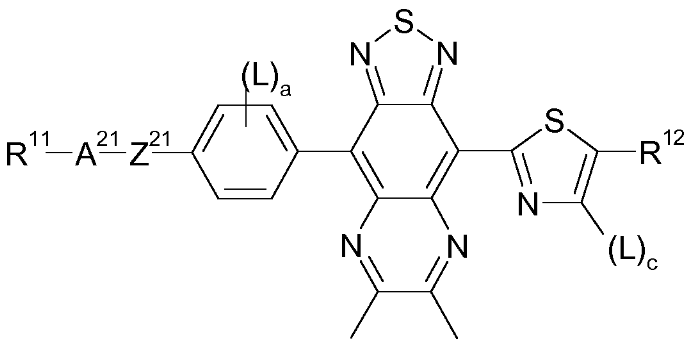

I-2-4-6

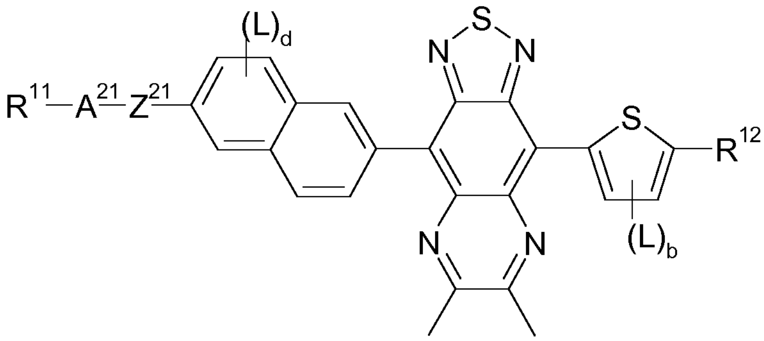

I-2-4-7

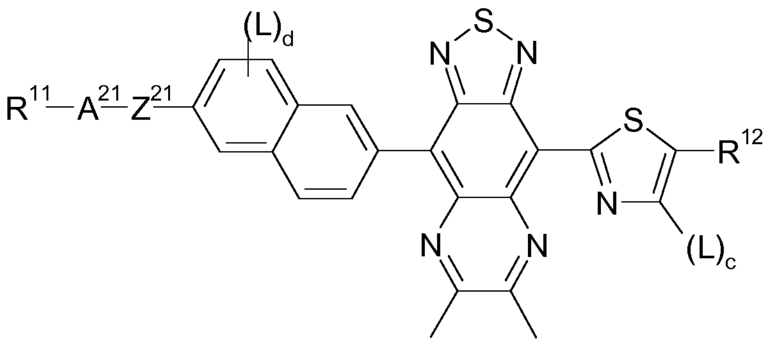

I-2-4-8

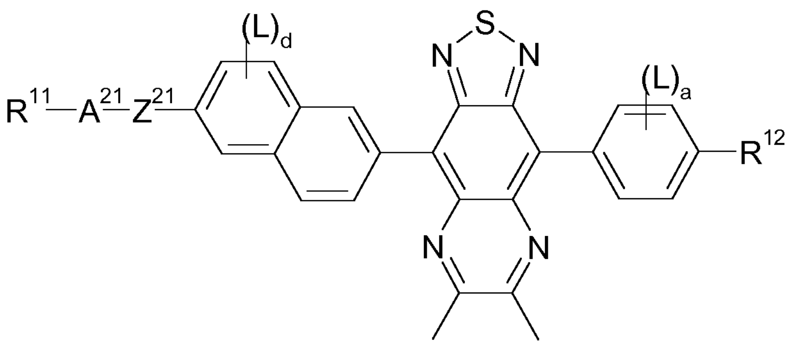

I-2-4-9

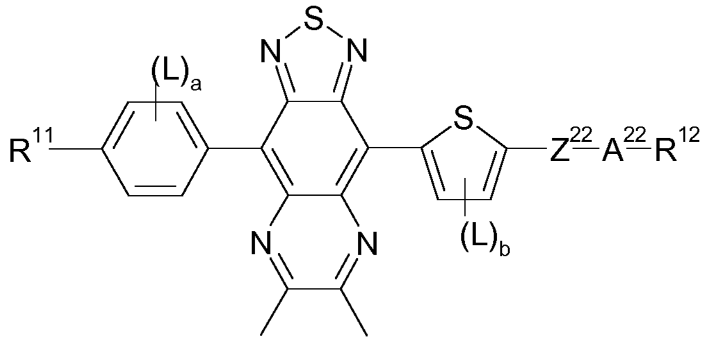

I-2-4-10

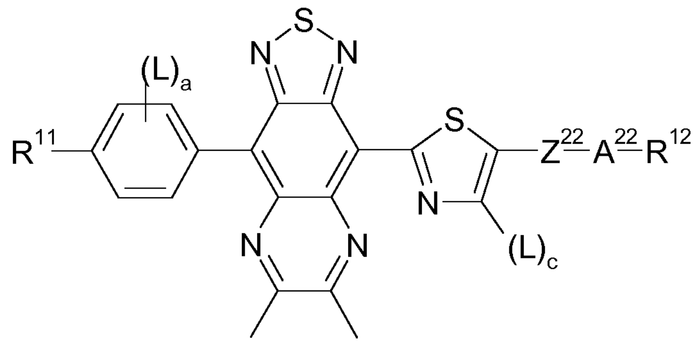

I-2-4-11

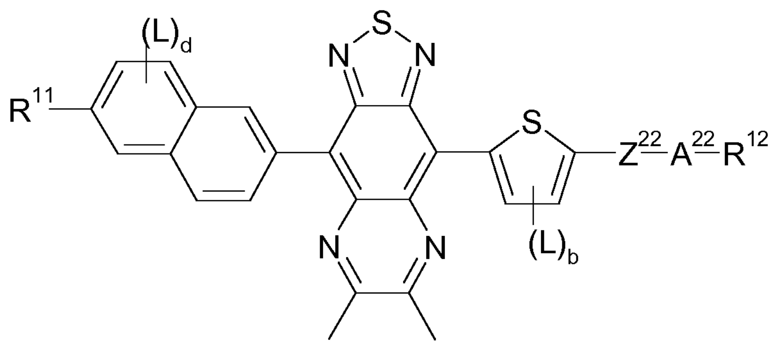

I-2-4-12

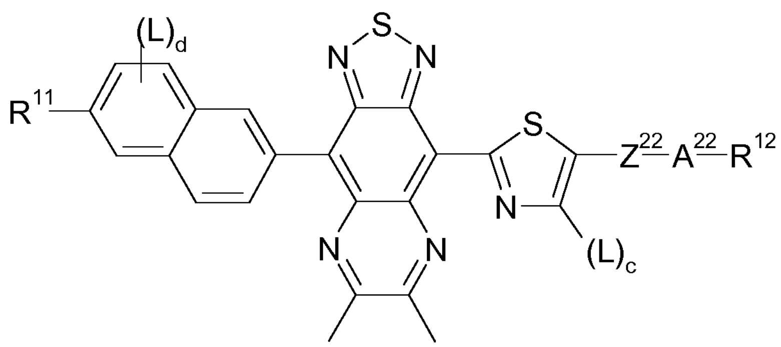

I-2-4-13

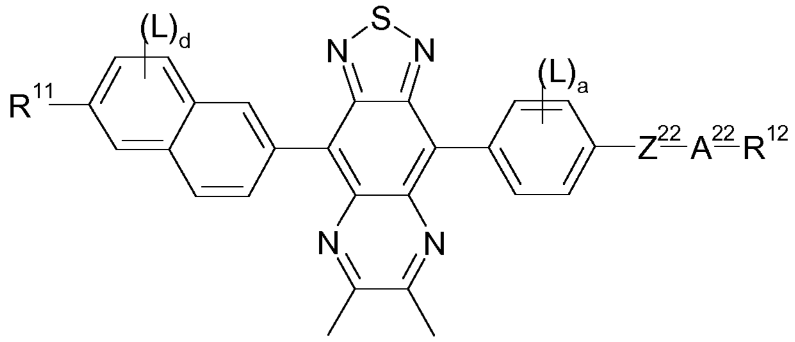

I-2-4-14

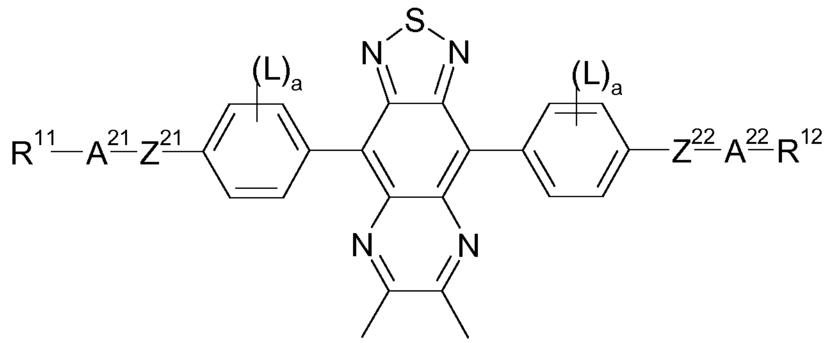

I-3-3-1

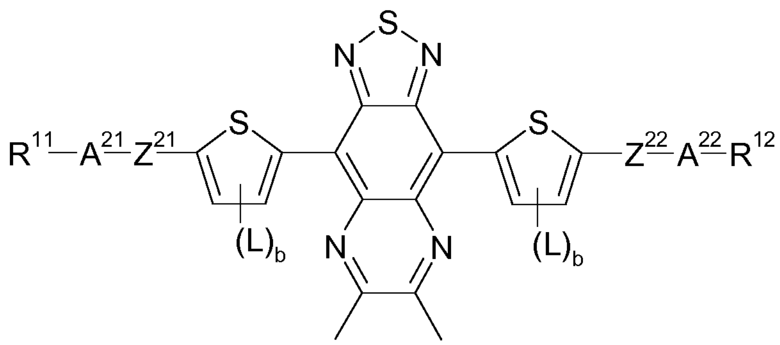

I-3-3-2

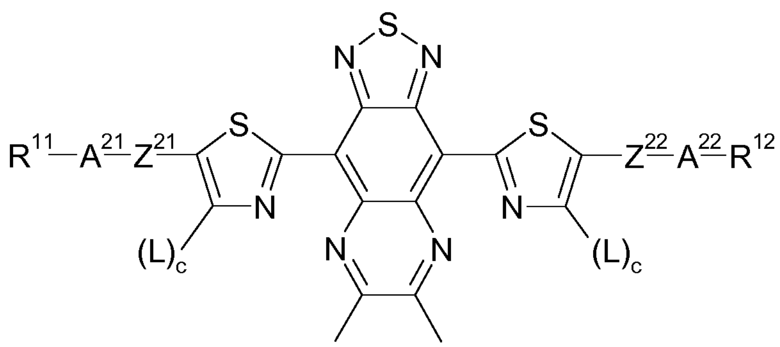

I-3-3-3

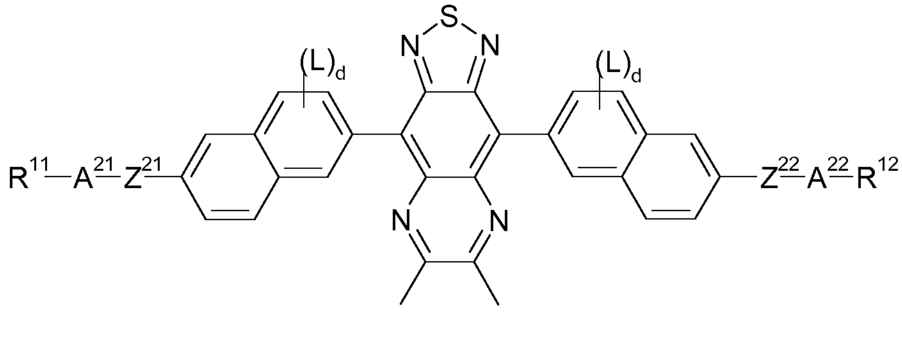

I-3-3-4

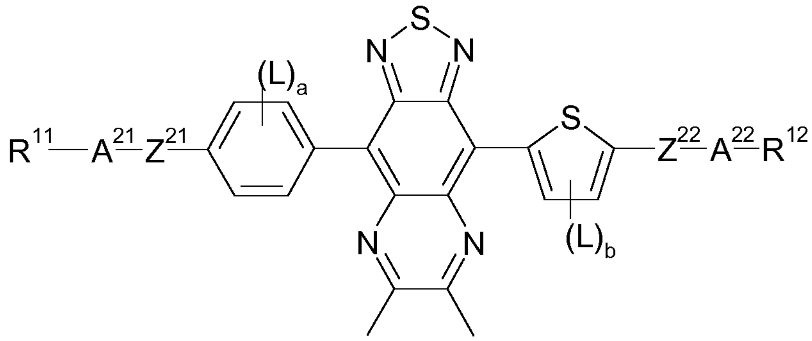

I-3-3-5

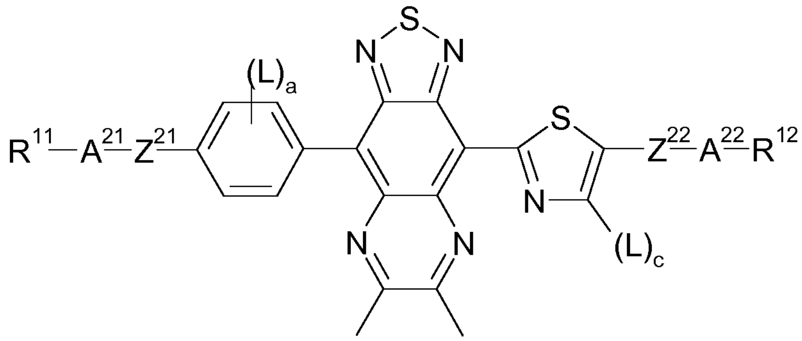

I-3-3-6

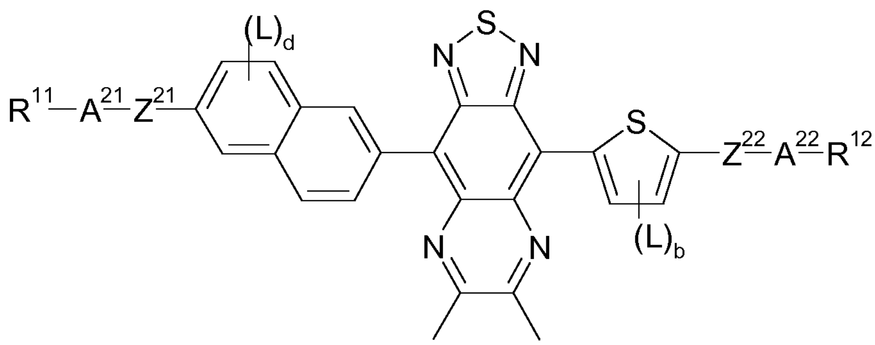

I-3-3-7

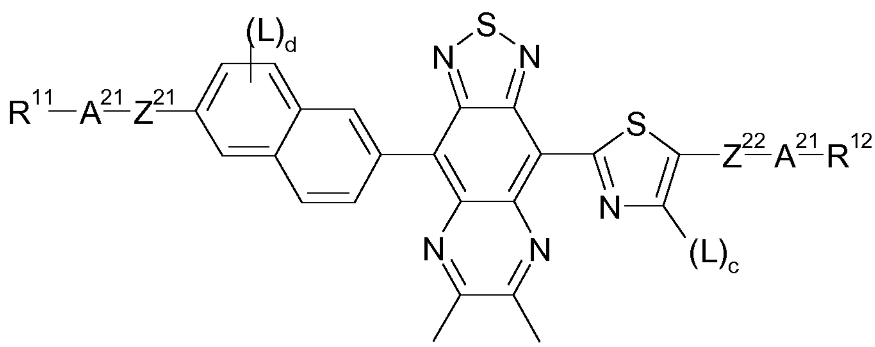

I-3-3-8

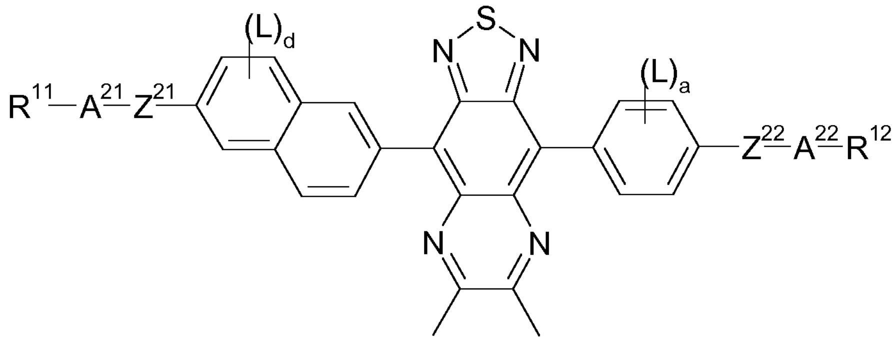

I-3-3-9

in which

$R^{11}$, $R^{12}$, independently of one another, denote F, a straight-chain alkyl or alkoxy group having 1 to 15 C atoms or a branched alkyl or alkoxy group having 3 to 20 C atoms, in which, in addition, one or more H atoms may be replaced by F,
$A^{11}$, $A^{12}$, $A^{21}$, $A^{22}$ in each case, independently of one another, denote 1,4-phenylene, 2,6-naphthylene, thiophene-2,5-diyl or thiazole-2,5-diyl,
$Z^{21}$, $Z^{22}$, independently of one another, denote $-CH_2CH_2-$, $-CF_2CF_2-$, -CH=CH-, -CF=CF-, -C≡C-, $-OCH_2-$, $-CH_2O-$, $-OCF_2-$, $-CF_2O-$ or a single bond,
a, independently of one another, denotes 0, 1, 2, 3 or 4,
b, independently of one another, denotes 0, 1 or 2,
c, independently of one another, denotes 0 or 1, and
d, independently of one another, denotes 1, 2, 3, 4, 5 or 6,

and L has the meaning indicated in Claim 1.

**8.** LC medium according to one or more of Claims 1 to 7, where the medium comprises one or more compounds of the formula I, as defined in Claim 1, in which $Z^{21}$ and $Z^{22}$ denote a single bond.

**9.** Use of the LC media according to at least one of Claims 1 to 8 in electro-optical displays or devices for regulating the passage of energy from an outside space into an inside space.

**10.** Process for the preparation of the LC media according to Claim 1, **characterised in that** two or more mesogenic compounds are mixed with one another, and, in a further process step, one or more dyes of the formula I are added.

**11.** Device for regulating the passage of energy from an outside space into an inside space, where the device contains a switching layer comprising an LC medium according to Claim 1.

**12.** Window containing a device according to Claim 11.

## Revendications

**1.** Milieu LC comprenant un composant de colorant A) qui comprend un ou plusieurs composé(s) de la formule I telle que définie ci-après, et un composant cristallin liquide B) qui comprend un ou plusieurs composé(s) mésogènes :

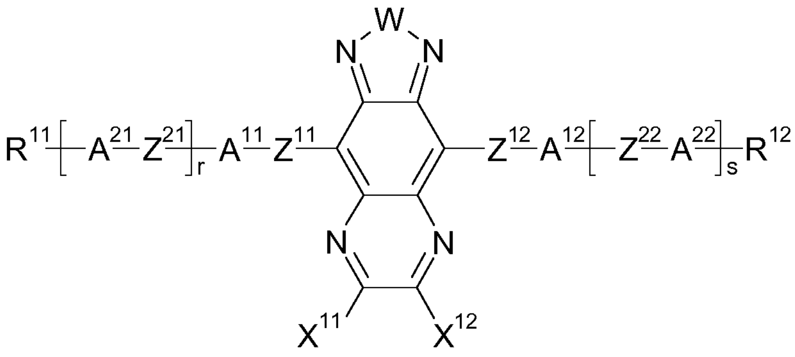

I

dans laquelle :

W représente S ou Se ;

$X^{11}$, $X^{12}$ représentent, de manière identique ou différente, H, alkyle qui comporte de 1 à 6 atome(s) de C , où un ou plusieurs atome(s) de H peut/peuvent être remplacé(s) par F et un ou plusieurs groupe(s) $CH_2$ peut/peuvent être remplacé(s) par -O- ou par -S- de telle sorte que des atomes de O ou de S ne soient pas adjacents, perfluoroalkyle qui comporte de 1 à 6 atome(s) de C, halogène, CN, $SF_5$, un groupe aryle ou hétéroaryle, lequel peut être substitué par un radical ou par plusieurs radicaux L, et à titre d'alternative, les groupes $X^{11}$ et $X^{12}$ en association représentent également un groupe alkylène en chaîne droite ou ramifié qui comporte de 2 à 10 atomes de C, où un ou plusieurs atome(s) de H ou tous peut/peuvent être remplacé(s) par F ;

$R^{11}$, $R^{12}$ représentent, de manière identique ou différente, F, alkyle en chaîne droite ou ramifié qui comporte de 1 à 25 atome(s) de C, où, en outre, un ou plusieurs groupe(s) $CH_2$ non adjacents peut/peuvent dans chaque cas être remplacé(s), de manière indépendante les uns des autres, par $-C(R^z)=C(R^z)-$, -C≡C-, $-N(R^z)-$, -O-, -S-, -C(O)-, -C(O)-O-, -O-C(O)- ou -O-C(O)-O- de telle sorte que des atomes de O et/ou de S ne soient pas liés directement les uns aux autres, et où, en outre, un ou plusieurs atome(s) de H peut/peuvent être remplacé(s) par F, Cl, Br, I ou CN ;

$R^z$ représente pour chaque occurrence, de manière identique ou différente, H, halogène, alkyle en chaîne droite, ramifié ou cyclique qui comporte de 1 à 25 atome(s) de C, où, en outre, un ou plusieurs groupe(s) $CH_2$ non adjacents peut/ peuvent être remplacé(s) par -O-, -S-, -C(O)-, -C(O)-O-, -O-C(O)- ou -O-C(O)-O- de telle sorte que des atomes de O et/ou de S ne soient pas liés directement les uns aux autres et où, en outre, un ou plusieurs atome(s) de H peut/ peuvent être remplacé(s) par F ou Cl ;

$A^{11}$, $A^{12}$ représentent, dans chaque cas de manière indépendante l'un de l'autre, un groupe aryle ou hétéroaryle, lequel peut être substitué par un radical ou par plusieurs radicaux L ;

$A^{21}$, $A^{22}$ sont dans chaque cas, de manière indépendante l'un de l'autre, définis de façon similaire à $A^{11}$ ou représentent un groupe alkyle cyclique qui comporte de 3 à 10 atomes de C, où 1 à 4 groupe(s) $CH_2$ peut/peuvent être remplacé(s) par O de telle sorte que deux atomes de O ne soient pas adjacents ;

L représente pour chaque occurrence, de manière identique ou différente, OH, $CH_2OH$, F, Cl, Br, I, -CN, $-NO_2$, $SF_5$, -NCO, -NCS, -OCN, -SCN, $-C(=O)N(R^z)_2$, $-C(=O)R^z$, $-N(R^z)_2$, silyle en option substitué, aryle en option substitué qui comporte de 6 à 20 atomes de C, ou alkyle, alcoxy, alkylcarbonyle, alcoxycarbonyle, alkylcarbonyloxy ou alcoxycarbonyloxy en chaîne droite ou ramifié qui comporte de 1 à 25 atome(s) de C, où, en outre, un ou plusieurs atome(s) de H peut/peuvent être remplacé(s) par F ou Cl ;

$Z^{11}$, $Z^{12}$ représentent pour chaque occurrence, de manière identique ou différente, une liaison simple, $-CR^{x1}=CR^{x2}-$, -C≡C- ou -C(O)- ;

$Z^{21}$, $Z^{22}$ sont, pour chaque occurrence, de manière identique ou différente, définis de façon similaire à $Z^{11}$ ou représentent -O-, -S-, $-CR^{y1}R^{y2}-$, $-CF_2O-$, $-OCF_2-$, -C(O)-O-, -O-C(O)-, -O-C(O)-O-, $-OCH_2-$, $-CH_2O-$, $-SCH_2-$, $-CH_2S-$, $-CF_2S-$, $-SCF_2-$, $-(CH_2)_{n1}-$, $-CF_2CH_2-$, $-CH_2CF_2-$, $-(CF_2)_{n1}-$, -CH=CH-COO- ou -OCO-CH=CH- ;

$R^{x1}$, $R^{x2}$ représentent, de manière indépendante l'un de l'autre, H, F, Cl, CN ou alkyle qui comporte de 1 à 12 atome(s) de C ;

$R^{y1}$, $R^{y2}$ représentent dans chaque cas, de manière indépendante l'un de l'autre, H ou alkyle qui comporte de 1 à 12 atome(s) de C ;

r, s, représentent, de manière indépendante l'un de l'autre, 0, 1, 2 ou 3 ;

n1 représente 1, 2, 3 ou 4 ;

étant entendu que le composé de la formule :

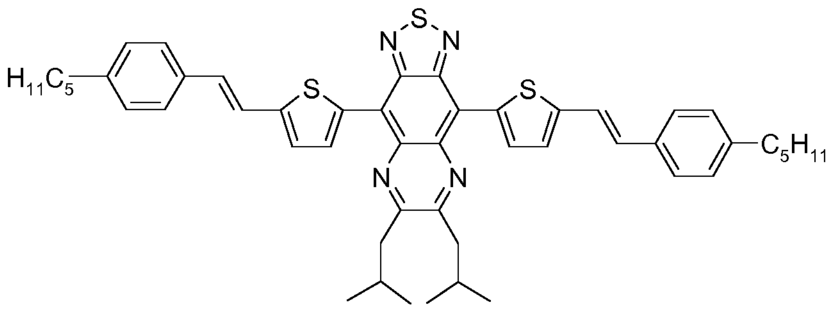

est exclu.

2. Milieu LC selon la revendication 1, dans lequel le milieu comprend un ou plusieurs composé(s) de la formule I, telle que définie selon la revendication 1, où, si r et s sont identiques, au moins l'un des groupes :

$A^{11}$ et $A^{12}$ ; ou
$R^{11}$ et $R^{12}$ ; ou
$A^{21}$ et $A^{22}$ ; ou
$Z^{11}$ et $Z^{12}$ ; ou
$Z^{21}$ et $Z^{22}$ ; ou
$X^{11}$ et $X^{12}$

est différent des autres.

3. Milieu LC selon la revendication 1, dans lequel le milieu comprend un ou plusieurs composé(s) de la formule I, telle que définie selon la revendication 1, dans laquelle r représente 0, 1 ou 2 et s représente r+1.

4. Milieu LC selon une ou plusieurs des revendications 1 à 3, dans lequel le milieu comprend un ou plusieurs composé(s) de la formule I, telle que définie selon la revendication 1, dans laquelle W représente -S-.

5. Milieu LC selon une ou plusieurs des revendications 1 à 4, dans lequel le milieu comprend un ou plusieurs composé(s) de la formule I, telle que définie selon la revendication 1, dans laquelle $X^{11}$ et $X^{12}$ représentent dans chaque cas, de manière indépendante l'un de l'autre, H, $CH_3$, $C_2H_5$, F, Cl, $CF_3$, $OCF_3$, CN ou représentent en association 1,4-butylène, 1,3-hexafluoropropylidène ou 1,4-octafluoro-butylidène.

6. Milieu LC selon une ou plusieurs des revendications 1 à 5, dans lequel le milieu comprend un ou plusieurs composé(s) de la formule I, telle que définie selon la revendication 1, dans laquelle $A^{11}$, $A^{12}$, $A^{21}$, $A^{22}$ sont sélectionnés pour chaque occurrence, de manière identique ou différente, parmi des groupes qui sont en option substitués par des radicaux L et qui sont dérivés à partir des structures parentes benzène, fluorène, naphtalène, pyridine, pyrimidine, thiophène, thiazole, dihydrothiénodioxine, benzothiophène, dibenzothiophène, benzodithiophène, cyclopentadithiophène, thiénothiophène, indénothiophène, furane, benzofurane, dibenzofurane et quinoline, où L est sélectionné parmi les groupes F, Cl, CN, $NO_2$, $CH_3$, $C_2H_5$, $OCH_3$, $OC_2H_5$, $COCH_3$, $COC_2H_5$, $COOCH_3$, $COOC_2H_5$, $CF_3$, $OCF_3$, $OCHF_2$, $OC_2F_5$ et phényle.

7. Milieu LC selon la revendication 1, dans lequel le milieu comprend un ou plusieurs composé(s) de la formule I qui est/sont sélectionnés parmi les sous-formules qui suivent :

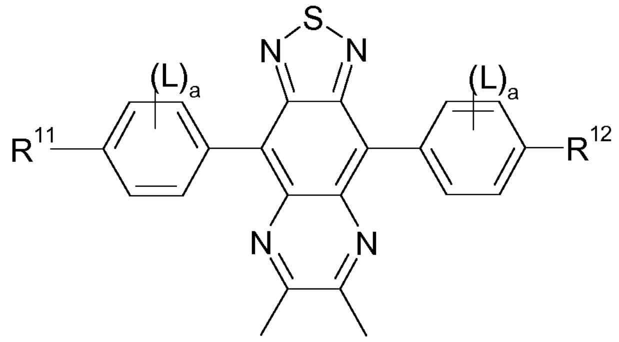

I-1-3-1

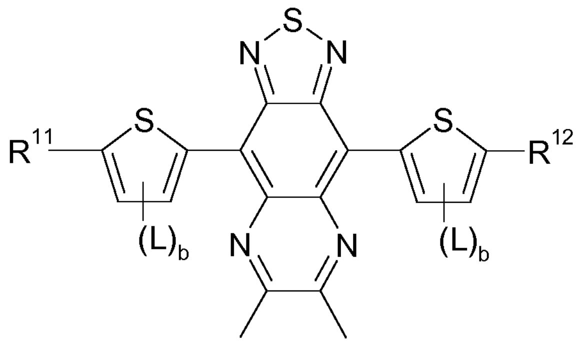

I-1-3-2

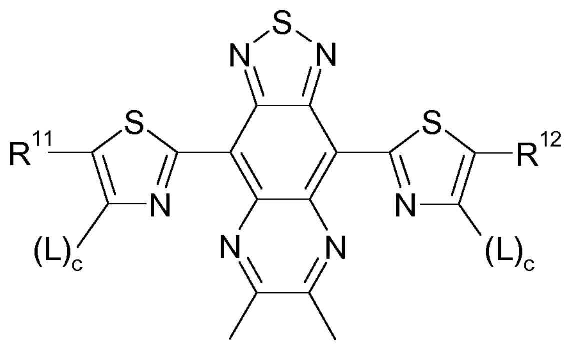

I-1-3-3

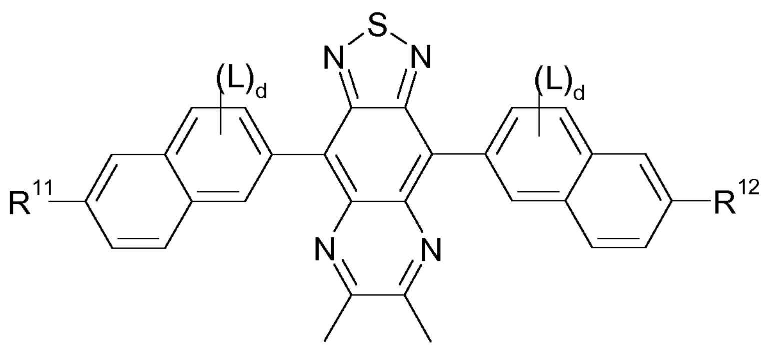

I-1-3-4

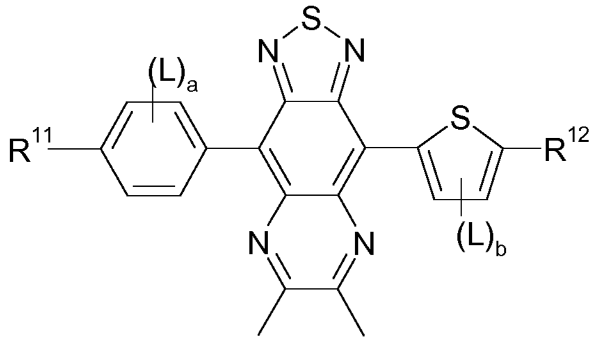

I-1-3-5

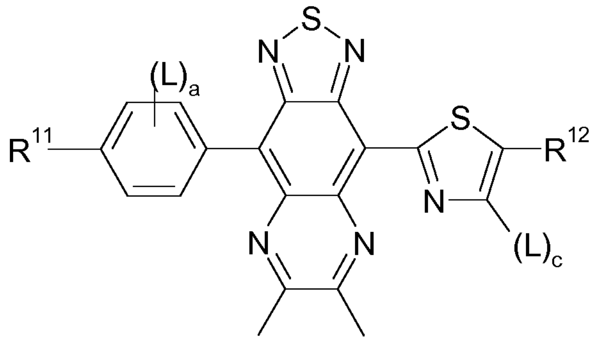

I-1-3-6

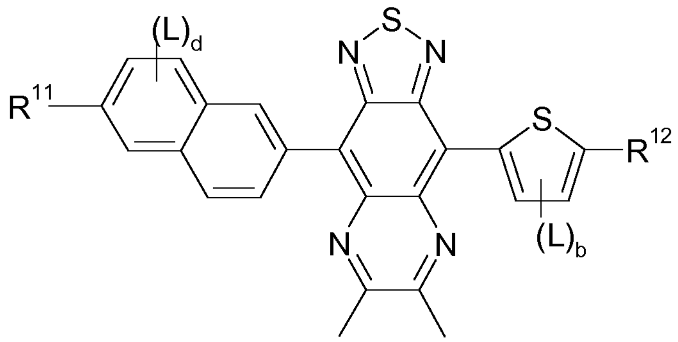

I-1-3-7

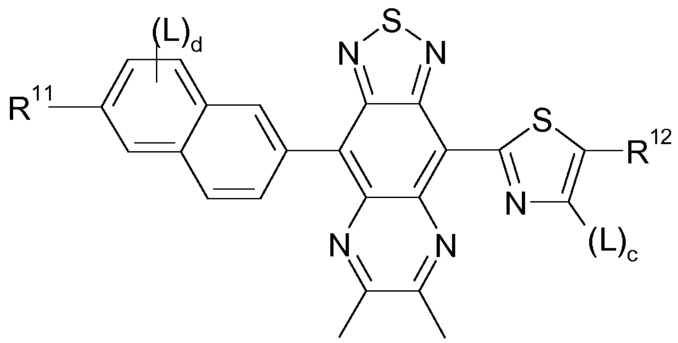

I-1-3-8

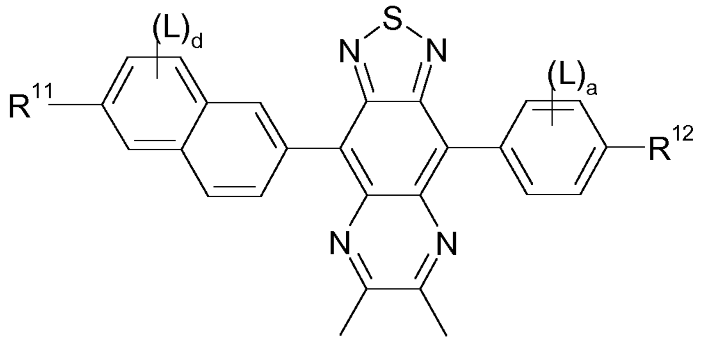

I-1-3-9

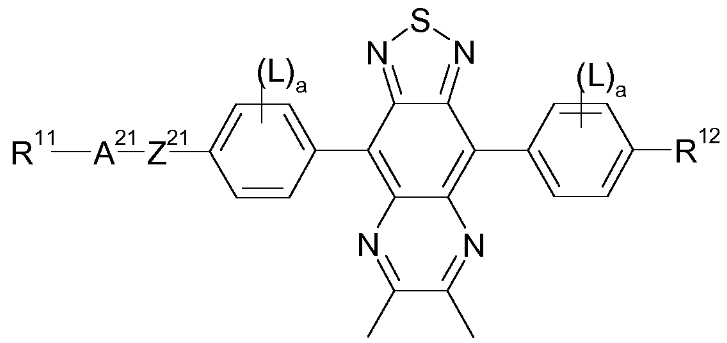

I-2-4-1

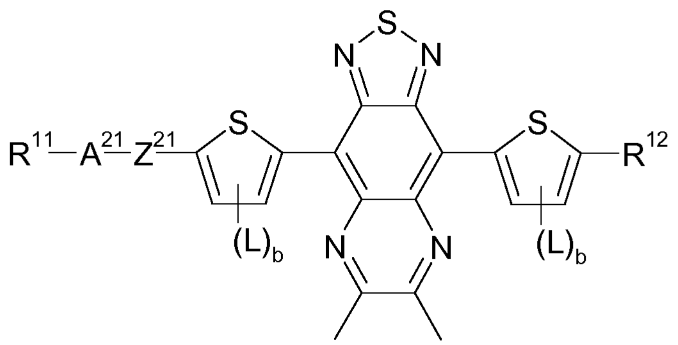

I-2-4-2

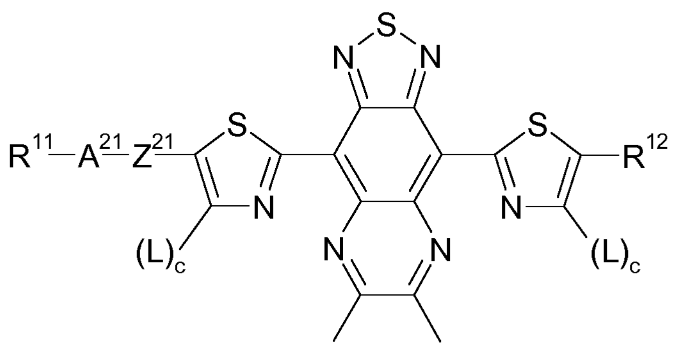

I-2-4-3

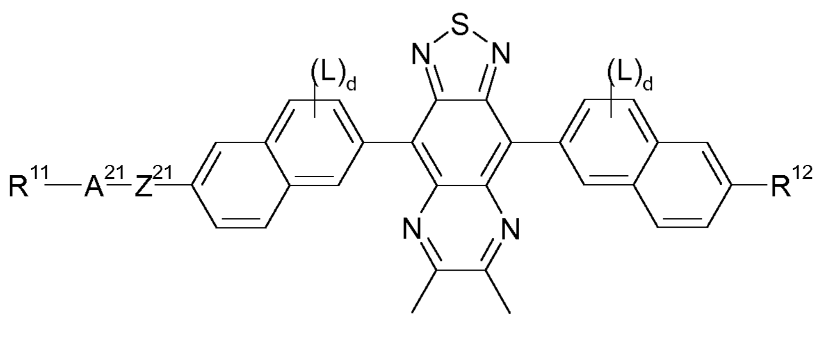

I-2-4-4

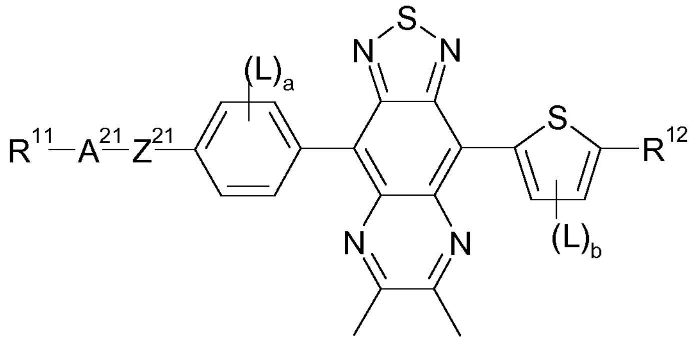

I-2-4-5

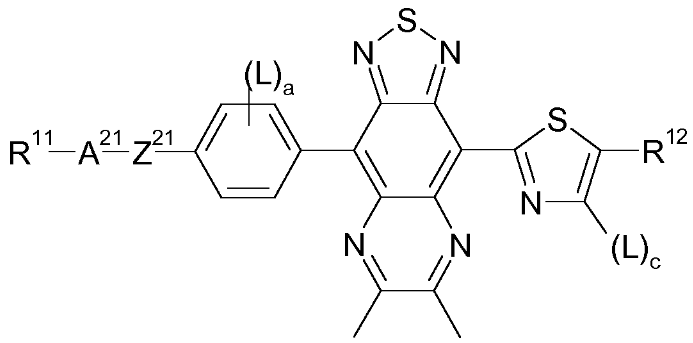

I-2-4-6

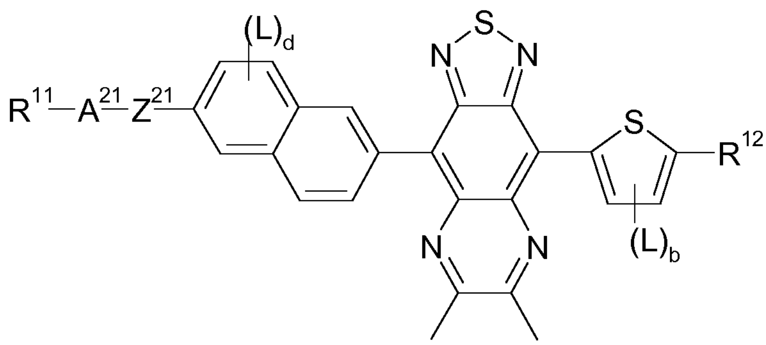

I-2-4-7

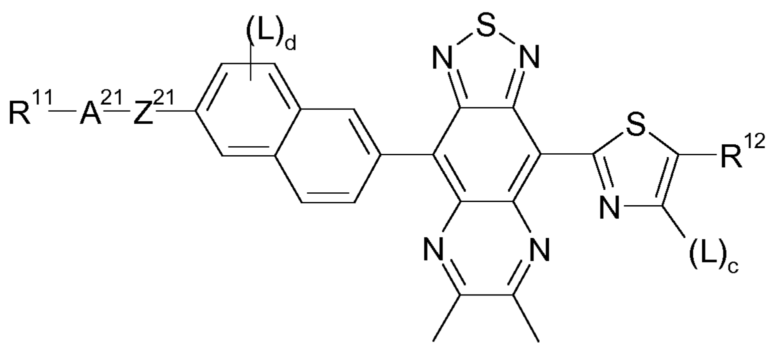

I-2-4-8

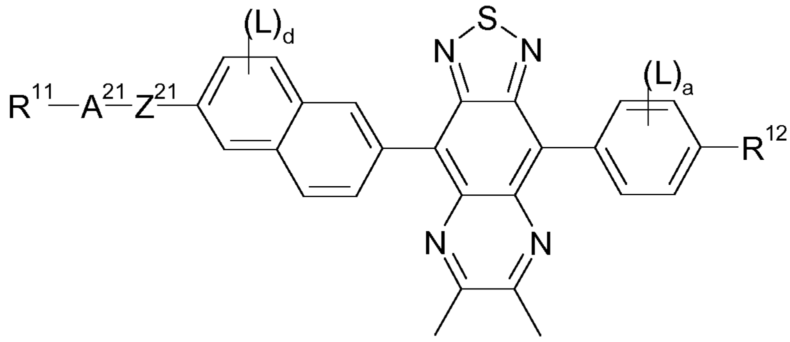

I-2-4-9

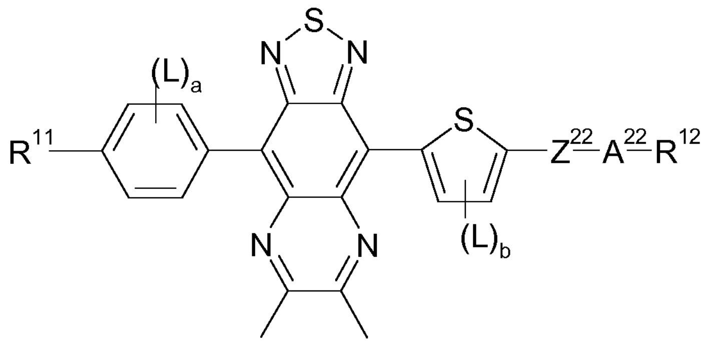

I-2-4-10

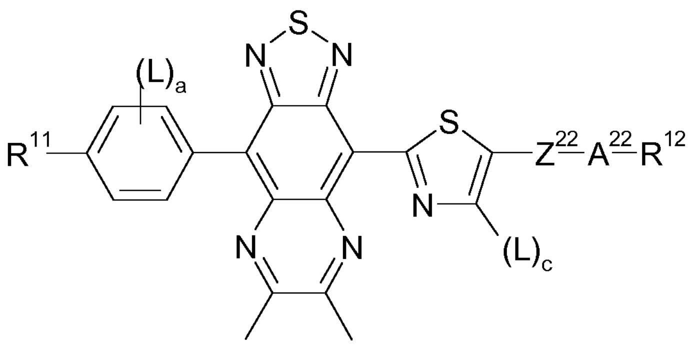

I-2-4-11

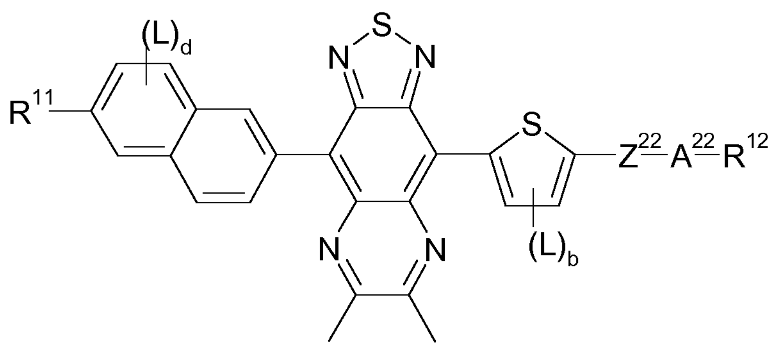

I-2-4-12

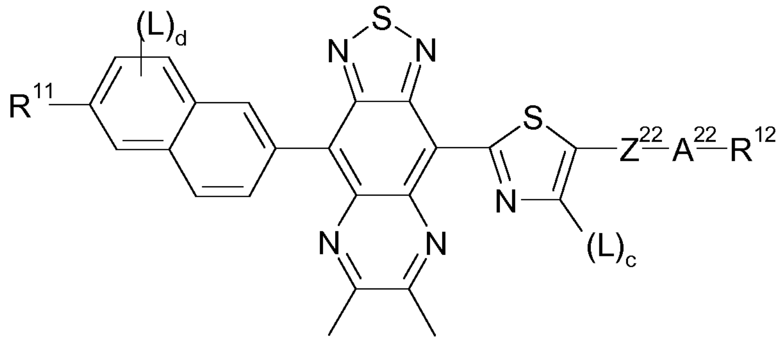

I-2-4-13

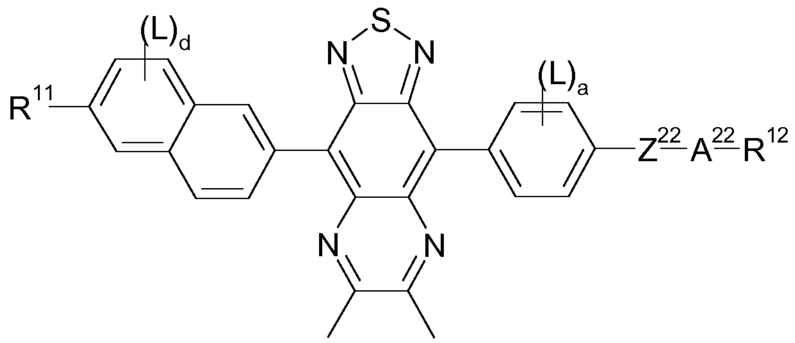

I-2-4-14

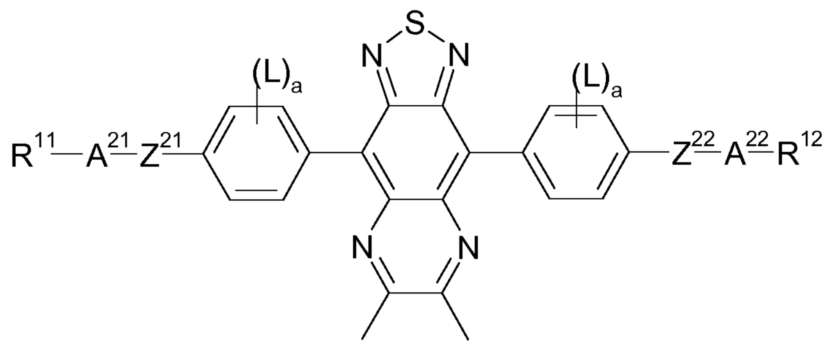

I-3-3-1

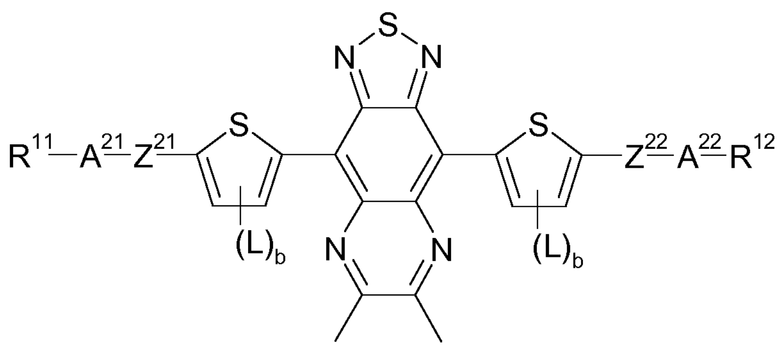

I-3-3-2

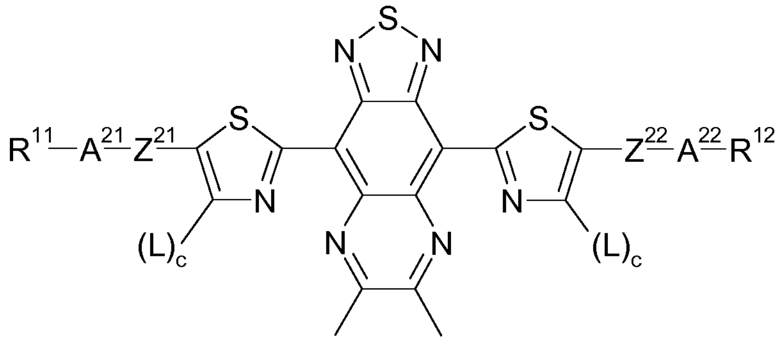

I-3-3-3

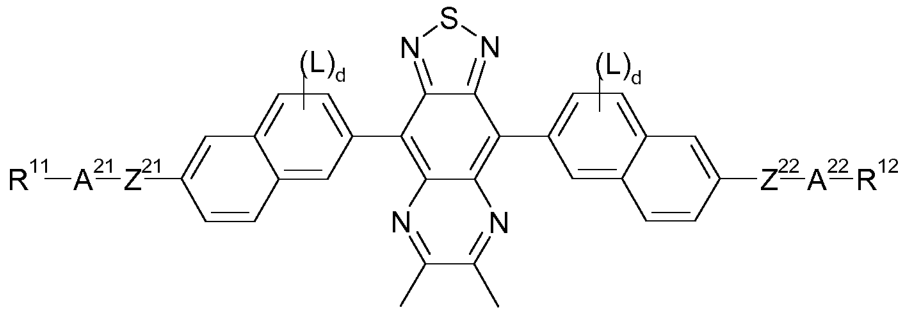

I-3-3-4

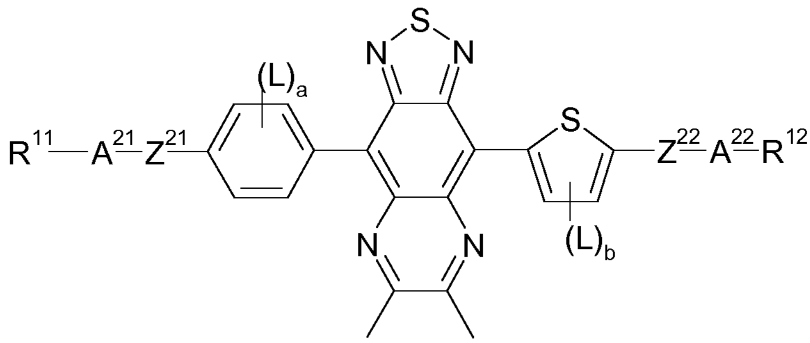

I-3-3-5

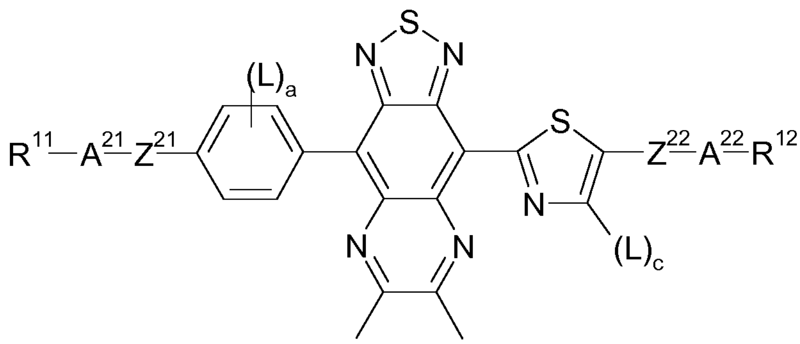

I-3-3-6

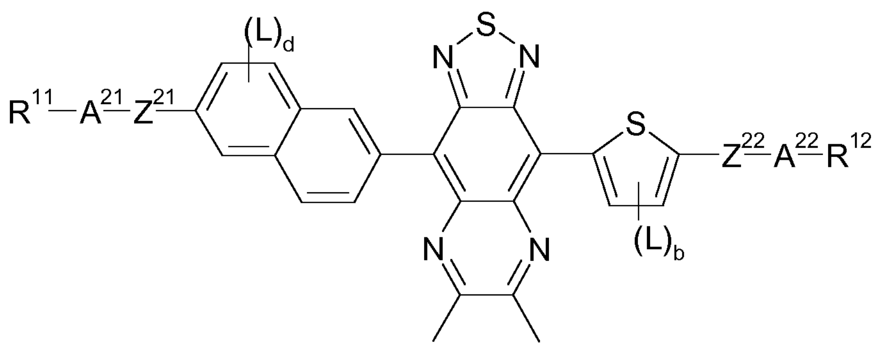

I-3-3-7

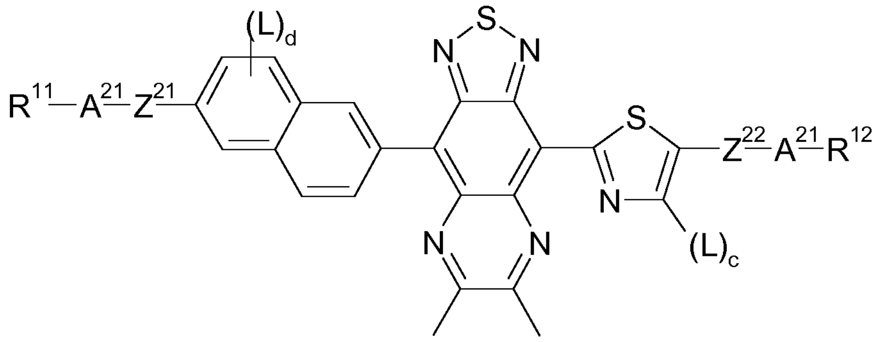

I-3-3-8

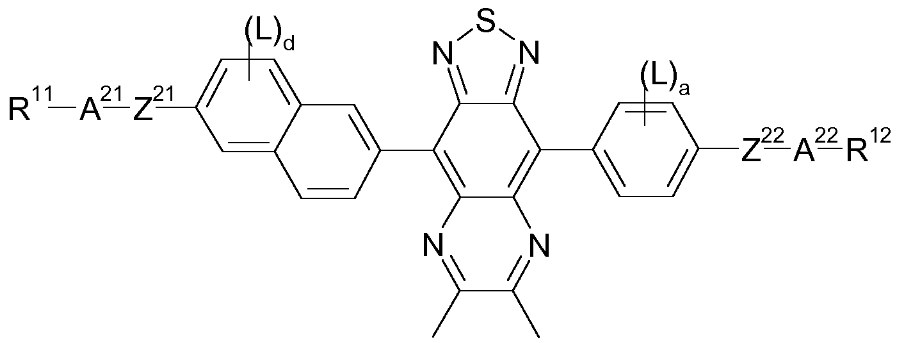

I-3-3-9

dans lesquelles :

$R^{11}$, $R^{12}$ représentent, de manière indépendante l'un de l'autre, F, un groupe alkyle ou alcoxy en chaîne droite qui comporte de 1 à 15 atome(s) de C ou un groupe alkyle ou alcoxy ramifié qui comporte de 3 à 20 atomes de C, où, en outre, un ou plusieurs atome(s) de H peut/peuvent être remplacé(s) par F ;
$A^{11}$, $A^{12}$ $A^{21}$, $A^{22}$ représentent, dans chaque cas de manière indépendante les uns des autres, 1,4-phénylène, 2,6-naphtylène, thiophène-2,5-diyle ou thiazole-2,5-diyle ;
$Z^{21}$, $Z^{22}$ représentent, de manière indépendante l'un de l'autre, $-CH_2CH_2-$, $-CF_2CF_2-$, -CH=CH-, -CF=CF-, -C≡C-, $-OCH_2-$, $-CH_2O-$, $-OCF_2-$, $-CF_2O-$ ou une liaison simple ;
a représente, de manière indépendante des autres, 0, 1, 2, 3 ou 4 ;
b représente, de manière indépendante des autres, 0, 1 ou 2;
c représente, de manière indépendante des autres, 0 ou 1 ; et
d représente, de manière indépendante des autres, 1, 2, 3, 4, 5 ou 6 ;

et L présente la signification qui a été indiquée selon la revendication 1.

**8.** Milieu LC selon une ou plusieurs des revendications 1 à 7, dans lequel le milieu comprend un ou plusieurs composé(s) de la formule I, telle que définie selon la revendication 1, dans laquelle $Z^{21}$ et $Z^{22}$ représentent une liaison simple.

**9.** Utilisation du milieu LC selon au moins l'une des revendications 1 à 8 dans des affichages ou dispositifs électrooptiques pour réguler le passage de l'énergie depuis un espace extérieur à l'intérieur d'un espace intérieur.

**10.** Procédé pour la préparation du milieu LC selon la revendication 1, **caractérisé en ce que** deux composés mésogènes ou plus sont mélangés l'un avec l'autre ou les uns avec les autres et, au niveau d'une étape de procédé ultérieure, un ou plusieurs colorant(s) de la formule I est/sont ajouté(s).

**11.** Dispositif pour réguler le passage de l'énergie depuis un espace extérieur à l'intérieur d'un espace intérieur, dans lequel le dispositif contient une couche de commutation qui comprend un milieu LC selon la revendication 1.

**12.** Fenêtre contenant un dispositif selon la revendication 11.

Fig.1

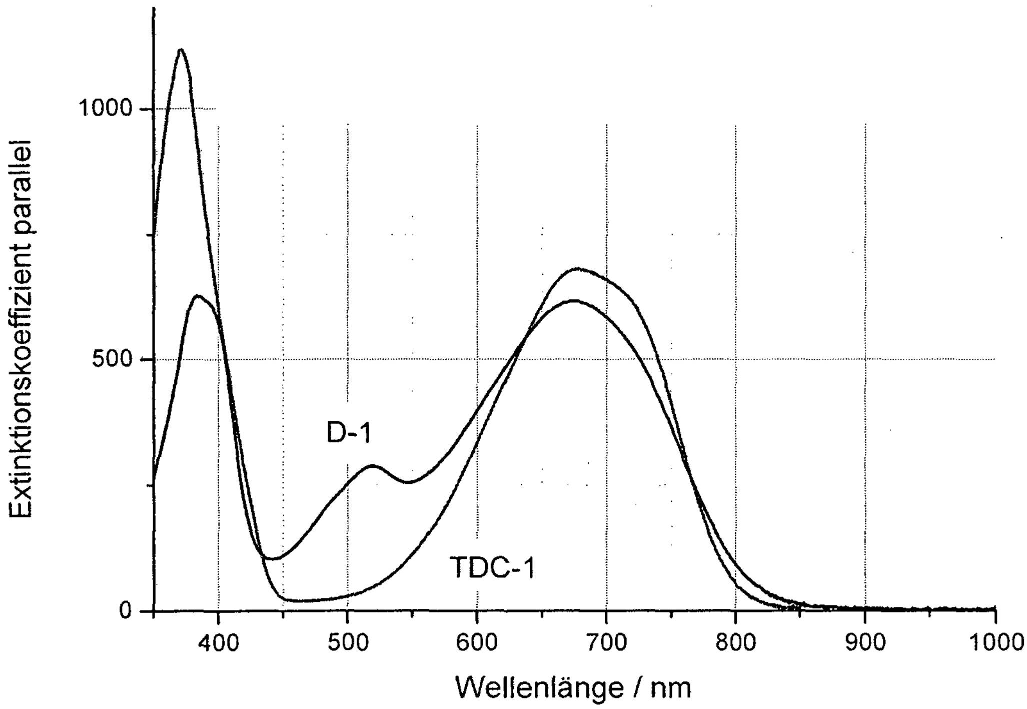
1000
500
0
Extinktionskoeffizient parallel
400
500
600
700
800
900
1000
Wellenlänge / nm
D-1
TDC-1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009141295 A
- WO 2014187529 A
- WO 2010118422 A
- US 20100259698 A
- US 6033598 A
- US 5762824 A
- WO 2013004677 A
- WO 2014090373 A
- EP 34832 A
- EP 44893 A
- EP 48583 A
- EP 54217 A
- EP 56492 A
- EP 59036 A
- GB 2065158 A
- GB 2065695 A
- GB 2081736 A
- GB 2082196 A
- GB 2094822 A
- GB 2094825 A
- JP OS55123673 A
- DE 3017877
- DE 3040102
- DE 3115147
- DE 3115762
- DE 3150803
- DE 3201120
- DE 3126108
- DE 3202761
- EP 43904 A
- DE 3123519
- WO 822054 A
- GB 2079770 A
- JP OS5657850 A
- JP OS56104984 B
- US 4308161 A
- US 4308162 A
- US 4340973 A
- EP 60895 A
- EP 68427 A
- WO 821191 A
- EP 2166040 A
- US 20110042651 A
- EP 47027 A
- DE 3110960
- EP 698649 A
- US 7038745 B
- US 6099758 A
- US 20110043732 A
- US 7023602 B


### In der Beschreibung aufgeführte Nicht-Patentliteratur


- **G. H. HEILMEIER et al.** *Appl. Phys. Lett.,* 1968, vol. 13, 91f
- *J. Mater. Chem. C,* 2014, vol. 2, 5133-5141
- **HALBLEITER.** *Chem. Mater.,* 2012, vol. 24, 2178-2185
- Verwendung als OLED-Materialien. *Bull. Korean Chem. Soc.,* 2013, vol. 34 (2), 661-664
- Houben Weyl, Methoden der Organischen Chemie. Thieme Verlag
- **T. L. TAM ; H. LI, K. J. TAN ; C. KLOC ; Y. M. LAM ; S. G. MHAISALKAR ; A. C. GRIMSDALE.** *Org. Lett.,* 2010, vol. 12, 3340-3343
- **C. KITAMURA ; S. TANAKA ; Y. YAMASHITA.** *Chem. Mater.,* 1996, vol. 8, 570-578
- **M. CUSHMAN ; W. C. WONG ; A. BACHER.** *J. Chem. Soc. Perkin,* 1986, vol. 1, 1043-1050
- **O. W. WEBSTER ; D. R. HARTTER ; R. W. BEGLAND ; W. A. SHEPPARD ; A. CAIRNCROSS.** *J. Org. Chem.,* 1972, vol. 37, 4133-4136
- **H. W. ROTHKOPF ; D. WÖHRLE ; R. MÜLLER ; G. KOßMEHL.** *Chem. Ber.,* 1975, vol. 108, 875-886
- **K. SUSUMU et al.** *J. Phys. Chem. A,* 2011, vol. 115, 5525-5539
- **L. WANG et al.** *Synth. Comm.,* 2004, vol. 34 (8), 1349-1357
- **ZHU et al.** *ChemMedChem,* 2012, vol. 7, 823-835
- **T. FUJIMOTO ; F. BECKER ; T. RITTER.** *Org. Process Res. Dev.,* 2014, vol. 18, 1041-1044
- **MANFRED RICHTER.** Einführung in die Farbmetrik. Verlag Walter de Gruyter & Co, 1981
- **B. BAHADUR.** Liquid Crystals - Applications and Uses. World Scientific Publishing, 1992, vol. 3
- **T. UCHIDA ; C. SHISHIDO ; H. SEKI ; M. WADA.** *Mol. Cryst. Liq. Cryst.,* 1977, vol. 39, 39-52

- **H. SEKI ; C. SHISHIDO ; S. YASUI ; T. UCHIDA.** *Jpn. J. Appl. Phys.,* 1982, vol. 21, 191-192
- **JOSEPH R. LAKOWICZ.** Principles of Fluorescence Spectroscopy. Verlag Springer Science+Business Media LLC, 279
- Merck Liquid Crystals, Physical Properties of Liquid Crystals. Merck KGaA, November 1997
- **D. S. KLIGER et al.** Polarized Light in Optics and Spectroscopy. Academic Press, 1990
- **MANFRED RICHTER.** Einführung in die Farbmetrik. 1991